# EUROPEAN PATENT APPLICATION

(11) **EP 4 475 545 A1**
(43) Date of publication of application: **11.12.2024**
(21) Application number: 23749919.9
(22) Date of filing: 19.01.2023
(51) Int. Cl.: H04N 23/52, G03B 17/55, H04N 23/54, H04N 23/57, B32B 9/00, B32B 9/04, B32B 15/18, B32B 15/20, B32B 27/38

(54) **CAMERA APPARATUS AND OPTICAL DEVICE**

(30) Priority: 04.02.2022 KR 20220014831; 05.07.2022 KR 20220082624
(71) Applicant: LG INNOTEK CO., LTD., Seoul 07796 (KR)
(72) Inventor: PARK, Sang Ok, Seoul 07796 (KR); LEE, Deok Yong, Seoul 07796 (KR)
(74) Representative: M. Zardi & Co S.A.
(86) International application number: PCT/KR2023/000960
(87) International publication number: WO 2023/149686

(57) **Abstract**

An Embodiment comprise: a moving unit comprising a first board and an image sensor disposed on the first board, a stationary unit including a second board which is spaced apart from the first board, a support board configured to support the moving unit such that the moving unit is movable in a direction perpendicular to an optical-axis direction relative to the stationary unit and to conductively connect the first board to the second board, a position sensor disposed on the first board so as to detect displacement of the moving unit, and a capacitor conductively connected to first and second output terminals of the position sensor.

## Description

### [Technical Field]

Embodiments relate to a camera device and an optical instrument including the same.

### [Background Art]

It is difficult to apply technology of a voice coil motor (VCM) used in existing general camera devices to a subminiature, low-power camera device, and therefore research related thereto has been actively conducted.

Demand for and production of electronic products, such as smartphones and mobile phones equipped with cameras have increased. Cameras for mobile phones are trending toward increased resolution and miniaturization. As a result, an actuator has also been miniaturized, increased in diameter, and been made multifunctional. In order to realize a high-resolution camera for mobile phones, improvement in performance of the camera for mobile phones and additional functions thereof, such as autofocusing, hand tremor correction, and zooming, are required.

### [Disclosure]

### [Technical Problem]

Embodiments provide a camera module and an optical instrument which are capable of removing noise included in an OIS position sensor attributable to a magnetic field generated by an OIS coil and thus of assuring reliability of OIS control.

Furthermore, embodiments provide a camera device capable of improving heat radiation efficiency and heat radiation performance and an optical instrument.

### [Technical Solution]

A camera device according to an embodiment comprises a moving unit comprising a first board and an image sensor disposed on the first board, a stationary unit comprising a second board which is spaced apart from the first board, a support board configured to support the moving unit such that the moving unit is movable in a direction perpendicular to an optical-axis direction relative to the stationary unit and to conductively connect the first board to the second board, a position sensor disposed on the first board so as to detect displacement of the moving unit, and a capacitor conductively connected to first and second output terminals of the position sensor.

The capacitor may be disposed on the first board. Alternatively, the capacitor may be disposed on the second board. Alternatively, the capacitor may be disposed on the support board.

The capacitor may be connected to the first and second output terminals of the position sensor in parallel.

The capacitor may comprise a first capacitor connected to the first output terminal of the position sensor, and a second capacitor connected to the second output terminal of the position sensor.

The first board may comprise a first wire connected to the first output terminal of the position sensor and a second wire connected to the second output terminal of the position sensor, and the capacitor may be connected to the first wire and the second wire of the first board in parallel.

The first board may comprise a first wire connected to the first output terminal of the position sensor and a second wire connected to the second output terminal of the position sensor, and the capacitor may comprise a first capacitor connected to the first wire of the first board and a second capacitor connected to the second wire of the first board.

The second board may comprise a first wire connected to the first output terminal of the position sensor and a second wire connected to the second output terminal of the position sensor, and the capacitor is connected to the first wire and the second wire of the second board in parallel.

The second board may comprise a first wire connected to the first output terminal of the position sensor and a second wire connected to the second output terminal of the position sensor, and the capacitor may comprise a first capacitor connected to the first wire of the second board and a second capacitor connected to the second wire of the second board.

The support board may comprise a first wire connected to the first output terminal of the position sensor and a second wire connected to the second output terminal of the position sensor, and the capacitor may be connected to the first wire and the second wire of the support board in parallel.

The support board may comprise a first wire connected to the first output terminal of the position sensor and a second wire connected to the second output terminal of the position sensor, and the capacitor may comprise a first capacitor connected to the first wire of the support board and a second capacitor connected to the second wire of the support board.

The stationary unit may comprise a magnet, and the moving unit may comprise a coil which is opposed to the magnet in the optical-axis direction and is disposed on the first board. The coil may have a cavity, and the position sensor may be disposed in the cavity in the coil. The capacitor may be disposed in the cavity in the coil. Alternatively, the capacitor may be disposed outside the cavity in the coil.

The camera device may comprise a controller which is disposed on the first board and is conductively connected to the position sensor.

Alternatively, the camera device may comprise a controller which is disposed on the second board and is conductively connected to the position sensor.

The camera device may comprise a cover member accommodating the moving unit, and the controller may not overlap the cover member in the optical-axis direction. The second board may comprise an extension region which does not overlap the cover member in the optical-axis direction, and the controller and the capacitor may be disposed in the extension region.

A camera device according to an embodiment may comprise a stationary unit, a moving unit comprising a first heat radiating body disposed on the stationary unit and an image sensor disposed on the first heat radiating body, a support unit configured to support the moving unit such that the moving unit is movable in a direction perpendicular to the optical-axis direction, and a second heat radiating body connecting the first heat radiating body to the support unit.

The support unit may be connected between the moving unit and the stationary unit.

The moving unit may comprise a first board unit on which the image sensor is disposed, the stationary unit may comprise a second board unit which is spaced apart from the first board, and the support unit may connect the first board unit to the second board unit.

The second heat radiating body may comprise a body coupled to the lower surface of the first heat radiating body and a connecting portion connecting the body to the support unit.

The second heat radiating body may comprise a first region coupled to the first heat radiating body and a second region coupled to the support unit.

The first heat radiating body may comprise a graphite sheet.

The support unit may comprise a conductive layer, a first insulating layer disposed on the lower surface of the conductive layer, and a second insulating layer disposed on the upper surface of the conductive layer.

The support unit may be constructed such that a portion of the insulating layer is not provided so as to expose a portion of the area of the conductive layer, and the second heat radiating body may be coupled to at least a portion of a portion of the area of the conductive layer and the first heat radiating body.

The second heat radiating body may be in contact with a portion of the conductive layer of the support unit.

The support unit may comprise a third heat radiating body. The second heat radiating body may be in contact with the third heat radiating body.

The support unit may comprise a third heat radiating body disposed below the first insulating layer, and the second heat radiating body may be in contact with a portion of the conductive layer of the support unit.

The second heat radiating body may be in contact with the first heat radiating body, the first board unit, and the support board.

The first board unit may comprise a first circuit board connected to the support unit, a second circuit board conductively connected to the image sensor, and solder conductively connecting the first circuit board to the second circuit board.

The camera module may comprise an insulating layer disposed between the solder and the second heat radiating body. The third heat radiating body may comprise a graphite sheet.

The camera module may comprise a cover member accommodating the moving unit and the support unit, and may comprise a fourth heat radiating body connected to the cover member and the support unit.

The cover member may comprise an upper plate and a side plate connected to the upper plate, the side plate may have an opening through which a portion of the support unit is exposed, and the fourth heat radiating body may be in contact with the side plate of the cover member and the portion of the support unit that is exposed through the opening.

The fourth heat radiating body may comprise a graphite sheet.

A camera module according to a further embodiment comprise a first heat radiating body, a first board unit disposed on the first heat radiating body, an image sensor disposed on the first heat radiating body, a second board unit disposed so as to be spaced apart from the first board unit, a support unit configured to support the image sensor such that image sensor is movable in a direction perpendicular to an optical-axis direction and to conductively connect the first board unit to the second board unit, and a second heat radiating body connecting the first heat radiating body to the support unit.

### [Advantageous Effects]

As is apparent from the above description, according to the embodiments, because the capacitor, which is connected to two output terminals of the OIS position sensor in parallel, is disposed on the circuit board of the OIS moving unit, it is possible to removing noise included in an output signal of the OIS position sensor attributable to an influence of a magnetic field generated by the OIS coil and thus to assure reliability of OIS control.

According to the embodiments, when the controller is disposed in the extension region of the second board unit which is the OIS stationary unit for the purpose of heat radiation, the length of wires connecting the controller to the OIS position sensor may increase.

Due to the increased length of the wires, noise may be included in the output signal of the OIS position sensor which is transmitted to the controller.

According to embodiments, the capacitors are disposed on the second board unit adjacent to the controller and the extension region, and are connected to the two output terminals of the OIS position sensor in parallel. Consequently, the embodiments are able to remove noise attributable to the wires having the increased length and thus to assure reliability of OIS control.

According to the embodiments, heat may be transmitted to the support board from the first board unit through the heat radiating member, and thus it is possible to improve heat radiation efficiency and heat radiation performance.

Furthermore, because the support board includes the heat radiating member, it is possible to improve heat radiation efficiency and heat radiation performance of the support board.

Furthermore, because heat is transmitted to cover member from the support board through the heat radiating member, the embodiments are able to improve heat radiation efficiency and heat radiation performance.

### [Description of Drawings]

FIG. 1 is a perspective view of a camera device according to an embodiment;
FIG. 2 is a perspective view of the camera device from which a cover member is removed;
FIG. 3 is an exploded perspective view of the camera device shown in FIG. 1;
FIG. 4A is a cross-sectional view of the camera device taken along line A-B in FIG. 1;
FIG. 4B is a cross-sectional view of the camera device taken along line C-D in FIG. 1;
FIG. 4C is a cross-sectional view of the camera device taken along line E-F in FIG. 1;
FIG. 5 is an exploded perspective view of the AF operation unit shown in FIG. 3;
FIG. 6 is a perspective view of a bobbin, a sensing magnet, a balancing magnet, a first coil, a circuit board, a first position sensor, and a capacitor;
FIG. 7A is a perspective view, the bobbin, a housing, the circuit board, an upper elastic member, the sensing magnet, and the balancing magnet;
FIG. 7B is a perspective view of the embodiment shown in FIG. 7A to which a wire is added;
FIG. 8 is a bottom perspective view of the housing, the bobbin, a lower elastic member, a magnet, and the circuit board;
FIG. 9 is a perspective view of an image sensor unit;
FIG. 10A is a first exploded perspective view of the image sensor unit shown in FIG. 9;
FIG. 10B is a second exploded perspective view of the image sensor unit shown in FIG. 9;
FIG. 10C is an enlarged view of a groove in a projection of the holder shown in FIG. 10A;
FIG. 10D is an enlarged view of the reinforcing member shown in FIG. 10A;
FIG. 10E is an enlarged view of a groove in the base shown in FIG. 10A;
FIG. 10F is an enlarged view of a groove in the holder in which the reinforcing member shown in FIG. 10B is disposed;
FIG. 11 is a bottom perspective view of the holder, the reinforcing member, the first board unit, the support board, the base, and the second board unit shown in FIG. 10A;
FIG. 12A is a plan view of the holder, the first board unit, the image sensor, the second coil, the OIS position sensor, and the capacitor;
FIG. 12B is a plan view of the first board unit, the image sensor, the second coil, the OIS position sensor, and the capacitor;
FIG. 13 is a rear perspective view of the holder and the first board unit;
FIG. 14 is a perspective view of the base, the reinforcing member and the support member;
FIG. 15 is a bottom view of the first board unit, the support board, and the first heat radiating member;
FIG. 16 is a bottom perspective view of the first board unit, the support board, and the first heat radiating member;
FIG. 17A is a first perspective view of the support board coupled to the holder and the base;
FIG. 17B is a second perspective view of the holder and the base;
FIG. 18 illustrates disposition of the first to third capacitors according to another embodiment;
FIG. 19A illustrates movement of the OIS moving unit in the x-axis direction;
FIG. 19B illustrates movement of the OIS moving unit in the y-axis direction;
FIG. 19C illustrates clockwise rotation of the OIS moving unit in the case of driving through four channels;
FIG. 19D illustrates counterclockwise rotation of the OIS moving unit in the case of driving through four channels;
FIG. 20A illustrates an embodiment of the magnet shown in FIG. 5;
FIG. 20B illustrates another embodiment of the magnet shown in FIG. 5;
FIG. 21A illustrates disposition of the first to third regions of the second board unit, the extension region, the AF moving unit, the OIS moving unit, and the controller according to an embodiment;
FIG. 21B is a schematic cross-sectional view of the lens module, the first board unit, the image sensor, the first heat radiating member, the second board unit, and the second heat radiating member shown in FIG. 10A;
FIG. 22A is a block diagram of the controller, the first to third sensors, and the capacitor;
FIG. 22B illustrates a capacitor according to a modification of the embodiment shown in FIG. 22A;
FIG. 23 illustrates disposition of the first circuit board, the terminals of the support board, and the wires;
FIG. 24A is an enlarged view of a first dotted portion in FIG. 23;
FIG. 24B is an enlarged view of a second dotted portion in FIG. 23;
FIG. 24C is an enlarged view of a third dotted portion in FIG. 23;
FIG. 25 illustrates the terminals of the second board unit conductively connected to the support board;
FIG. 26 illustrates an embodiment of the wires of the second board unit which conductively connect the controller to the plurality of terminals of the second board unit;
FIG. 27 is a schematic conceptual view of the first and second wires of the second board unit;
FIG. 28A illustrates frequency response characteristics of the second position sensor and the second coil in the case in which the capacitor according to the embodiment is not provided;
FIG. 28B illustrates frequency response characteristics of the second position sensor and the second coil in the case in which the capacitor is provided;
FIG. 29 illustrates disposition of the first to third capacitors according to another embodiment;
FIG. 30A illustrates disposition of the first capacitor according to a further embodiment;
FIG. 30B illustrates disposition of the second and third capacitors according to a further embodiment;
FIG. 31 illustrates a modification of disposition of the controller shown in FIG. 21A;
FIG. 32 illustrates another modification of disposition of the controller shown in FIG. 21A;
FIG. 33A is an exploded perspective view of the camera device according to another embodiment;
FIG. 33B is an assembled perspective view of the camera device shown in FIG. 33A;
FIG. 34A is a cross-sectional view of the camera device according to another embodiment, taken along line A-B in FIG. 1;
FIG. 34B is a cross-sectional view of the camera device according to the embodiment shown in FIG. 34A, taken along line C-D in FIG. 1;
FIG. 34C is a cross-sectional view of the camera device according to the embodiment shown in FIG. 34A, taken along line E-F in FIG. 1;
FIG. 35A is a first exploded perspective view of the image sensor unit according to the embodiment shown in FIG. 34A;
FIG. 35B is a second exploded perspective view of the image sensor unit according to the embodiment shown in FIG. 34A;
FIG. 36 is a bottom perspective view of the holder, the terminal unit, the first terminal unit, the support board, the base, and the second board unit shown in FIG. 35A;
FIG. 37 is a bottom view of the first board unit, the support board, the first heat radiating member, and the radiating member shown in FIG. 35A;
FIG. 38 is a perspective view of the first board unit, the support board, and the radiating member shown in FIG. 35A;
FIG. 39 is a schematic cross-sectional view of the lens module, the first board unit, the image sensor, the second board unit, and the radiating member shown in FIG. 35A;
FIG. 40 is a lower plan view of the first board unit, the support board, and the heat radiating member shown in FIG. 35A;
FIG. 41A is a view in which the radiating member is additionally provided to FIG. 40;
FIG. 41B is a view illustrating another embodiment of the portions of the radiating member, which are in contact with the conductive layer of the support board;
FIG. 41C illustrates a modification of the heat radiating member shown in FIG. 41A;
FIG. 42A is a fragmentary enlarged view of FIG. 34A;
FIG. 42B is a cross-sectional view of an embodiment of the first board unit, the heat radiating member, the support board, and the radiating member shown in FIG. 42A.
FIG. 42C illustrates disposition of the heat radiating member and the heat radiating member of the support board according to another embodiment;
FIG. 43A is a perspective view of the camera device from which the cover member is separated;
FIG. 43B illustrates the heat radiating member connecting the cover member to the support board shown in FIG. 3A.
FIG. 44A illustrates a modification of FIG. 43A;
FIG. 44B illustrates a modification of FIG. 43B;
FIG. 45A is a perspective view illustrating an optical instrument according to an embodiment;
FIG. 45B is a perspective view of an optical instrument according to another embodiment;
FIG. 45C is a perspective view of an optical instrument according to a further embodiment;
FIG. 46 is a view illustrating the configuration of the optical instrument illustrated in FIGs. 45A, 45B or 45C.

### [Best Mode]

Hereinafter, embodiments of the present invention will be described in detail with reference to the accompanying drawings.

The technical idea of the present invention may be embodied in many different forms, and should not be construed as being limited to the following embodiments set forth herein. One or more of components of the embodiments may be selectively combined with each other or replaced without departing from the technical spirit and scope of the present invention.

Unless otherwise particularly defined, terms (including technical and scientific terms) used in the embodiments of the present invention have the same meanings as those commonly understood by one of ordinary skill in the art to which this invention belongs. It will be further understood that commonly used terms, such as those defined in dictionaries, should be interpreted as having meanings consistent with their meanings in the context of the relevant art.

The terminology used in the embodiments of the present invention is for the purpose of describing particular embodiments only, and is not intended to limit the present invention. As used in the disclosure and the appended claims, the singular forms are intended to include the plural forms as well, unless the context clearly indicates otherwise. The phrase "at least one (or one or more) of A, B and C" may be interpreted as including one or more of all combinations of A, B and C.

Furthermore, when describing the components of the present invention, terms such as "first", "second", "A", "B", "(a)" or "(b)" may be used. Since these terms are provided merely for the purpose of distinguishing the components from each other, they do not limit the nature, sequence or order of the components.

It should be understood that, when an element is referred to as being "linked", "coupled" or "connected" to another element, the element may be directly "linked", "coupled" or "connected" to the another element, or may be "linked", "coupled" or "connected" to the another element via a further element interposed therebetween. Furthermore, it will be understood that, when an element is referred to as being formed "on" or "under" another element, it can be directly "on" or "under" the other element, or can be indirectly disposed with regard thereto, with one or more intervening elements therebetween. In addition, it will also be understood that "on" or "under" the element may mean an upward direction or a downward direction based on the element.

Hereinafter, an AF operation unit may be alternatively referred to as a "lens moving unit", a "VCM (Voice Coil Motor)", an "actuator" or a "lens moving device". Hereinafter, the term "coil" may be interchangeably used with "coil unit", or "coil portion", and the term "elastic member" may be interchangeably used with "elastic unit" or "spring".

In the follow description, the "terminal" may be alternatively referred to as a "pad", "electrode", "conductive layer" or "bonding portion".

In the following description, the terms "board portion", "printed circuit board", "circuit board", and "board" may be used interchangeably with one another.

In the following description, "parallel connection" may refer to conductive or circuit parallel connection.

For the convenience of description, although the camera module according to an embodiment is described using a rectangular coordinate system (x, y, z), the lens moving apparatus may be described using some other coordinate systems, and the embodiments are not limited thereto. In the respective drawings, the X-axis direction and the Y-axis direction mean directions perpendicular to an optical axis, i.e. the Z-axis, and the optical-axis direction may be a direction identical to or parallel to the optical axis OA. The Z-axis direction, which is the direction of the optical axis OA, may be referred to as a "first direction", the X-axis direction may be referred to as a "second direction", and the Y-axis direction may be referred to as a "third direction". Furthermore, for example, the x-axis direction may be represented as "one of a first horizontal direction and a second horizontal direction", and the y-axis direction may be represented as "the other of the first horizontal direction and the second horizontal direction".

For example, the optical axis may be the optical axis of a lens mounted on a lens barrel. The first direction may be a direction perpendicular to an imaging area of an image sensor. Furthermore, the optical-axis direction may be a direction parallel to the optical axis.

The camera device according to an embodiment of the present invention is capable of performing an "autofocus function". Here, the "autofocus function" serves to automatically focus an image of a subject on an image sensor surface.

Hereinafter, the camera device may alternatively be referred to as a "camera module", a "camera assembly", a "camera unit", a "camera", an "imaging device", or a "lens moving apparatus".

In addition, the camera device according to the embodiment may perform a function of "hand tremor correction". Here, the function of "hand tremor correction" may serve to prevent the contour line of a captured image from being blurred due to vibration caused by shaking of the user's hand when capturing a still image.

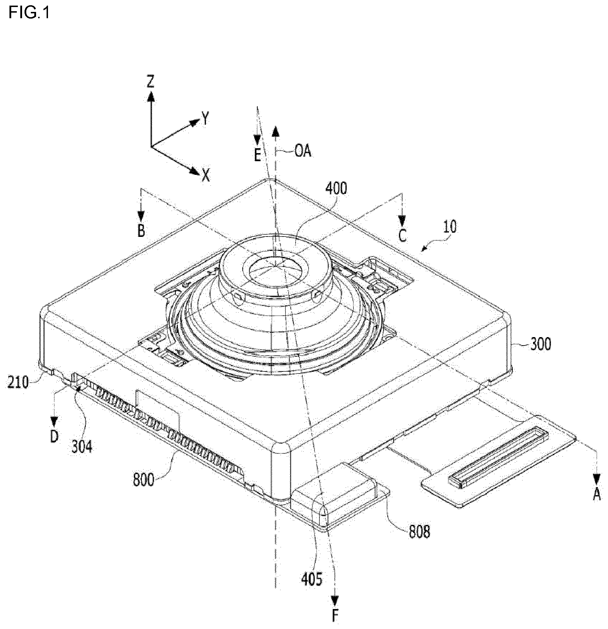

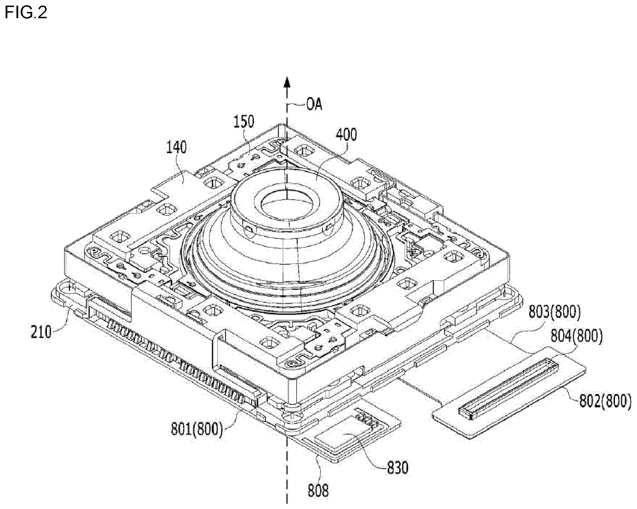

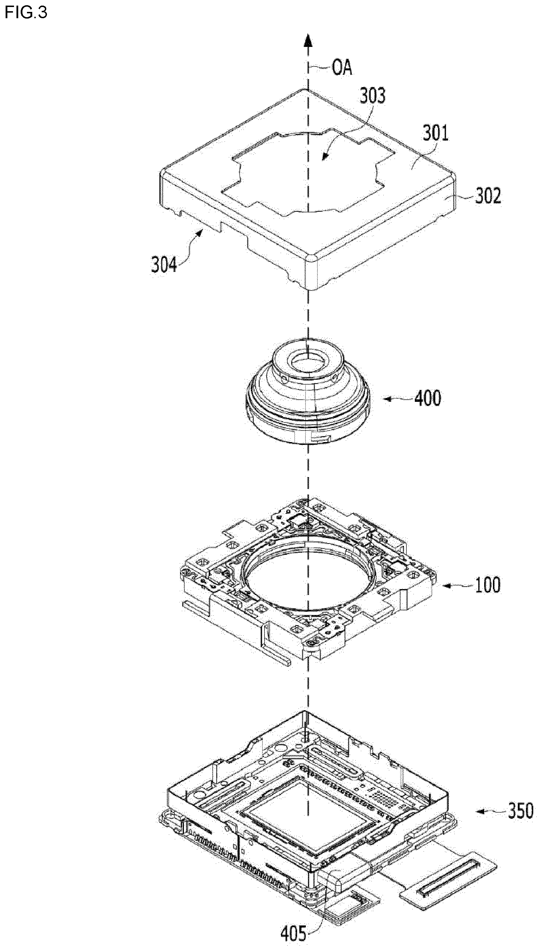

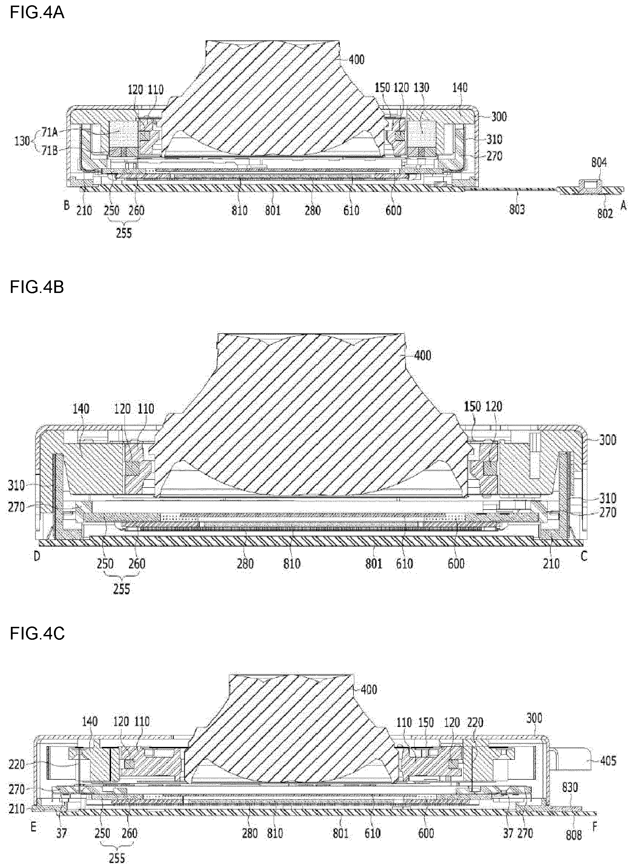

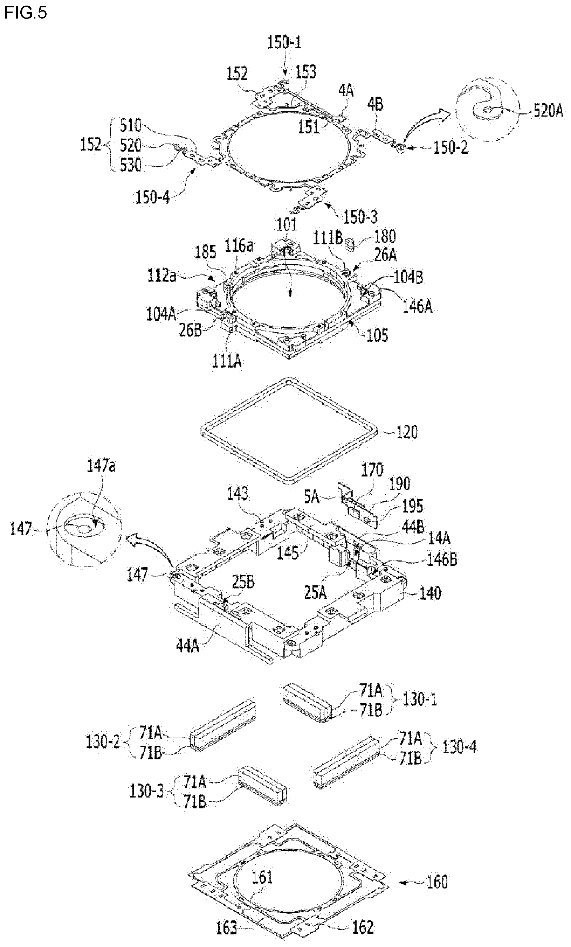

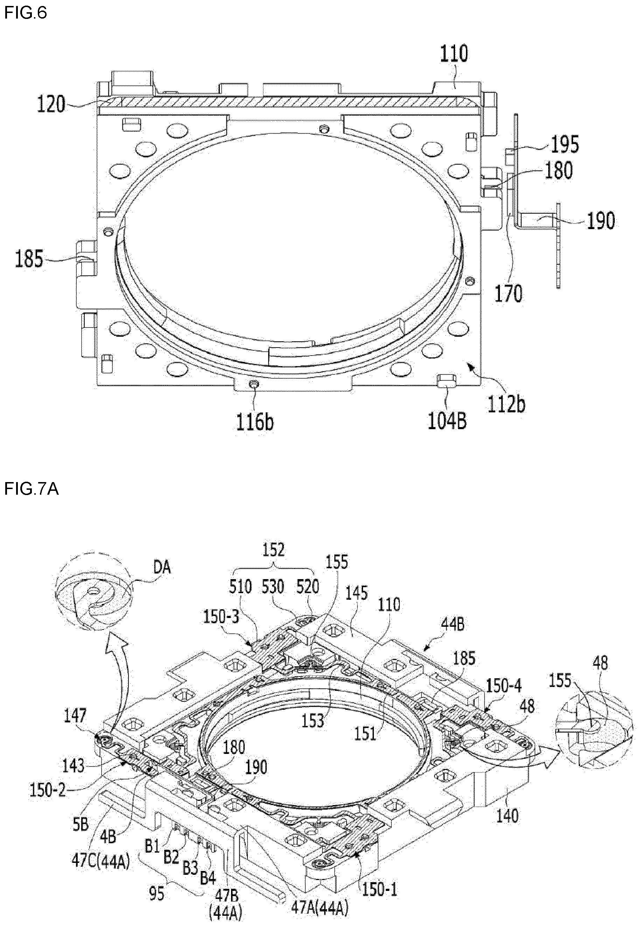

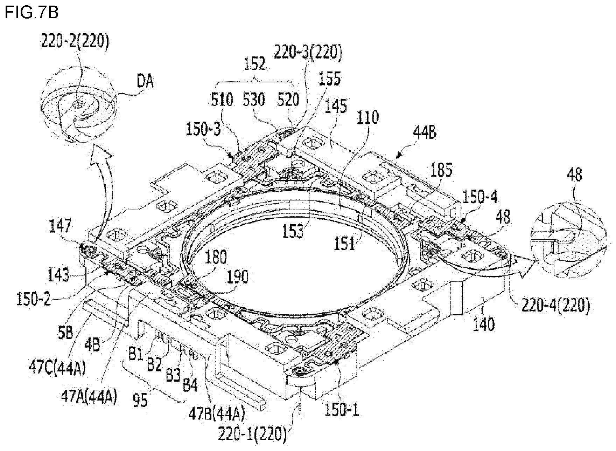

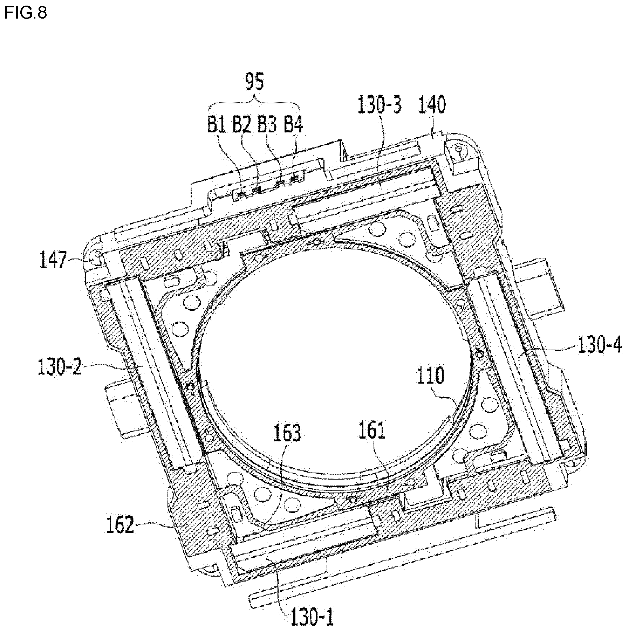

FIG. 1 is a perspective view of a camera device 10 according to an embodiment. FIG. 2 is a perspective view of the camera device 10 from which a cover member 300 is removed. FIG. 3 is an exploded perspective view of the camera device 10 shown in FIG. 1. FIG. 4A is a cross-sectional view of the camera device 10 taken along line A-B in FIG. 1. FIG. 4B is a cross-sectional view of the camera device 10 taken along line C-D in FIG. 1. FIG. 4C is a cross-sectional view of the camera device 10 taken along line E-F in FIG. 1. FIG. 5 is an exploded perspective view of the AF operation unit 100 shown in FIG. 3. FIG. 6 is a perspective view of the bobbin 110, the sensing magnet 180, the balancing magnet 185, the first coil 120, the circuit board 190, the first position sensor 170, and the capacitor 195. FIG. 7 is a perspective view of the bobbin 110, the housing 140, the circuit board 190, the upper elastic member 150, the sensing magnet 180, and the balancing magnet 185. FIG. 8 is a bottom perspective view of the housing 140, the bobbin 110, the lower elastic member 160, the magnet 130, and the circuit board 190.

Referring to FIGs. 1 to 8, the camera device 10 may include an image sensor unit 350. For example, the camera device 10 may further include an AF operation unit 100. The AF operation unit 100 may include an AF moving unit. The image sensor unit 350 may include an OIS moving unit. One of the AF moving unit and the OIS moving unit may be a first moving unit, and the other of the AF moving unit and the OIS moving unit may be a second moving unit.

The camera device 10 may further include at least one of the cover member 300 and a lens module 400. The cover member 300 and the base 210 to be described later may define the case.

The AF operation unit 100 may be coupled to the lens module 400, and may move the lens module 400 in the direction of the optical axis OA or in a direction parallel to the optical axis in order to perform an autofocusing function of the camera device 10.

The AF moving unit may include the bobbin 110 and components coupled to the bobbin. Furthermore, the AF moving unit may include the lens module 400.

The image sensor unit 350 may include an image sensor 810. For example, the image sensor unit 350 (or the OIS operation unit) may include an OIS moving unit including the image sensor 810. For example, the image sensor unit 350 may move the OIS moving unit (for example, the image sensor 810) in a direction perpendicular to the optical axis. Furthermore, the image sensor unit 350 may cause tilting or rotation (or rolling) relative to or about the optical axis. The hand tremor correction for the camera device 10 may be performed by the image sensor unit 350.

For example, the image sensor 810 may include an imaging area configured to detect light having passed through the lens module 400. Here, the imaging area may alternatively be referred to as an effective area, a light-receiving area, an active area, or a pixel area. For example, the imaging area of the image sensor 810 may be an area on which an image included in light that has passed through a filter 610 and is then incident on the imaging area, and may include at least one unit pixel. For example, the imaging area may include a plurality of unit pixels.

The AF operation unit 100 may be alternatively referred to as a "lens moving unit" or a "lens moving apparatus". Alternatively, the AF operation unit 100 may be alternatively referred to as a "first moving unit (or a second moving unit)", a "first actuator (or a second actuator)" or an "AF operation unit".

The image sensor unit 350 may be alternatively referred to as an "image-sensor moving unit" or an "image-sensor shift unit", a "sensor moving unit" or a "sensor shift unit". Alternatively, the image sensor unit 350 may be alternatively referred to as a "second moving unit (or a first moving unit) or a "second actuator (or a first actuator)".

Referring to FIGs. 5 and 6, the AF operation unit 100 may move the lens module 400 in the optical-axis direction. For example, the AF operation unit 100 may move the bobbin 110 in the optical-axis direction. For example, the AF operation unit 100 may include the bobbin 110, the first coil 120, the magnet 130, and the housing 140. The AF operation unit 100 may further include the upper elastic member 150 and the lower elastic member 160.

The AF operation unit 100 may further include a first position sensor 170, the circuit board 190, and the sensing magnet 180 for AF feedback operation. The AF operation unit 100 may further include at least one of the balancing magnet 185 and the capacitor 195.

The bobbin 110 may be disposed in the housing 140 so as to be movable in the optical-axis direction OA or the first direction (for example, the Z-axis direction) by the electromagnetic interaction between the first coil 120 and the magnet 130.

The bobbin 110 may have a bore to which a lens module 400 is coupled or mounted. For example, the bore in the bobbin 110 may be a through hole formed through the bobbin 110 in the optical-axis direction, and may have a circular shape, an elliptical shape or a polygonal shape, without being limited thereto.

The lens module 400 may include at least one lens and/or a lens barrel. For example, the lens module 400 may include at least one lens and a lens barrel receiving the at least one lens. However, the configuration of the lens module is not limited to the lens barrel, and the lens module may have any configuration, as long as the configuration is capable of supporting the at least one lens.

For example, the lens module 400 may be threadedly engaged with the bobbin 110. Alternatively, the lens module 400 may be coupled to the bobbin 110 using, for example, an adhesive (not shown). The light that has passed through the lens module 400 may be radiated to the image sensor 810 through a filter 610.

The bobbin 110 may include one or more projections 111A and 111B provided on the outer surface thereof. For example, although the one or more projections 111A and 111B may project in a direction that is parallel to a line perpendicular to the optical axis OA, the disclosure is not limited thereto. For example, the bobbin 110 may include two projections 111A and 111B, which are positioned opposite each other.

The projections 111A and 111B of the bobbin 110 may correspond to a groove 25a in the housing 140, and may be disposed in the groove 25a in the housing 140 so as to minimize or prevent rotation of the bobbin 110 about the optical axis beyond a predetermined range.

The bobbin 110 may include a projection 146A which projects in a direction perpendicular to the optical axis. For example, the projection 146A of the bobbin 110 may be disposed on a corner portion of the bobbin 110.

The housing 140 may include a groove 146b which corresponds, faces, or overlaps the projection 146A of the bobbin 110. At least a portion of the projection 146A of the bobbin 110 may be disposed in the groove 146B in the housing 140.

Furthermore, the projection 146A of the bobbin 110 may serve as a stopper configured to cause the bobbin 110 to move within a predetermined range in the optical-axis direction (for example, in a direction toward the lower elastic member 160 from the upper elastic member 150) in response to an external impact or the like.

The bobbin 110 may have formed in the upper surface thereof a first escape groove 112a for avoiding spatial interference with a first frame connector 153 of the upper elastic member 150. The bobbin 110 may have formed in the lower surface thereof a second escape groove 112b for avoiding spatial interference with a second frame connector 163 of the lower elastic member 160.

The bobbin 110 may include a first coupler 116a, configured to be coupled and fixed to the upper elastic member 150. For example, although the first coupler 116a of the bobbin 110 may have the form of a protrusion, the disclosure is not limited thereto. In another embodiment, the first coupler 116a of the bobbin 110 may have the form of a flat surface or a groove. Furthermore, the bobbin 110 may include a second coupler 116b configured to be coupled and fixed to the lower elastic member 160. Although the second coupler 116b may have, for example, the form of a protrusion, the disclosure is not limited thereto. In another embodiment, the second coupler 116b may have the form of a flat surface or a groove.

Referring to FIG. 5, the outer surface of the bobbin 110 may have formed therein a groove 105 in which the first coil 120 is seated, fitted or disposed. For example, the groove 105 in the bobbin 110 may have a shape corresponding to the shape of the first coil 120, that is, a closed curve shape (for example, a ring shape) .

The bobbin 110 may be provided therein with a first seating groove 26a in which the sensing magnet 180 is seated, fitted, fixed, or disposed. Furthermore, the bobbin 110 may be provided in the outer surface thereof with a second seating groove 26b in which the balancing magnet 185 is seated, fitted, fixed or disposed.

For example, the first and second seating grooves 26a and 26b in the bobbin 110 may be formed in outer surfaces of the bobbin 110, which are opposed to each other. For example, the first seating groove 26a may be formed in the first projection 111A of the bobbin 110, and the second seating groove 26b may be formed in the second projection 111B of the bobbin 110.

The bobbin 110 may include a guide protrusion 104A configured to guide a portion of the first frame connector 153 of the upper elastic member 150. For example, the guide protrusion 104A may project from the bottom surface of the escape portion 112a in the bobbin 110.

Referring to FIGs. 5 and 7, a damper may be disposed between the bobbin 110 and the upper elastic member 150. Furthermore, the damper 48 may be disposed between the upper elastic member 150 and the housing 140. For example, the damper 48 may be disposed between the bobbin 110 and the first frame connector 153 of the upper elastic member 150, and may be in contact therewith or be coupled or attached thereto.

For example, the upper elastic member 150 may include an extension (or a projection) which extends from the first frame connector 153. The extension 155 may be spaced apart from both the outer frame 152 and the inner frame 151. Furthermore, the extension 155 may be spaced apart from both one end of the first frame connector 153 connected to the inner frame 151 and the other end of the first frame connector 153 connected to the outer frame 152. The extension 155 may extend beyond the upper surface of the housing 150. For example, the extension 155 may extend beyond the upper surface of the bobbin 110.

For example, a portion (or the end) of the extension 155 may be disposed on the damper 48 disposed on the upper surface of the bobbin 110 so as to overlap the damper 48. For example, the bobbin 110 may include a reception portion 104B in which the damper 48 is received or disposed. For example, the reception portion 104B may be a groove. The reception portion 104B may have a structure that is depressed from the bottom surface of the escape portion 112a in the bobbin 110.

The damper 48 may be disposed between the reception portion 104B and the extension 155 of the upper elastic member 150, and may be in contact therewith or be coupled or attached thereto. The damper 48 may be in contact with or attached to the extension 155 and the reception portion 104B in the bobbin 110 so as to serve to buffer or absorb vibration of the bobbin 110. For example, the damper 48 may be made of a damping member (for example, silicone). A groove 146 in the housing 140 may serve to receive or store the damper 48 in order to prevent the damper 48 from flowing downwards.

The first coil 120 may be disposed on or coupled to the bobbin 110. For example, the first coil 120 may be disposed on or coupled to the outer surface of the bobbin 110. For example, the first coil 120 may surround the outer surface of the bobbin 110 about the optical axis OA in a winding direction, without being limited thereto.

Although the first coil 120 may be directly wound around the outer surface of the bobbin 110, the disclosure is not limited thereto. In another embodiment, the first coil 120 may be embodied as a coil ring, which is wound around the bobbin 110, or as a coil block having an angled shape.

A power or drive signal may be supplied to the coil 120. The power or drive signal supplied to the first coil 120 may be a DC signal, an AC signal or a signal containing both DC and AC components, and may be of a voltage type or a current type.

When a drive signal (for example, drive current) is supplied to the first coil 120, it is possible to create electromagnetic force resulting from the electromagnetic interaction with the first magnet, thereby moving the bobbin 110 in the direction of the optical axis OA by virtue of the created electromagnetic force.

At the initial position of the AF operation unit, the bobbin 110 may be moved upwards or downwards, which is referred to as bidirectional driving of the AF operation unit. Alternatively, at the initial position of the AF operation unit, the bobbin 110 may be moved upwards, which is referred to as unidirectional driving.

At the initial position of the AF operation unit, the first coil 120 may be disposed so as to correspond to the magnet 130 disposed on the housing 140 in a direction parallel to a line which is perpendicular to the optical axis OA and extends through the optical axis.

For example, the AF operation unit may include the bobbin 110 and the components (for example, the first coil 120, the sensing magnet 180 and the balancing magnet 185) coupled to the bobbin 110. The AF operation unit may further include the lens module 400.

The initial position of the AF operation unit may be the original position of the AF operation unit in the state in which no electric power is applied to the first coil 120 or the position at which the AF operation unit is located as the result of the upper and lower elastic members 150 and 160 being elastically deformed due only to the weight of the AF operation unit. In addition, the initial position of the bobbin 110 may be the position at which the AF operation unit is located when gravity acts in the direction from the bobbin 110 to the base 210 or when gravity acts in the direction from the base 210 to the bobbin 110.

The sensing magnet 180 may provide a magnetic field, which is detected by the first position sensor 170, and the balancing magnet 185 may serve to cancel out the influence of the magnetic field of the sensing magnet 180, and establishes weight equilibrium with respect to the sensing magnet 180.

The sensing magnet 180 may be alternatively referred to as a "sensor magnet" or a "second magnet". The sensing magnet 180 may be disposed on the bobbin 110, or may be coupled to the bobbin 110. The sensing magnet 180 may be disposed so as to face the first position sensor 170. The balancing magnet 185 may be disposed on the bobbin 110, or may be coupled to the bobbin 110. For example, the balancing magnet 185 may be disposed opposite the sensing magnet 180.

Although each of the sensing magnet and the balancing magnet 180 and 185 may be a monopolar magnetized magnet having one N pole and one S pole, the disclosure is not limited thereto. In another embodiment, each of the sensing magnet and the balancing magnet 180 and 185 may be a bipolar magnetized magnet, which has two N poles and two S poles, or a tetrapolar magnetized magnet.

The sensing magnet 180 may be moved together with the bobbin 110 in the optical-axis direction, and the first position sensor 170 may detect the intensity or magnetic force of the magnetic field of the sensing magnet 180, which is moved in the optical-axis direction, and may output an output signal corresponding to the result of the detection.

For example, in accordance with displacement of the bobbin 110 in the optical-axis direction, the intensity or magnetic force of the magnetic field detected by the first position sensor 170 may vary. Consequently, the first position sensor 170 may output an output signal proportional to the detected intensity of the magnetic field, and the displacement of the bobbin 110 in the optical-axis direction may be detected using the output signal from the first position sensor 170.

The housing 140 may be disposed in the cover member 300. For example, the housing 140 may be disposed on the image sensor unit 350.

The housing 140 may accommodate therein the bobbin 110, and may support the magnet 130, the first position sensor 170, and the circuit board 190.

Referring to FIGs. 5, 7 and 8, the housing 140 may be configured to have a hollow column overall. For example, the housing 140 may have a polygonal (for example, a rectangular or octagonal) or circular bore, and the bore in the housing 140 may be a through hole, which is formed through the housing 140 in the optical-axis direction.

The housing 140 may include side portions, which correspond to or face the side plate 302 of the cover member 300, and corners, which correspond to or face the corners of the cover member 300.

At the initial position of the OIS moving unit, a gap may be present between the outer surface of the housing 140 and the inner surface of the side plate 302 of the cover member 300. For example, the gap between the outer surface of the housing 140 and the inner surface of the side plate 302 of the cover member 300 may be 0.05 mm to 1 mm. Alternatively, the gap may be, for example, 0.1 mm to 0.5 mm.

In order to prevent a direct collision with the inner surface of the upper plate 301 of the cover member 300, the housing 140 may include a stopper 145 provided at the upper portion, the upper surface or the upper end thereof.

Referring to FIG. 5, the housing 140 may have a mounting groove (or a seating groove) 14A configured to receive the circuit board 190 therein. The mounting groove 14A may have a shape corresponding to the shape of the circuit board 190.

Referring to FIGs. 7A and 7B, the housing 140 may include projections 44A and 44B which surround at least one of the circuit board 190 and a support board 310. For example, the projections 44A and 44B may be disposed or formed on the outer surface of the housing 140. For example, the projections 44A and 44B may be disposed or formed on the outer surface of the side portion of the housing 140. The projections 44A and 44B may alternatively be referred to as "protection portions", "support portions", "extension portions", or "guide portions".

The projections 44A and 44B of the housing 140 may surround at least a portion of the circuit board 190 and at least a portion of the support board 310. For example, the housing 140 may include a first projection 44A disposed on the first side portion of the housing and a second projection 44B disposed on the second side portion of the housing 140. The first projection 44A and the second projection 44B may be positioned opposite each other relative to the optical axis OA or the bobbin 110. In another embodiment, the second projection 44B may be omitted.

For example, the circuit board 190 may be disposed in the first projection 44A. For example, the mounting groove 14A may be formed in the first projection 44A.

For example, each of the first projection 44A and the second projection 44B may include a first portion 47A connected to the upper surface of the housing 140 and a second portion 47B which is connected to the first portion 47A and is spaced apart from the side portion of the housing 140. For example, the first portion 47A of the first projection 44A may be connected to the upper surface of the first side portion of the housing 140, and the first portion 47A of the second projection 44B may be connected to the upper surface of the second side portion of the housing 140. For example, the first portion 47A may project in the optical-axis direction or toward the inner surface of the upper plate 301 of the cover member 300 from the upper surface of the second side portion of the housing 140.

For example, at least a portion of the circuit board 190 may be positioned between the first portion 47A and the second portion 47B of the first projection 44A. Furthermore, for example, at least a portion of the support board 310 may be positioned between the first portion 47A and the second portion 47B of the first projection 44A.

The housing 140 may have an opening through which terminals B1 to B4 of a terminal portion 95 are exposed. The opening may be formed in the side portion of the housing 140. For example, the first projection 44A of the housing 140 may have the opening through which the terminals B1 to B4 of the terminal portion 95 are exposed.

Each of the first projection 44A and the second projection 44B of the housing 140 may include a third portion 47C which extends from the second portion 47B. For example, the third portion 47C may extend or project in a direction (for example, a second horizontal direction) parallel to the outer surface of the first side portion (or the second side portion) of the housing 140 from the lower portion or lower end of the second portion 47B.

For example, the third portion 47C may include a third-first portion, which extends from one end of the second portion 47B, and a third-second portion, which extends from the other end of the second portion. The third-first portion and the third-second portion may extend or project in opposite directions.

An adhesive or a sealing member may be disposed between the projections 44A and 44B of the housing 140 and the cover member 300. For example, the adhesive (or the sealing member) may be disposed between the projections 44A and 44B of the housing 140 and the side plate 302 of the cover member 300, and may couple both portions to each other. The projections 44A and 44B may increase a surface area in which the projections 44A and 44B are coupled to the cover member 300, and may stably couple the housing 140 to the cover member 300 without interference with the support board 310.

The upper portion, the upper end or the upper surface of the housing 140 may be provided with at least one first coupler 143, which is to be coupled to a first outer frame 152 of the upper elastic member 150. The lower portion, the lower end or the lower surface of the housing 140 may be provided with a second coupler, which is to be coupled and fixed to a second outer frame 162 of the lower elastic member 160. For example, each of the first and second couplers of the housing 140 may have the shape of a flat surface, a protrusion, or a groove.

The corner of the housing 140 may have formed therein a hole 147 which is a path through which the support member 220 extends. The hole 147 may be a through hole which is formed through the housing 140 in the optical-axis direction.

For example, the hole 147 may have a portion, the diameter of which increases toward the lower surface from the upper surface of the housing 140. For example, when viewed from underneath, the hole may have the form of a funnel or a cone.

In another embodiment, the hole may have a structure that is depressed from the outer surface of the corner portion of the housing 140, and at least a portion of the hole may be exposed from the outer surface of the corner portion. The hole 147 in the housing 140 may include the same number of holes as the number of support members.

The magnet 130 may be disposed on, coupled to or fixed to the housing 140, which is a stationary component. For example, the magnet 130 may be disposed on, coupled to or fixed to the side portion of the housing 140. The magnet 130 may include an AF operation magnet 71A for AF operation. The magnet 130 may include an OIS operation magnet 71B for OIS operation. Hereinafter, the AF operation magnet 71A may be referred to as one of first and second magnets, and the OIS operation magnet 71B may be referred to as the other of the first and second magnets.

In another embodiment, the magnet 130 may be disposed, coupled or fixed to the corner portion of the housing.

For example, the magnet 130 may include a plurality of magnet units. For example, the magnet 130 may include first to fourth magnet units 130-1 to 130-4 which are disposed on the housing 140. In another embodiment, the magnet 130 may include two or more magnet units.

The magnet 130 may be disposed on at least one of the side portion or the corner of the housing 140. For example, at least a portion of the magnet 130 may be disposed on the side portion or the corner of the housing 140. Alternatively, for example, at least a portion of the magnet 130 may be disposed on the side portion of the housing 140, and the remaining portion of the magnet 130 may be disposed on the corner of the housing 140.

For example, each of the magnet units 130-1 to 130-4 may include a first portion which is disposed on a corresponding one of the four corners of the housing 130. Furthermore, each of the magnet units 130-1 to 130-4 may include a second portion which is disposed on a side portion of the housing 140 adjacent to the one corner of the housing 140.

For example, the first magnet unit 130-1 and the third magnet unit 130-3 may be positioned at opposite sides of the housing 140 in the first horizontal direction (for example, the y-axis direction). For example, the second magnet unit 130-2 and the fourth magnet unit 130-4 may be positioned at opposite sides of the housing 140 in the second horizontal direction (for example, the x-axis direction).

For example, the first magnet unit 130-1 and the third magnet unit 130-3 may be disposed parallel to each other in the second horizontal direction (for example, the x-axis direction), and the second magnet unit 130-2 and the fourth magnet unit 130-4 may be disposed parallel to each other in the first horizontal direction (for example, the y-axis direction).

At the initial position of the AF operation unit, the magnet 130 may be disposed on the housing 140 such that at least a portion thereof overlaps the first coil 120 in a direction parallel to a straight line which is perpendicular to the optical axis OA and extends through the optical axis OA.

The magnet 130 may include a monopolar magnetized magnet or a dipole magnet, which includes one N pole and one S pole. In another embodiment, the magnet 130 may include a bipolar magnetized magnet or a quadrupole magnet, which includes two N polar regions and two S polar regions. In a further embodiment, the magnet 130 may include both a monopolar magnetized magnet and a bipolar magnetized magnet.

For example, the magnet 130 may include an AF magnet (or an AF operation magnet) for AF operation and an OIS magnet (or an OIS operation magnet) for OIS operation. In another embodiment, for example, the magnet 130 may be a common magnet for AF operation and OIS operation.

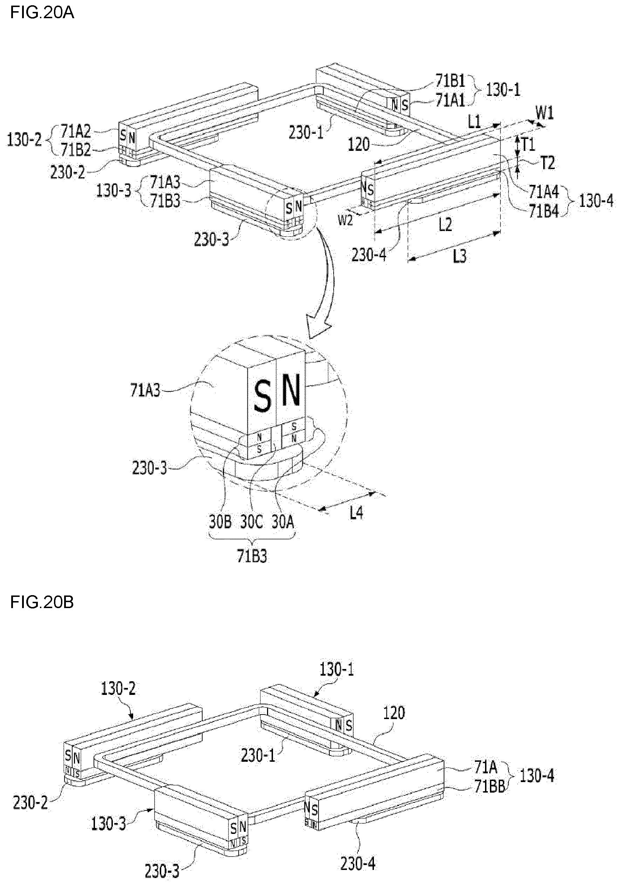

FIG. 20A illustrates an embodiment of the magnet 130 shown in FIG. 5.

Referring to FIG. 20A, the magnet 130 may include the first magnet 71A, which is an AF magnet, and the second magnet 71B, which is an OIS magnet and is disposed below the first magnet 71A.

The first magnet 71A may be a dipole magnet including one N pole and one S pole. For example, the N pole and the S pole of the first magnet 71A may be disposed so as to be opposed to or face each other in a direction perpendicular to the optical axis. In another embodiment, the first magnet 71A may be a quadrupole magnet which includes two N poles and two S poles.

The first magnet 71A may include a plurality of magnet units 71A1 to 71A4. As described above, each of the plurality of magnet units 71A1 to 71A4 may be a dipole magnet or a quadrupole magnet. For example, the magnet units 71A to 71A4 may have the same size and shape. For example, two magnet units 71A1 and 71A3, which are opposed to each other in a first diagonal direction, may have the same size and shape, and the other two magnet units 71A2 and 71A4, which are opposed to each other in a second diagonal direction, may have the same size and shape.

In another embodiment, the size and shape of the two magnet units 71A1 and 71A3 may be different from the size and shape of the other two magnet units 71A2 and 71A4. For example, the length of the long side of each of the two magnet units 71A1 and 71A3 may be greater than the length of the long side of each of the other two magnet units 71A2 and 71A4. For example, the length of the short side of each of the two magnet units 71A1 and 71A3 may be equal to the length of the short side of each of the other two magnet units 71A2 and 71A4.

The second magnet 71B may be a quadrupole magnet which includes two N poles and two S poles. For example, the second magnet 71B may include a first magnet portion 30A, a second magnet portion 30B, and a partition wall 30C disposed between the first magnet portion 30A and the second magnet portion 30B. Here, the partition wall 30C may be made of a non-magnetic material, air or the like, and may be referred to as a "neutral zone" or a "neutral region". In another embodiment, the second magnet 71B may be a dipole magnet which includes one N pole and one S pole.

For example, the first magnet portion 30A and the second magnet portion 30B may be spaced apart from each other in a direction perpendicular to the first direction (or the optical-axis direction). For example, the first magnet portion 30A may include a first N pole and a first S pole which are opposed to or face each other in the optical-axis direction. The second magnet portion 30B may include a second N pole and a second S pole which are opposed to or face each other. The first N pole (or the first S pole) of the first magnet portion 30A and the second S pole (or the second N pole) of the second magnet portion 30B may be opposed to or face each other in a direction perpendicular to the optical axis.

The second magnet 71B may include a plurality of magnet units 71B1 to 71B4. As described above, each of the plurality of the magnet units 71B1 to 71B4 may be a quadrupole magnet. In another embodiment, each of the magnet units 71B1 to 71B4 may be a dipole magnet. Each of the magnet units 71B1 to 71B4 may face or overlap a corresponding one of the second coil units 230-1 to 230-4 in the optical-axis direction.

For example, the magnet units 71B1 to 71B4 may have the same size and shape. For example, two magnet units 71B and 71B3, which are opposed to each other in a first diagonal direction, may have the same size and shape, and the other two magnet units 71B2 and 71B4, which are opposed to each other in a second diagonal direction, may have the same size and shape.

In another embodiment, the size and shape of the two magnet units 71B1 and 71B3 may be different from the size and shape of the other two magnet units 71B2 and 71B4. For example, the length of the long side of each of the two magnet units 71B1 and 71B3 may be greater than the length of the long side of each of the other two magnet units 71B2 and 71B4. For example, the length of the short side of each of the two magnet units 71B1 and 71B3 may be equal to the length of the short side of each of the other two magnet units 71B2 and 71B4.

The second magnet 71B may be disposed below the first magnet 71A. The second magnet 71B may be disposed on the lower surface of the first magnet 71A. For example, the upper surface of the second magnet 71B may be in contact with the lower surface of the first magnet 71A or may be fixed or coupled to the lower surface of the first magnet 71A using an adhesive. For example, at least a portion of the first magnet 71A may overlap at least a portion of the second magnet 71B in the first direction (or in the optical-axis direction).

In another embodiment, the second magnet may be spaced apart from the first magnet. Here, a portion of the housing 140 may be disposed between the first magnet and the second magnet. Alternatively, in another embodiment, a partition wall or a yoke may be disposed between the first magnet and the second magnet. Here, the description of the partition wall 30C may be applied to this partition wall with or without modification.

For example, the length T2 of the second magnet 71B in the optical-axis direction may be less than the length T1 of the first magnet 71A in the optical-axis direction (T2<T1) . In another embodiment, the length T2 may be equal to or greater than the length T1.

Furthermore, the length L2 of the long side of the second magnet 71B may be equal to or less than the length L1 of the long side of the first magnet 71A (L20L1). In another embodiment, the length L2 may be greater than the length L1.

Furthermore, the width W2 (or the length of the short side) of the second magnet 71B may be equal to or less than the width W1 (or the length of the short side) of the first magnet 71A (W2□W1). In another embodiment, the width W2 may be greater than the width W1.

At the initial position of the AF moving unit, the first coil 120 may face or overlap the first magnet 71A in a direction perpendicular to the first direction (or the optical-axis direction). Although the N pole of the first magnet 71A is disposed so as to face the first coil 120 or the N pole is positioned closer to the first coil 120 than is the S pole in FIG. 20A, the positions may be reversed in another embodiment.

For example, at the initial position of the OIS moving unit, at least a portion of the first magnet 130 may overlap at least a portion of the second coil 230 in the first direction (or in the optical-axis direction). For example, at the initial position of the OIS moving unit, at least a portion of the second magnet 71B may overlap at least a portion of the second coil 230 in the first direction (or in the optical-axis direction).

The length L2 of the long side of the second magnet 71B may be greater than the length L3 of the long side of the second coil 230 (L2>L3). In another embodiment, the length of the long side of the second magnet 71B may be equal to or greater than the length of the long side of the second coil 230.

The width W2 (or the length of the short side) of the second magnet 71B may be greater than the length L4 of the short side of the second coil 230 (W2>L4). In another embodiment, the length of the long side of the second magnet 71B may be equal to or less than the length of the long side of the second coil 230.

For example, the length of the long side of each of the two magnet units 71B1 and 71B3 of the second magnet 71B may be less than the length of the long side of each of the coil units 230-1 and 230-3 of the second coil 230. In another embodiment, the length of the long side of each of the two magnet units 71B1 and 71B3 may be equal to or greater than the length of the long side of each of the coil units 230-1 and 230-3.

Furthermore, the length of the long side of each of the other two magnet units 71B2 and 71B4 of the second magnet 71B may be greater than the length of the long side of each of the coil units 230-2 and 230-4 of the second coil 230. In another embodiment, the length of the long side of each of the magnet units 71B2 and 71B4 may be equal to or less than the length of the long side of each of the coil units 230-2 and 230-4 of the second coil 230.

For example, the length of the short side of each of the first to fourth magnet units 71B1 to 71B4 of the second magnet 71B may be less than the length of the short side of each of the first to fourth coil units 230-1 to 230-4 of the second coil 230. In another embodiment, the length of the short side of each of the first to fourth magnet units 71B1 to 71B4 may be greater than the length of the short side of each of the first to fourth coil units 230-1 to 230-4.

FIG. 20B illustrates another embodiment of the magnet 130 shown in FIG. 5.

Referring to FIG. 20B, the second magnet 71BB shown in FIG. 20B may be a dipole magnet which includes one N pole and one S pole. The description of the dimensions T2, L2 and W2 of the second magnet 71B shown in FIG. 20A may be applied to the second magnet 71BB shown in FIG. 20B.

The circuit board 190 may be disposed on the housing 140, and the first position sensor 170 may be disposed on or mounted to the circuit board 190 and may be conductively connected to the circuit board 190. For example, the circuit board 190 may be disposed in the mounting groove 14A in the housing 140, and the terminals 95 of the circuit board 190 may be exposed to the outside of the housing 140.

The circuit board 190 may include the terminal member (or terminal unit) 95 including the plurality of terminals B1 to B4, which are to be conductively connected to external terminals or external devices. The plurality of terminals B1 to B4 of the circuit board 190 may be conductively connected to the first position sensor 170.

The first position sensor 170 may be disposed on the housing 140 and/or the circuit board 190. The first position sensor 170 may be disposed on a first surface of the circuit board 190, and the plurality of terminals B1 to B4 may be disposed on a second surface of the circuit board 190. Here, the second surface of the circuit board 190 may be the surface opposite the first surface of the circuit board 190. For example, the first surface of the circuit board 190 may be the surface of the circuit board 190 that faces the bobbin 110 or the sensing magnet 180. For example, the circuit board 190 may be a printed circuit board or a flexible printed circuit board (FPCB).

The first position sensor 170 may be conductively connected to the circuit board 190. For example, the first position sensor 170 may be conductively connected to the first to fourth terminals B1 to B4 of the circuit board 190. The circuit board 190 may include a circuit pattern or a wire (not shown) for conductively connecting the first to fourth terminals B1 to B4 to the first position sensor 170.

For example, at the initial position of the AF operation unit, at least a portion of the first position sensor 170 may face or overlap the sensing magnet 180 in a direction parallel to a straight line which is perpendicular to the optical axis OA and extends through the optical axis OA. In another embodiment, at the initial position of the AF operation unit, the first position sensor may not face or overlap the sensing magnet.

The first position sensor 170 may serve to detect movement, displacement or position of the bobbin 110 in the optical-axis direction. The first position sensor 170 may detect the magnetic field or the intensity of the magnetic field of the sensing magnet 180 mounted on the bobbin 110 during movement of the bobbin 110, and may output an output signal corresponding to the result of the detection. Consequently, it is possible to detect movement, displacement or position of the bobbin 110 in the optical-axis direction using the output of the first position sensor 170.

The first position sensor 170 may be a driver IC including a Hall sensor and a driver. The position sensor 170 may include first to fourth terminals for transmitting and receiving data to and from an external device through data communication using a protocol, such as I2C communication, and fifth and sixth terminals for directly supplying a drive signal to the coil 120.

For example, each of the first to fourth terminals of the first position sensor 170 may be conductively connected to a corresponding one of the first to fourth terminals B1 to B4 of the circuit board 190 using solder or a conductive adhesive.

For example, the fifth and sixth terminals of the first position sensor 170 may be conductively connected to the first coil 120. For example, the first position sensor 170 may be conductively connected to the first coil 120 via at least one of the upper elastic member 150 and the lower elastic member 160 so as to supply a drive signal to the first coil 120.

For example, a portion of the first upper elastic unit 150-1 may be connected to one end of the first coil 120, and another portion of the first upper elastic unit 150-1 may be conductively connected to the circuit board 190. A portion of the second upper elastic unit 150-2 may be connected to the other end of the first coil 120, and another portion of the second upper elastic unit 150-2 may be conductively connected to the circuit board 190. The circuit board 190 may include a first pad 5A, which is conductively connected to another portion of the first upper elastic unit 150-1, and a second pad 5B, which is conductively connected to another portion of the second upper elastic unit 150-2. Each of the fifth and sixth terminals of the first position sensor 170 may be conductively connected to a corresponding one of the first and second pads 5A and 5B of the circuit board 190.

In another embodiment, the first coil 120 may be conductively connected to the circuit board 190 and the fifth and sixth terminals of the first position sensor 170 via two lower elastic members.

For example, in an embodiment in which the first position sensor 170 is a driver IC, the first and second terminals B1 and B2 of the circuit board 190 may be power terminals for supplying power, the third terminal B3 may be a terminal for transmitting and receiving a clock signal, and the fourth terminal B4 may be a terminal for transmitting and receiving a data signal.

In another embodiment, the first position sensor 170 may be a Hall sensor. Here, the first position sensor 170 may include two input terminals, to which drive signals or power are supplied, and two output terminals, through which a sensing voltage (or an output voltage) is output. For example, drive signals may be supplied to the first position sensor 170 through the first and second terminals B1 and B2 of the circuit board 190, and the output of the first position sensor 170 may be output to the outside through the third and fourth terminals B3 and B4. Furthermore, the first coil 120 may be conductively connected to the circuit board 190. The circuit board 190 may further include two additional terminals in addition to the first to fourth terminals B1 to B4 such that an external drive signal may be supplied to the first coil 120 via the two additional terminals.

For example, a ground terminal among the power terminals of the first position sensor 170 may be conductively connected to the cover member 300.

The capacitor 195 may be disposed or mounted on the first surface of the circuit board 190. The capacitor 195 may be configured to have a chip shape. Here, the chip may include a first terminal, which corresponds to one end of the capacitor 195, and a second terminal, which corresponds to the other end of the capacitor 195. The capacitor 195 may be alternatively referred to as a "capacitive element" or "condenser".

The capacitor 195 may be conductively connected in parallel to first and second terminals B1 and B2 of the circuit board 190 through which power (or a drive signal) is supplied to the first position sensor 170 from the outside. Alternatively, the capacitor 195 may be conductively connected in parallel to the terminals of the first position sensor 170, which is conductively connected to the first and second terminals B1 and B2 of the circuit board 190.

Since the capacitor 195 is conductively connected in parallel to the first and second terminals B1 and B2 of the circuit board 190, the capacitor 195 is capable of serving as a smoothing circuit for eliminating ripple components included in the power signals GND and VDD, which are supplied to the first position sensor 170 from the outside, and is thus capable of supplying stable and consistent power signals to the first position sensor 170.

In another embodiment, the sensing magnet 180 may be disposed on the housing 140, and the first position sensor 170 may be disposed on the bobbin 110. In another embodiment, the balancing magnet 185 may be omitted.

At least one of the upper elastic member 150 and the lower elastic member 160 may support the AF operation unit, for example, the bobbin or the lens module (for example, the lens barrel) relative to the housing 140 which is a stationary component. For example, the upper elastic member 150 and the lower elastic member 160 may elastically support the bobbin 110 or the lens module 400 (for example, the lens barrel) relative to the housing 140. For example, the camera device 10 according to an embodiment may include at least one of the upper elastic member 150 and the lower elastic member 160.

The upper elastic member 150 and the lower elastic member 160 may be coupled to the bobbin 110 and the housing 140. For example, the upper elastic member 150 may be coupled to the upper portion, the upper end or the upper surface of the bobbin 110 and the upper portion, the upper end or the upper surface of the housing 140, and the lower elastic member 160 may be coupled to the lower portion, the lower end or the lower surface of the bobbin 110 or the upper portion, the upper end or the upper surface of the housing 140. The upper elastic member 150 and the lower elastic member 160 may elastically support the bobbin 110 relative to the housing 140.

The upper elastic member 150 may include a plurality of upper elastic units (for example, 150-1 to 150-4) which are conductively separated or spaced apart from each other. Although the lower elastic member 160 is embodied as a single elastic unit, the lower elastic member 160 may include a plurality of lower elastic units which are conductively separated or spaced apart from each other in another embodiment. In another embodiment, at least one of the upper elastic member and the lower elastic member may be embodied as a single unit or a single structure.

The upper elastic member 150 may further include a first inner frame 151 coupled or fixed to the upper portion, the upper surface or the upper end of the bobbin 110, a first outer frame 152 coupled or fixed to the upper portion, the upper surface or the upper end of the housing 140, and a first frame connector 153 connecting the first inner frame 151 to the first outer frame 152. Furthermore, the upper elastic member 150 may include the above-mentioned extension 155.

The lower elastic member 160 may include a second inner frame 161 coupled or fixed to the lower portion, the lower surface or the lower end of the bobbin 110, a second outer frame 162 coupled or fixed to the lower portion, the lower surface or the lower end of the housing 140, and a second frame connector 163 connecting the second inner frame 161 to the second outer frame 162. The inner frame may alternatively be referred to as an inner portion, the outer frame may alternatively be referred to as an outer portion, and the frame connector may alternatively be referred to as a connecting portion.

Each of the first and second frame connectors 153 and 163 may be bent or curved (or may be formed into a curved line) at least once so as to define a predetermined pattern.

Each of the upper elastic member 150 and the lower elastic member 160 may be made of a conductive material, for example, a metal material. Furthermore, each of the upper elastic member 150 and the lower elastic member 160 may be made of an elastic member, for example, a leaf spring or the like.

Referring to FIGs. 5 and 7, for example, the second outer frame 152 of the first upper elastic unit 150-1 may include a first bonding portion 4A which is coupled or conductively connected to the first pad 5A of the circuit board 190, and the second outer frame 152 of the second upper elastic unit 150-2 may include a second bonding portion 4B which is conductively connected to the second pad 5B of the circuit board 190.

In another embodiment, at least one of the upper elastic member 150 or the lower elastic member 160 may include two elastic members. For example, each of the two lower elastic members of one of the upper elastic member 150 and the lower elastic member 160 may be coupled or conductively connected to a corresponding one of the first and second pads 5a and 5b of the circuit board 190. The first coil 120 may be conductively connected to the two elastic members.

The first outer frame 152 of the upper elastic member 150 may include a first coupler 510 coupled to the housing 140, a second coupler 520 coupled to the support member 220, and a connector 530 connecting the first coupler 510 to the second coupler 520. The first coupler 510 may have a through hole or a hole to be coupled to the first coupler 143 of the housing 140. The second coupler 520 may have a through hole or a hole to be coupled to the support member 220. For example, the second coupler 520 may be coupled to the support member 220 using a conductive adhesive or solder. For example, although the connector 530 may include a bent portion, which is bent at least once, or a curved portion, which is curved at least once, the disclosure is not limited thereto. In another embodiment, the connector 530 may have a linear shape.

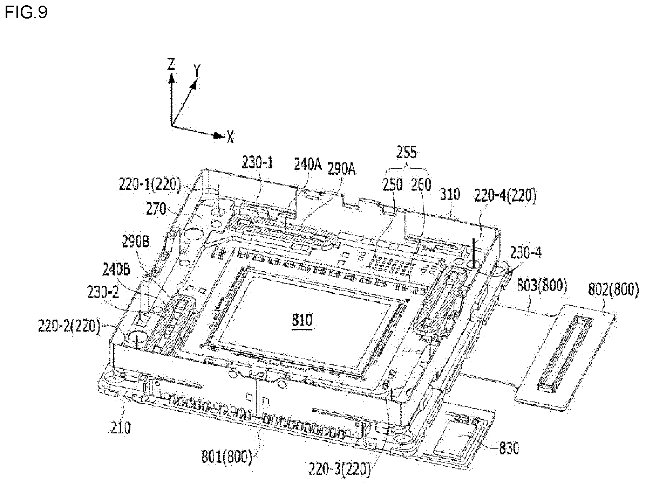

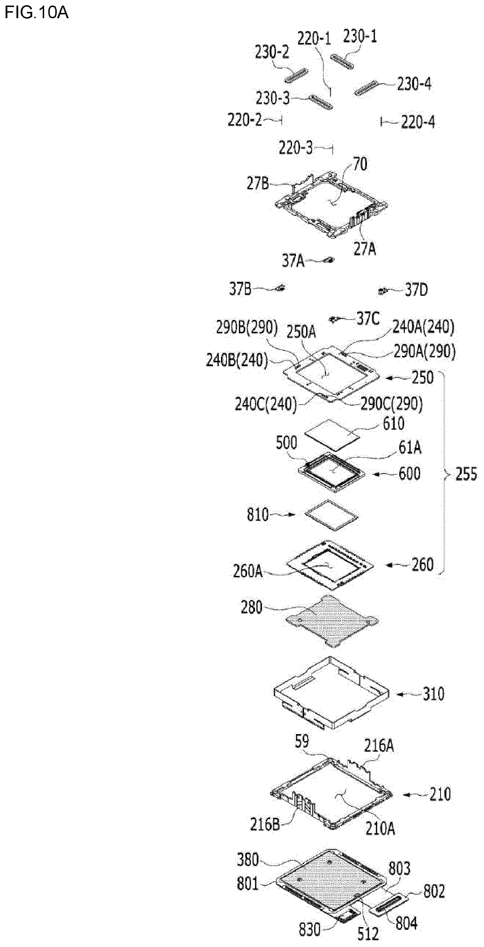

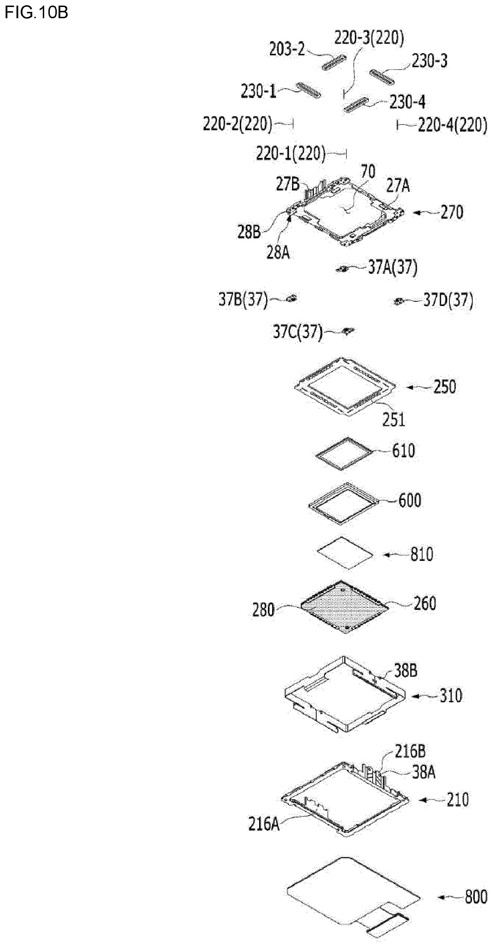

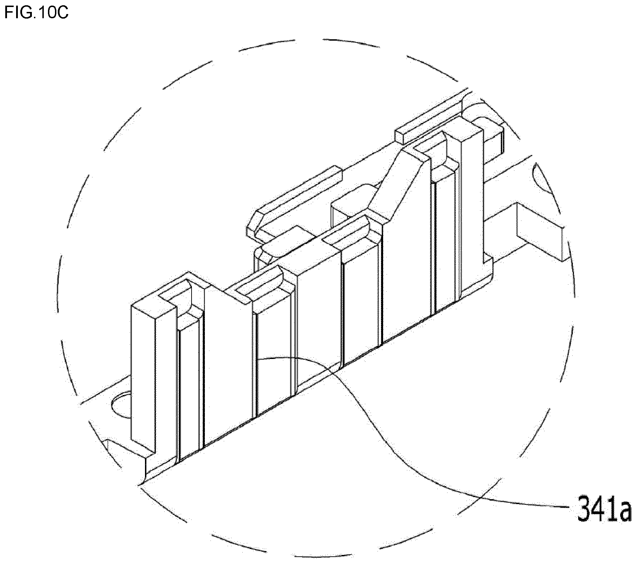

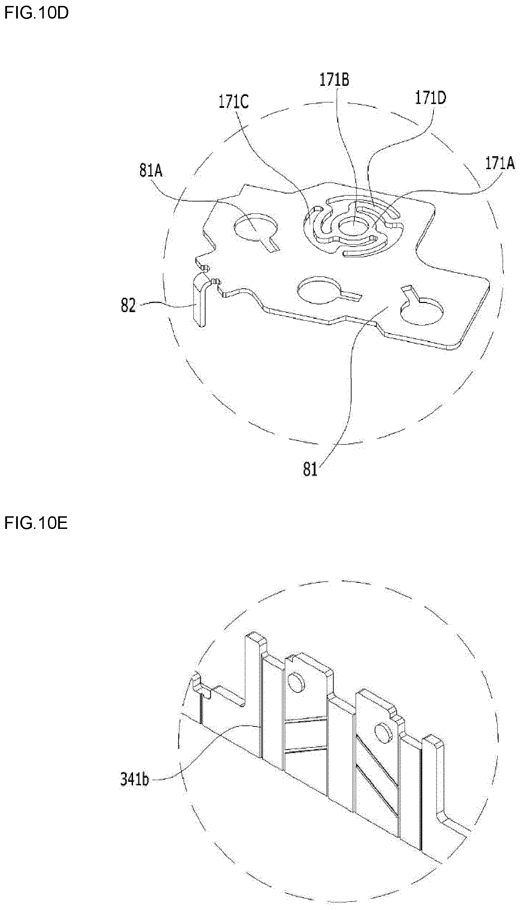

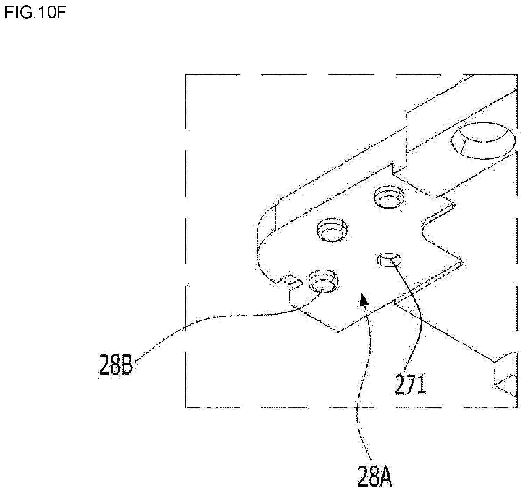

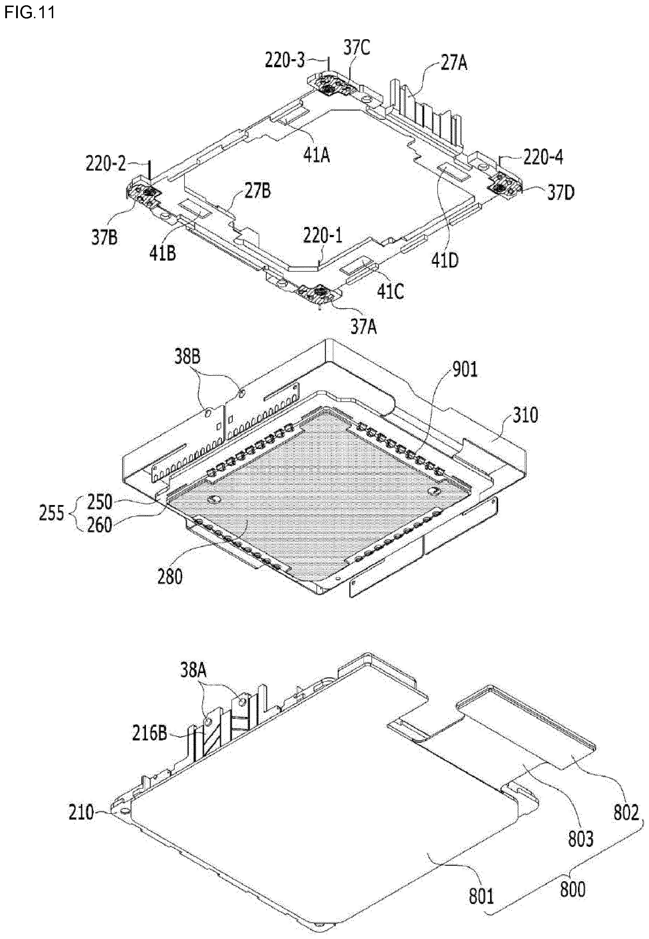

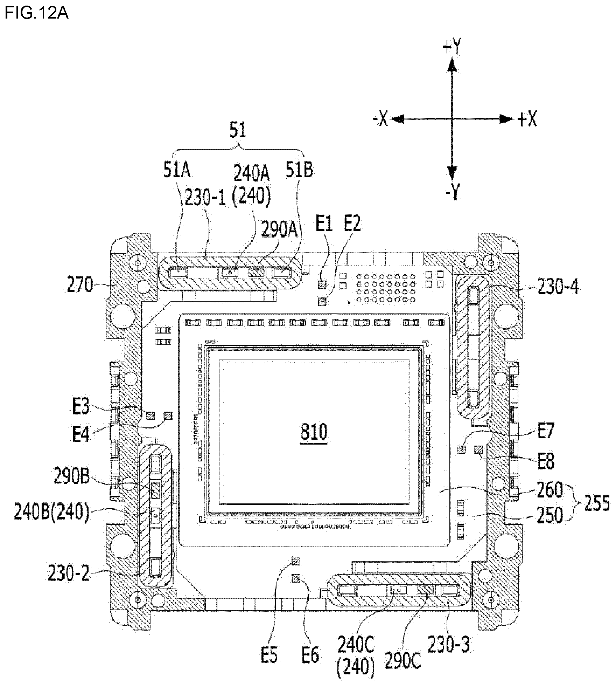

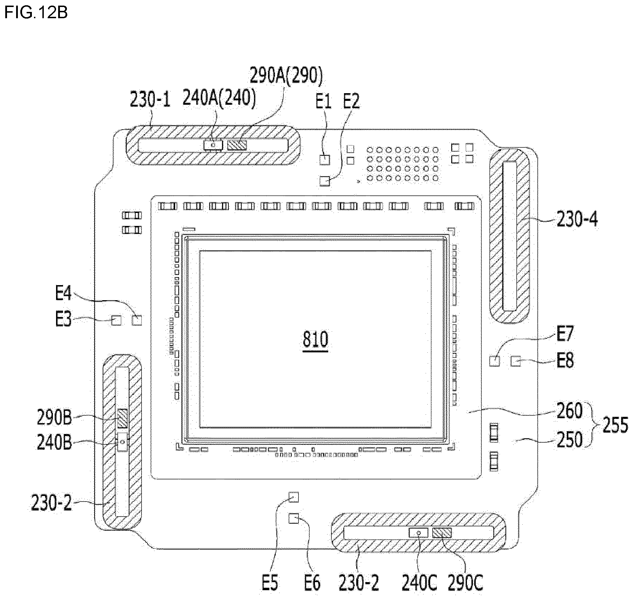

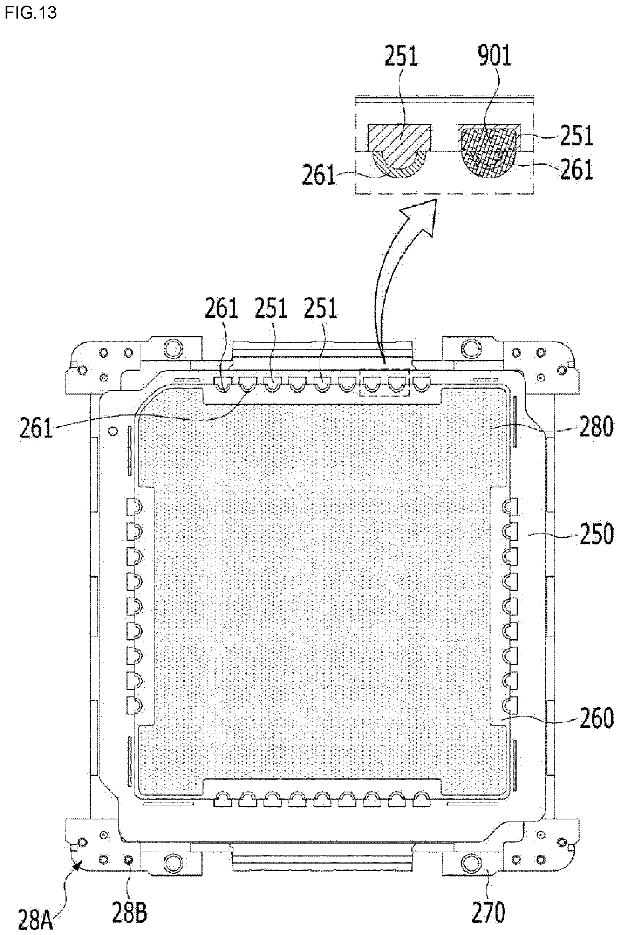

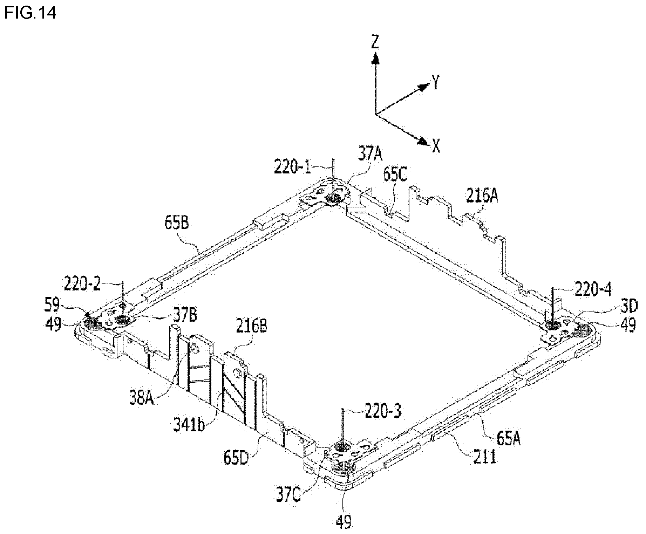

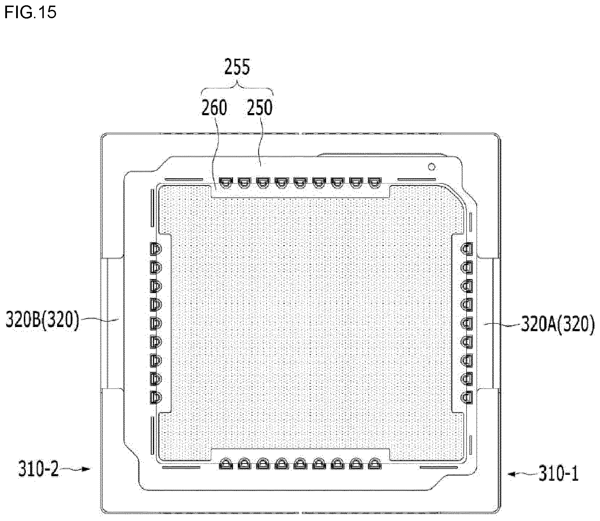

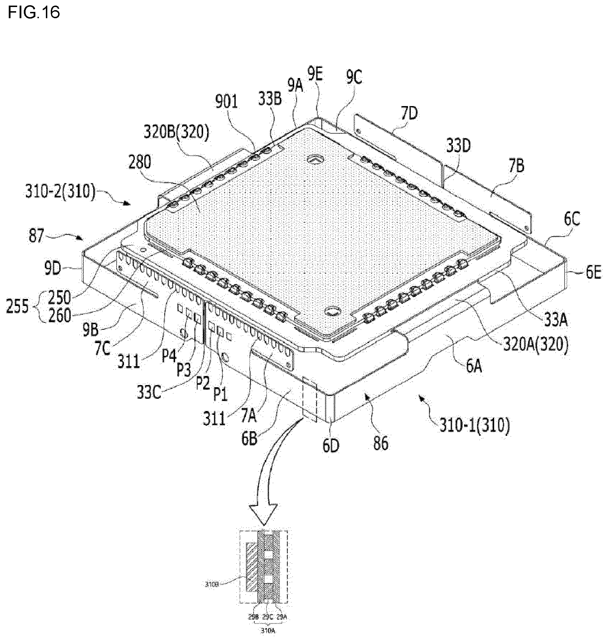

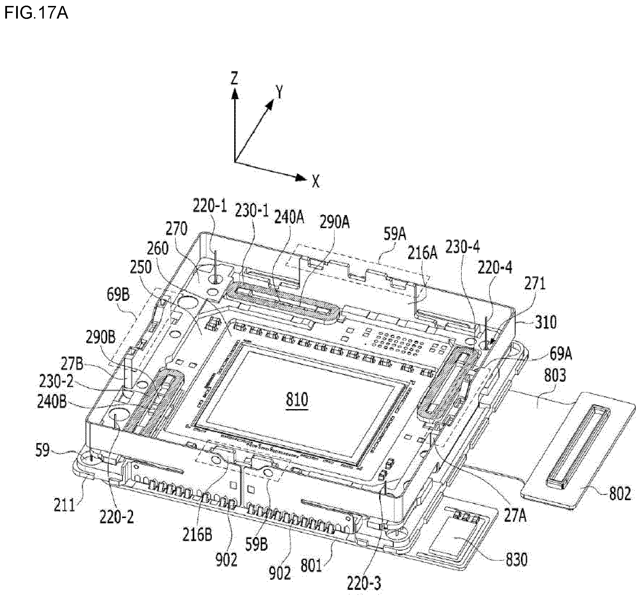

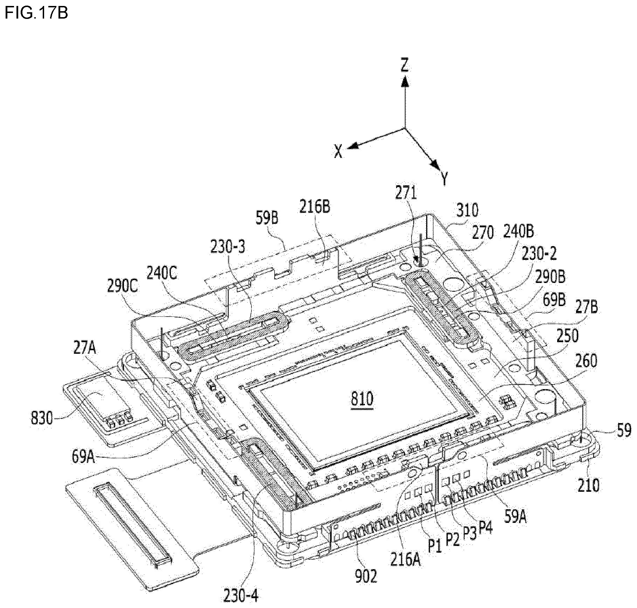

FIG. 9 is a perspective view of the image sensor unit 350. FIG. 10A is a first exploded perspective view of the image sensor unit 350 shown in FIG. 9. FIG. 10B is a second exploded perspective view of the image sensor unit 350 shown in FIG. 9. FIG. 10C is an enlarged view of the groove in the projection of the holder shown in 10A. FIG. 10D is an enlarged view of the reinforcing member 37 shown in FIG. 10A. FIG. 10E is an enlarged view of the groove in the base shown in FIG. 10A. FIG. 10F is an enlarged view of the groove in the holder in which the reinforcing member 37 shown in FIG. 10B is disposed. FIG. 11 is a bottom perspective view of the holder 270, the reinforcing member 37, the first board unit 255, the support board 310, the base 210, and the second board unit 800, which are shown in FIG. 10A. FIG. 12A is a plan view of the holder 270, the first board unit 255, the image sensor 810, the second coil 230, the OIS position sensor 240, and the capacitor 290. FIG. 12B is a rear perspective view of the first board unit 255, the image sensor 810, the second coil 230, the OIS position sensor 240, and the capacitor 290. FIG. 13 is a rear perspective view of the holder 270 and the first board unit 255. FIG. 14 is a perspective view of the base 210, the reinforcing member 37, and the support member 220. FIG. 15 is a bottom view of the first board unit 255, the support board 310, and the first heat radiating member 280. FIG. 16 is a bottom perspective view of the first board unit 255, the support board 310, and the first heat radiating member 280. FIG. 17A is a first perspective view of the support board 310 coupled to the holder 270 and the base 210. FIG. 17B is a second perspective view of the support board 310 coupled to the holder 270 and the base 210.

Referring to FIGs. 9 to 17B, the image sensor unit 350 may include a stationary unit and the OIS moving unit which is disposed so as to be spaced apart from the stationary unit. The image sensor unit 350 may include a support unit connecting the stationary unit to the OIS moving unit. Here, the support unit may include the support board 310. In another embodiment, the support unit may include an elastic member, for example, a leaf spring or a suspension wire in place of the support board 310.

The stationary unit may be a portion of the camera device 10 which is immovable during OIS operation. For example, the stationary unit may include the board unit 800. For example, the stationary unit may include a component coupled to the second board unit 800. The board unit 255 or 800 may alternatively be referred to as a "board" or a "circuit board".

For example, the stationary unit may include the base 210 coupled to the second board unit 800. For example, the stationary unit may include the housing 140 of the AF operation unit, and components disposed on the housing 140, for example, the magnet 130, the first position sensor 170 and the circuit board 180. Furthermore, the stationary unit may include the cover member 300 coupled to the base 210. The OIS moving unit may be disposed in the cover member 300. For example, the cover member 300 may accommodate therein the OIS moving unit and the support board 310.

Since the AF moving unit may be coupled to the housing 140, which is the stationary unit, via the elastic members 150 and 160, the AF moving unit may also be included in the stationary unit from the OIS' point of view.

The OIS moving unit may include the image sensor 810. The OIS moving unit may further include the first board unit 255, which is spaced apart from the second board unit 800 and is conductively connected to the second board unit 800. For example, the OIS moving unit may include components disposed on the first board unit 255, for example, the second coil 230, the second position sensor 240, and the capacitor 290.

For example, the OIS moving unit may further include at least one of the first heat radiating member 280 or the holder 270. For example, the OIS moving unit may further include a radiating member 1450 to be described later.

The holder 270 may alternatively be referred to as a "spacer member". In another embodiment, the holder 270 may be omitted, and the second coil 230 may be disposed on the first board unit 255, for example, the first circuit board 250.

The camera device 10 may include an elastic member configured to elastically support the OIS moving unit with regard to the stationary unit. Here, the elastic member may include the support member 220. For example, the support member 220 may take the form of a wire or a spring. The support member 220 may elastically support the OIS moving unit with regard to the stationary unit, in conjunction with the support board 310.

For example, one end of the support member 220 may be coupled to the upper elastic member 150 (or the housing 140), and the other end of the support member 220 may be coupled to the holder 270. For example, one end of the support member 220 may be coupled to the first outer frame 152 (for example, the second coupler 520) of the upper elastic member 150 using solder or a conductive adhesive. For example, the other end of the support member 220 may be coupled to the reinforcing member 37, which is disposed on or coupled to the holder 270 using solder or a conductive adhesive.

Referring to FIG. 7B, a damper DA may be disposed between one end of the support member 220, which extends through the hole 147 in the housing 140, and the hole 147 in the housing 140. For example, at least a portion of the damper DA may be disposed in the hole 147 in the housing 140, and may be couple or attached both to at least a portion of the support member 220 and to the housing 140.

Referring to FIG. 5, the housing 140 may include a groove 147a having a structure that is depressed from the upper surface thereof. The groove 147a may be formed around the hole 147. For example, the hole 147 may be formed inside the groove 147a, and may be formed through the bottom surface of the groove 147a.

For example, the damper DA may be disposed in the groove 147a in the housing 140. For example, the housing 140 may include the groove 147a formed in the upper surface of each of the corner portions, and the damper DA may be disposed in the groove 147a formed in each of the corner portions of the housing 140. The damper DA may be in contact with or attached or coupled to the groove 147a in the upper elastic member 150. Furthermore, the damper DA may be in contact with or attached or coupled to at least a portion of the connector 530 of the upper elastic member 150. Furthermore, the damper DA may be in contact with or attached or coupled to one end of the support member 220.

For example, the support member 220 may be disposed parallel to the optical-axis direction. For example, the support member 220 may be disposed on the corner of the housing 140 and/or the corner of the holder 270. For example, the support member 220 may include four wires 220-1 to 220-4. Each of the four wires 220-1 to 220-4 may be disposed on a corresponding one of the four corners of the housing 140 and/or the four corners of the holder 270.

Referring to FIGs. 10A and 10B, the holder 270 may have formed therein a hole 271 through which at least a portion of the support member 220 extends. For example, the corner of the holder 270 may have formed therethrough the hole 271 through which the other end of the support member 220 extends. For example, each of the four corners of the holder 270 may have formed therein the hole 271. For example, although the hole 271 may be a through hole which is formed through the holder 270 in the optical-axis direction, the hole 271 may have the form of an escape groove in another embodiment.

For example, the hole 271 may include a portion, the diameter of which increases toward the lower surface from the upper surface of the holder 270. The hole 271 may have the form of a through hole or a groove. For example, the hole 271 may have the form of a funnel or a cone. In another embodiment, the diameter of the hole 271 may be constant. A damper may be disposed in the hole 271 in the holder 270 so as to be in contact with or bonded to the other end of the support member 220.

For example, the reinforcing member 37 may be coupled to the holder 270. For example, the reinforcing member 37 may be disposed on the upper surface or the lower surface of the holder 270. For example, the reinforcing member 37 may be disposed or coupled to the lower surface of the corner of the holder 270. The holder 270 may have formed therein a groove 28A in which the reinforcing member 37 is disposed. For example, the groove 28A may be formed in the lower surface of the corner of the holder 270.

The holder 270 may include at least one protrusion 28B, and the reinforcing member 37 may have at least one hole 81A to be coupled to the at least one protrusion 28B of the holder 270. The reinforcing member 37 and the holder 270 may be coupled to each other using an adhesive or through heat fusion. The reinforcing member 37 may have a hole 71B to which the other end of the support member 220 is inserted or coupled. For example, each of the holes 81A and 71B may be a through hole.

The reinforcing member 37 may alternatively be referred to as a "terminal portion", a "supporting portion", a "coupling member", a "metal plate", a "reinforcing plate" or the like. The reinforcing member 37 may increase coupling force of the support member 220. For example, the reinforcing member 37 may increase the coupling force between the support member 220 and the holder 27, thereby stably supporting the OIS moving unit by the stationary unit.

For example, the reinforcing member 37 may include a body 81 coupled to the holder 270. The body 81 may include a coupler 71 coupled to the support member 220. The coupler 71 may include a coupling region 171A coupled to the support member 220 and a hole 71B formed in the first coupling region 171A. The coupling region 171A may be a region of the body 81 which is coupled to the support member 220 using solder or a conductive adhesive. For example, the other end of the support member 220 that has passed through the hole 171B may be coupled to the lower portion or the lower surface of the coupling region 171A using solder or a conductive adhesive.

For example, the body 81 may have at least one hole 171C formed around the coupling region 171A. For example, the body 81 may have a plurality of holes 171C surrounding the coupling region 171A. For example, the plurality of holes 71C may be spaced apart from the hole 171B.

The body 81 may include a supporting portion which is positioned between the plurality of holes 171C so as to support the coupling region 171A. The supporting portion 171D may alternatively be referred as a "connector" or a "bridge". The supporting portion 171D may include a plurality of supporting portions which are spaced apart from each other. The supporting portion 171D may be connected to the coupling region 171A.

The at least one hole 171C may serve to enable solder to be mainly formed only in the coupling region 171A by virtue of interfacial tension (for example, surface tension) at the peripheral area of the coupling region 171A during soldering.

The coupling region 171A must be heated in order to perform soldering. Here, the at least one hole 171C may suppress or block transmission of heat of the coupling region 171A to another region while preventing a soldered portion from being formed in the remaining region of the body 81. In other words, the at least one hole 171C is able to improve soldering efficiency.

The reinforcing member 37 may include an extension 82 which extends from the body 81. The extension 82 may be bent downwards at the body and may extend downwards. For example, the extension 82 may extend toward a hole 59 in the base 210. The extension 82 may alternatively be referred to as a "bent portion".

For example, the reinforcing member 37 may include four terminals 37A to 37D corresponding to the four wires 220-1 to 220-4 of the reinforcing member 37. Each of the terminals 37A to 37D may be disposed on a corresponding one of the corners of the holder 270, and may be coupled to a corresponding one of the wires 220-1 to 220-4. The description of FIG. 10A may be applied to the structure of each of the terminals 37A to 37D with or without modification. The reinforcing member 37 may include a metal material. For example, the reinforcing member 37 may be made of a conductive material. In another embodiment, the reinforcing member 37 may be made of a nonconductive material. In another embodiment, the reinforcing member 37 may be omitted, and the support member 220 may be directly coupled to the holder 270.

Referring to FIG. 14, a damper 49 may be disposed between the reinforcing member 37 and the base 210, and may be in contact with or coupled or attached both to the reinforcing member 37 and to the base 210. For example, the base 210 may have the hole 59 (or the groove) formed at a location which corresponds to or faces the reinforcing member 37. For example, the hole 59 (or the groove) may be formed in the corner of the base 210.

In another embodiment, the extension 82 may be omitted from the reinforcing member 37, and the camera device 10 may not include the damper 49 shown in FIG. 14.

The support board 310 may support the OIS moving unit with regard to the stationary unit such that the OIS moving unit is moved in a direction perpendicular to the optical axis, is tilted relative to the optical axis, or is rotated within a predetermined range.

For example, one end of the support board 310 may be connected or coupled to the first board unit 255, and another end of the support board 310 may be connected or coupled to the second board unit 800.

The holder 270 may be disposed below the AF operation unit. For example, the holder 270 may be made of a nonconductive member. For example, the holder 270 may be made of an injectable material which is easily shaped through an injection molding process. Furthermore, the holder 270 may be made of an insulation material. Furthermore, for example, the holder 270 may be made of resin or plastic.

Referring to FIGs. 10A, 10B, 12A and 12B, the holder 270 may include an upper surface, a lower surface which is opposed to the upper surface, and a side surface (for example, an outer surface) connecting the upper surface to the lower surface. For example, the lower surface of the holder 270 may be opposed to or face the second board unit 800.

The holder 270 may support the first board unit 255, and may be coupled to the first board unit 255. For example, the first board unit 255 may be disposed below the holder 270. The lower portion, the lower surface or the lower end of the holder 270 may be coupled to the upper portion, the upper surface or the upper end of the first board unit 255. For example, the holder 270 may be coupled to the first board unit 255 using an adhesive. In another embodiment, the first board unit 255 may be disposed above the holder 270.

The holder 270 may accommodate or support the second coil 230. The holder 270 may support the second coil 230 in the state of being spaced apart from the first board unit 255. For example, at least a portion of the holder 270 may be disposed between the second coil 230 and the first board unit 255.

The holder 270 may have a bore 70 corresponding to one area of the first board unit 255. For example, the bore 70 in the holder 270 may be a through hole which is formed through the holder 270 in the optical-axis direction. For example, the bore 70 in the holder 270 may correspond to, face or overlap the image sensor 810 in the optical-axis direction.

Although the bore 70 in the holder 270 may have a polygonal shape, for example, a quadrangular shape, a circular shape, or an elliptical shape when viewed from above, the disclosure is not limited thereto. The bore 70 may have any of various shapes.

For example, the bore 70 in the holder 270 may be configured to have such a shape or a size as to expose the image sensor 810, a portion of the upper surface of the first circuit board 250, a portion of the upper surface of the second circuit board 260, and the elements. For example, the surface area of the bore 70 in the holder 270 may larger than the surface area of the image sensor 810, and may be smaller than the surface area of the bore 250A in the first circuit board 250.

The holder 270 may have therein the holes 41A, 41B and 41C corresponding to the second position sensors 240. For example, the holder 270 may have therein the holes 41A, 41B and 41C, which are formed at positions respectively corresponding to the first to third sensors 240A, 240B and 240C.

For example, the holes 41A, 41B and 41C may be positioned adjacent to the corners of the holder 270. The holder 270 may further have a dummy hole 41D formed adjacent to the corner of the holder 270, which does not correspond to any of the second position sensors 240. The dummy hole 41D may be intended to achieve weight equilibrium of the OIS moving unit during OIS operation. The dummy hole 41D may be a through hole. In another embodiment, the dummy hole 41D may not be formed. The holes 41A, 41B and 41C may be formed through the holder 270 in the optical-axis direction. In another embodiment, the holes 41A, 41B and 41C in the holder 270 may be omitted.

The upper surface of the holder 270 may be provided with at least one coupling protrusion 51, configured to be coupled to the second coil 230. The coupling protrusion 51 may project from the upper surface of the holder 270 in an upward direction or in a direction toward the AF operation unit. For example, the coupling protrusion 51 may be formed adjacent to each of the holes 41A to 41D in the holder 270.

For example, two coupling protrusions 51A and 51B may be disposed or arranged at the holder 270 so as to correspond to each of the holes 41A to 41D in the holder 270. For example, each of the holes 41A, 41B, 41C and 41D in the holder 270 may be positioned between the two coupling protrusions 51A and 51B.

The holder 270 may include one or more projections 27A and 27B. The projections 27A and 27B may project from the upper surface of the holder 270. For example, the projections 27A and 27B may project from the outer surface of the holder 270 in the optical-axis direction or in an upward direction.

For example, the holder 270 may include the two projections 27A and 27B which face or overlap each other in the second horizontal direction (for example, in the x-axis direction).

For example, the holder 270 may include four side portions (or side plates), and the projections 27A and 27B may be respectively formed at two side portions among the four side portions. For example, each of the projections 27A and 27B may be disposed or positioned in the center of a corresponding side portion (or side plate) of the holder 270.

The holder 270 may include a groove 341a. The groove 341a may be an adhesive-receiving groove. The groove 341a may be formed in the outer surface of each of the projections 27A and 27B. The groove 341a may be formed in the upper surface of each of the projections 27A and 27B. The groove 341a may be formed from the upper surface to the lower surface of each of the projections 27A and 27B. An adhesive for bonding the support board 310 to the holder 270 may be disposed in the groove 341a. The groove 341a may include a plurality of grooves. For example, the groove 341a may extend in the optical-axis direction. In another embodiment, the groove in the holder 270 may extend in a direction perpendicular to the optical axis.

The first board unit 255 may include the first circuit board 250 and the second circuit board 260 which are conductively connected to each other. The second circuit board 260 may alternatively be referred to as a "sensor board". In another embodiment, the heat radiating member 280 may be included in the first board unit 255.

The first board unit 255 may be disposed on the lower surface of the holder 270. For example, the first board unit 255 may be coupled to the lower surface of the holder 270. For example, the first circuit board 250 may be disposed on and/or coupled to the lower surface of the holder 270. For example, a first surface of the first circuit board 250 may be coupled or attached to the lower surface of the holder 270 using an adhesive member.

Here, the first surface of the first circuit board 250 may be opposed to or face the AF operation unit, and may be a surface on which the second position sensor 240 is disposed. The second surface of the first circuit board 250 may be a surface opposite the first surface of the first circuit board 250.

The first circuit board 250 may alternatively be referred to as a sensor board, a main board, a main circuit board, a sensor circuit board, a moving circuit board or the like. In all the embodiments, the first circuit board 250 may alternatively be referred to as a "second board" or a "second circuit board", and the second circuit board 260 may alternatively be referred to as a "first board" or a "first circuit board".

The second position sensor 240 (240A, 240B and 240C) may be disposed on the first circuit board 250 in order to detect movement of the OIS moving unit in a direction perpendicular to the optical axis and/or rotation, tilting or rolling of the OIS moving unit relative to the optical axis. Furthermore, a controller 830 and/or a circuit element (for example, a capacitor) may be disposed on the first circuit board 250.

The first circuit board 250 may include first terminals E1 to E8 to be conductively connected to the second coil 230. Here, the first terminals E1 to E8 may alternatively be referred to as "first pads" or "first bonding portions". The first terminals E1 to E8 of the first circuit board 250 may be disposed or arranged on a first surface 60A of the first circuit board 250. For example, the first circuit board 250 may be a printed circuit board or a flexible printed circuit board (FPCB).

The first circuit board 250 may have the bore 250A which corresponds to or faces the bores of the lens module 400 and the bobbin 110. For example, the bore 250A in the first circuit board 250 may be a through hole or a cavity which is formed through the first circuit board 250 in the optical-axis direction, and may be formed in the center of the first circuit board 250.

When viewed from above, the outer peripheral shape of the first circuit board 250, for example, may have a shape which coincides with or corresponds to the holder 270, for example, a quadrilateral shape. When viewed from above, the bore 250A in the first circuit board 250 may have a polygonal shape, for example, a quadrilateral shape, a circular shape or an elliptical shape. For example, the bore 250a in the first circuit board 250 may open or expose the image sensor 810 and/or the bore 260A in the second circuit board 260.

The first circuit board 250 may include at least one terminal 251 to be conductively connected to the second circuit board 260. The terminal 251 of the first circuit board 250 may alternatively be referred to as a "pad" or a "bonding portion". The terminal 251 of the first circuit board 250 may be disposed or arranged on the lower surface of the first circuit board 250.

For example, the terminal 251 may include a plurality of terminals, and the plurality of terminals 251 may be disposed and arranged in a region between the bore 250A in the first circuit board 250 and one side of the first circuit board 250 in a direction parallel to the one side. For example, the plurality of terminals 251 may be arranged so as to surround the bore 250A.

The second circuit board 260 may be disposed below the first circuit board 250. The second circuit board 260 may be conductively connected to the image sensor 810.

When viewed from above, although the second circuit board 260 may have a polygonal shape (for example, a quadrilateral shape, a square shape, or a rectangular shape), the disclosure is not limited thereto. In another embodiment, the second circuit board 260 may have a circular shape or an elliptical shape.

For example, the surface area of the outer periphery of the second circuit board 260 may be larger than the surface area of the bore 250A in the first circuit board 250. For example, the lower side of the bore 250A in the first circuit board 250 may be shielded or blocked by means of the second circuit board 260.

For example, when viewed from underneath, the outer surface (or side) of the second circuit board 260 may be positioned between the outer surface (or side) of the first circuit board 250 and the bore 250A in the first circuit board 250.

For example, the second circuit board 260 may have the bore 260A corresponding to the bore 250A in the first circuit board 250 and/or the image sensor 810. The bore 260A in the second circuit board 260 may be a hole or a cavity which is formed through the second circuit board 260, and may be formed in the center of the second circuit board 260.

For example, the bore 260A in the second circuit board 260 may open or expose the image sensor 810. For example, the image sensor 810 may be disposed in the bore 260A in the second circuit board 260, and may be conductively connected to the second circuit board 260. For example, the image sensor 810 may be conductively connected to the second circuit board 260 via a wire.

In another embodiment, the bore 260A may not be formed in the second circuit board 260, and the image sensor 810 may be disposed on the upper surface of the second circuit board 260.

In another embodiment, the heat radiating member 280 may be omitted. In the embodiment in which the heat radiating member 280 is omitted, the bore 260A may not be formed in the second circuit board 260, the image sensor 810 may be disposed on the upper surface of the second circuit board 260, and the radiating member 280 may be connected or coupled to or in contact with the second circuit board 260 (for example, the lower surface of the second circuit board 260).

In the embodiment in which the heat radiating member 280 is omitted, for example, the image sensor 810 may be disposed on the upper surface of a single board in which the first circuit board and the second circuit board are integrally formed, and the radiating member 1450 may be connected or coupled to or in contact with the single board.

The second circuit board 260 may include at least one terminal 261 which is conductively connected to the at least one terminal 251 of the first circuit board 250. For example, the terminal 261 of the second circuit board 260 may include a plurality of terminals.

For example, at least one terminal 261 of the second circuit board 260 may be formed on the side surface or the outer surface of the second circuit board 260 which connects the upper surface and the lower surface of the second circuit board 260 to each other. The upper surface of the second circuit board 260 may be a surface that faces the first circuit boar 250, and the lower surface of the second circuit board 260 may be a surface opposite the upper surface of the second circuit board. For example, the terminal 261 may have the form of a groove having a structure that is depressed from the side surface of the second circuit board 260. Alternatively, for example, the terminal 261 may have the form of a circular or semielliptical via formed in the side surface of the second circuit board 260. In another embodiment, at least one terminal of the second circuit board 260 that is conductively connected to the second terminal 251 of the first circuit board 250 may be formed on the upper surface of the second circuit board 260.

For example, the terminal 261 of the second circuit board 260 may be coupled to the terminal 251 of the first circuit board 250 using solder 901 (see FIG. 11) or an adhesive member. Although only one solder 901, which couples one terminal of the second circuit board 260 to one terminal 251 of the first circuit board, is shown in the enlarged dotted portion in FIG. 13, another terminal, which couples another terminal of the second circuit board 260 to a terminal of the first circuit board 250 which corresponds to the other terminal, may also be provided.

For example, each of the first and second circuit boards 250 and 260 may be a printed circuit board or a flexible printed circuit board (FPCB). At least one of the first and second circuit boards 250 and 260 may be an organic substrate or a ceramic board.

The first heat radiating member 280 may be disposed on or coupled to the first board unit 255. For example, the first heat radiating member 280 may be disposed on or coupled to the second circuit board 260. For example, the first heat radiating member 280 may be disposed below the second circuit board 260. For example, the first heat radiating member 280 may be coupled or fixed to the lower surface of the second circuit board 260.

For example, at least a portion of the upper surface of the first heat radiating member 280 may be coupled or fixed to the lower surface of the second circuit board 260.

In another embodiment, the first heat radiating member 280 may be included in the first board unit 255, the image sensor 810 may be disposed on the first board unit 255, and the radiating member 1450 to be described later may be connected or coupled to or in contact with the first board unit 255 and the support board 310.

The bore 260A in the second circuit board 260 may open or expose at least a portion of the first heat radiating member 280.

The image sensor 810 may be disposed on the first board unit 255.

The image sensor 810 may be disposed on or attached or coupled to at least a portion of the first heat radiating member 280 that is exposed through the bore 260A. For example, the image sensor 810 may be fixed, attached or coupled to the first heat radiating member 280 using an adhesive.

For example, at least an area of the upper surface of the first heat radiating member 280 may be exposed through the bore 260A, and the image sensor 810 may be disposed on or attached or coupled to the at least an area of the upper surface of the first heat radiating member 280 that is exposed through the bore 260A.

In another embodiment, the second circuit board 260 may include a groove formed in the lower surface thereof in order to receive or dispose the first heat radiating member 280 therein.

In another embodiment, the second circuit board 260 may not have formed therein the bore 260A, and the first heat radiating member 280 may be fixed, attached or coupled to the lower surface of the second circuit board 260. In a further embodiment, the first heat radiating member 280 may be omitted.

For example, the first heat radiating member 280 may be a plate-shaped member having predetermined thickness and hardness. The first heat radiating member 280 may improve an effect of radiating heat, generated from the heat source of the first board unit 255, toward the outside. Here, the heat source of the first board unit 255 may be an electronic element (or a circuit element) disposed on the first board unit 255, for example, the image sensor 810, the controller 830, the second position sensor 240 and/or the capacitor.

For example, the first heat radiating member 280 may include a metal material which has high thermal conductivity and high heat radiation efficiency, for example, at least one of SUS, aluminum, nickel, phosphorus, bronze, or copper.

The first heat radiating member 280 may serve to stably support the image sensor 810, and may serve as a reinforcing material for suppressing breakage of the image sensor 810 attributable to external shock or contact.

In another embodiment, the first heat radiating member 280 may be made of a heat radiating member having high thermal conductivity, for example, exothermic epoxy, exothermic plastic (for example, polyimide), or exothermic synthetic resin. In an embodiment, for example, the term "radiating member" may be used interchangeably with "plate", "radiating body", "heatsink", "radiating plate", "metal plate", "reinforcing material", or "stiffener".

In order to improve heat radiation efficiency, the first heat radiating member 280 may include a predetermined pattern having at least one groove or at least one unevenness. For example, a groove or a unevenness having a predetermined pattern may be formed in the lower surface of the first heat radiating member 280.

For example, the predetermined pattern may include a plurality of grooves which are spaced apart from each other at a predetermined interval. For example, the predetermined pattern may have the shape of a stripe. In another embodiment, the predetermined pattern may have the shape of a net or a mesh. In a further embodiment, the predetermined pattern may have a shape having dots which are spaced apart from each other. For example, each of the dots may have a circular shape, an elliptical shape or a polygonal shape (for example, a quadrilateral shape).

In another embodiment, the predetermined pattern may be formed on at least one of the upper surface, the lower surface or the outer surface of the first heat radiating member 280. In a further embodiment, the first radiating member may include a hole or a through hole in place of the groove or the unevenness. Because the first heat radiating member 280 moves together with the OIS moving unit, the first heat radiating member 280 may be spaced apart from the stationary unit, for example, the second board unit 800. The first heat radiating member 280 may include at least one escape groove 281 (see FIG. 10A) for avoiding spatial interference with the solder 901.

Although the first circuit board 250 and the second circuit board 260 are conductively coupled to each other using the solder 901 in FIG. 13, the first board and the second board may be embodied as a single integrated circuit board in another embodiment.

The second coil 230 may be disposed on or coupled to the OIS moving unit. For example, the second coil 230 may be disposed on the holder 270. The second coil 230 may be disposed on the upper surface of the holder 270. The second coil 230 may be disposed below the magnet 130.

The second coil 230 may be coupled to the holder 270. For example, the second coil 230 may be coupled or attached to the upper surface of the holder 270. For example, the second coil 230 may be coupled to the coupling protrusion 51 of the holder 270. The second coil 230 may move the OIS moving unit by virtue of the interaction with the magnet 130.

For example, the second coil 230 may correspond to, face or overlap the magnet 130 disposed on the stationary unit in the direction of the optical axis OA. In another embodiment, the stationary unit may include a dedicated OIS magnet independent of the magnet of the AF operation unit, and the second coil may correspond to, face or overlap the dedicated OIS magnet. Here, the OIS magnet may include the same number of OIS magnets as the number of coil units included in the second coil 230.

In a further embodiment, the OIS magnet may be disposed on the stationary unit of the second coil 230, and the OIS magnet 71B of the magnet 130 may be disposed on the OIS moving unit. Here, the second coil 230 may be conductively connected to the support board 310 and/or the second board unit 800 via a conductive member.

For example, the second coil 230 may include a plurality of coil units 230-1 to 230-4. For example, the second coil 230 may include four coil units 230-1 to 230-4 disposed on the four corners of the holder 270. For example, at least a portion of each of the coil units 230-1 to 230-4 may be disposed on a corresponding one of the corners of the holder 270. A portion of each of the coil units 230-1 to 230-4 may be disposed on a side portion adjacent to a corresponding one of the corners of the holder 270.

Each of the coil units 230-1 to 230-4 may have the form of a coil block having a closed loop or ring shape. For example, each of the coil units may have a cavity or a hole. For example, each of the coli units may be composed of a fine pattern (FP) coil, a wound coil or a coil block. For example, the cavity or the hole in each of the coil units 230-1 to 230-4 may be fitted over or coupled to the protrusion 51 of the holder 270.

In another embodiment, the second coil 230 may be disposed on the first circuit board 250, and may be coupled to the first circuit board 250.

The second coil 230 may be conductively connected to the first circuit board 250. For example, the first coil unit 230-1 may be conductive connected to two terminals E1 and E2 of the first circuit board 250, and the second coil unit 230-2 may be conductively connected to two other terminals E3 and E4. Furthermore, the third coil unit 230-2 may be conductively connected to two other terminals E5 and E6 of the first circuit board 250, and the fourth coil unit 230-4 may be conductively connected to the two other terminals E7 and E8 of the first circuit board 250.

Power or drive signals may be supplied to the first to fourth coil units 230-1 to 230-4 through the first circuit board 250. The power or drive signal supplied to the second coil 230 may be a DC signal, an AC signal or a signal containing both DC and AC components, and may be of a voltage type or a current type.

By virtue of the interaction between the first to fourth magnet units 130-1 to 130-4 and the first to fourth coil units 230-1 to 230-4, the OIS moving unit may be moved in the first horizontal direction or in the second horizontal direction or may be rolled relative to the optical axis.

For example, current may be independently applied to at least three coil units among the four coil units 230-1 to 230-4. In another embodiment, current may be independently applied to at least two coil units among the four coil units 230-1 to 230-4.

For example, an independent drive signal, for example, drive current may be supplied to each of the four coil units 230-1 to 230-4.

The controller 830 and 70 may supply at least one drive signal to at least one of the first to fourth coil units 230-1 to 230-4, and may move the OIS moving unit in the x-axis direction and/or in the y-axis direction or may rotate the OIS moving unit within a predetermined angle range about the optical axis by controlling the at least one drive signal. Hereinafter, the "controller" may be at least one of the controller 830 of the camera device 10 or the controller 780 of the optical instrument 200A.

When the second coil 230 is driven through three channels, three independent drive signals may be supplied to the second coil 230. For example, among the four coil units, two coil units (for example, 230-2 and 230-4 or 230-1 and 230-3), which are diagonally opposed to each other, may be connected to each other in series, and one drive signal may be supplied to the two coil units, which are connected to each other in series. Independent drive signals may be respectively supplied to the two other coil units among the four coil units.

Alternatively, the second coil 230 is driven through four channels, independent drive signals may be respectively supplied to the four coil units 230-1 to 230-4, which are separated from each other.

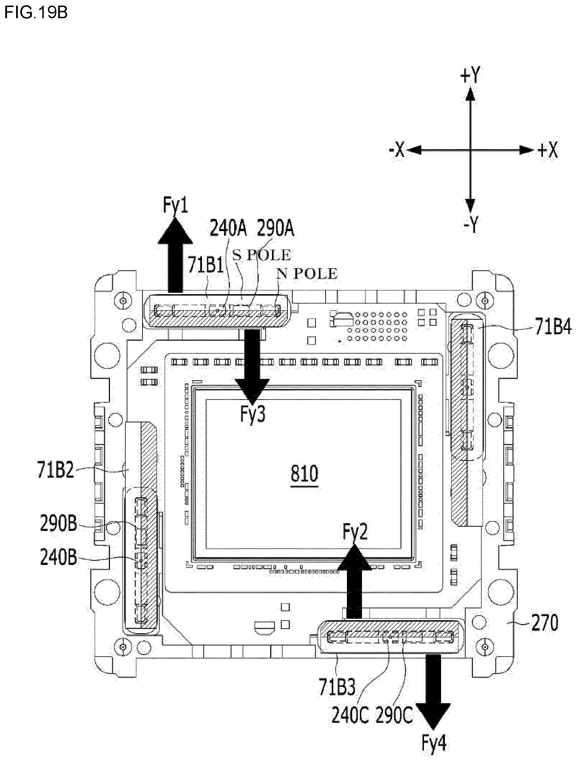

FIG. 10A illustrates movement of the OIS moving unit in the x-axis direction. FIG. 19B illustrates movement of the OIS moving unit in the y-axis direction.

The N pole and the S pole of each of the first and third magnet units 71B1 and 71B3, which are diagonally opposed to each other, may be disposed so as to face each other in the first horizontal direction (for example, in the y-axis direction). Furthermore, the N pole and the S pole of each of the second and fourth magnet units 71B2 and 71B4, which are diagonally opposed to each other, may be disposed so as to face each other in the second horizontal direction (for example, in the x-axis direction).

In other words, the direction in which the N pole and the S pole of the first magnet unit 71B1 face each other may be identical or parallel to the direction in which the N pole and the S pole of the third magnet unit 71B3 face each other. Furthermore, the direction in which the N pole and the S pole of the second magnet unit 71B2 face each other may be identical or parallel to the direction in which the N pole and the S pole of the fourth magnet unit 71B4 face each other.

In another embodiment in which the second magnet 71B is a dipole magnet, the N pole of each of the first to fourth magnet units 71B1 to 71B4 may be positioned at an inner side, and the S pole may be positioned at an outer side, based on the boundary line (or the boundary plane) between the N pole and the S pole. In another embodiment, the S pole of each of the first to fourth magnet units 71B1 to 71B4 may be positioned at an inner side, and the N pole may be positioned at an outer side, based on the boundary line between the N pole and the S pole. The boundary line (or the boundary plane) may be a portion that is almost completely non-magnetic and has almost no polarity.

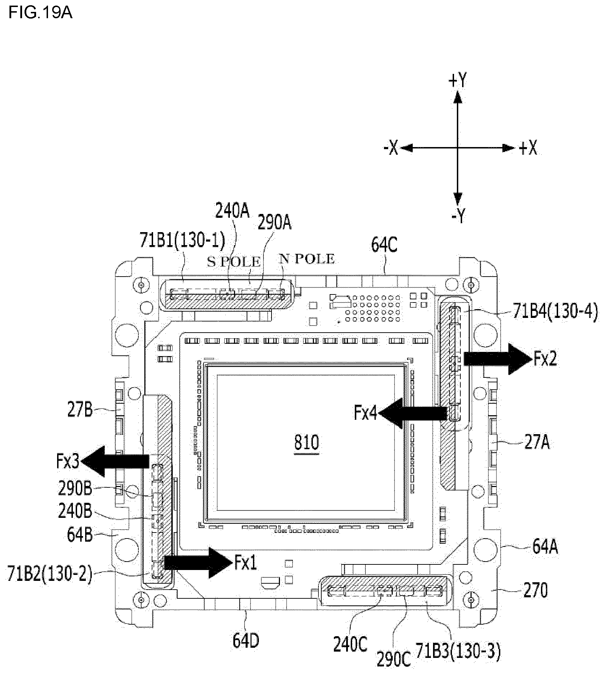

Referring to FIG. 19A, the OIS moving unit may be moved or shifted in the x-axis direction by virtue of the first electromagnetic force Fx1 (or Fx3) resulting from the interaction between the second coil unit 230-2 and the second magnet unit 71B2 and the second electromagnetic force Fx2 (or Fx4) resulting from the interaction between the fourth coil unit 230-4 and the fourth magnet unit 71B4. For example, the directions of the first electromagnetic force Fx1 (or Fx3) and the second electromagnetic force Fx2 (or Fx4) may be the same.

Referring to FIG. 19b, the OIS moving unit may be moved or shifted in the y-axis direction by virtue of the third electromagnetic force Fy1 (or Fy3) resulting from the interaction between the first coil unit 230-1 and the first magnet unit 71B1 and the fourth electromagnetic force (Fy2 (Fy4) resulting from the interaction between the third coil unit 230-3 and the third magnet unit 71B3. For example, the directions of the third electromagnetic force F11 (or Fy3) and the fourth electromagnetic force Fy2 (or Fy4) may be the same.

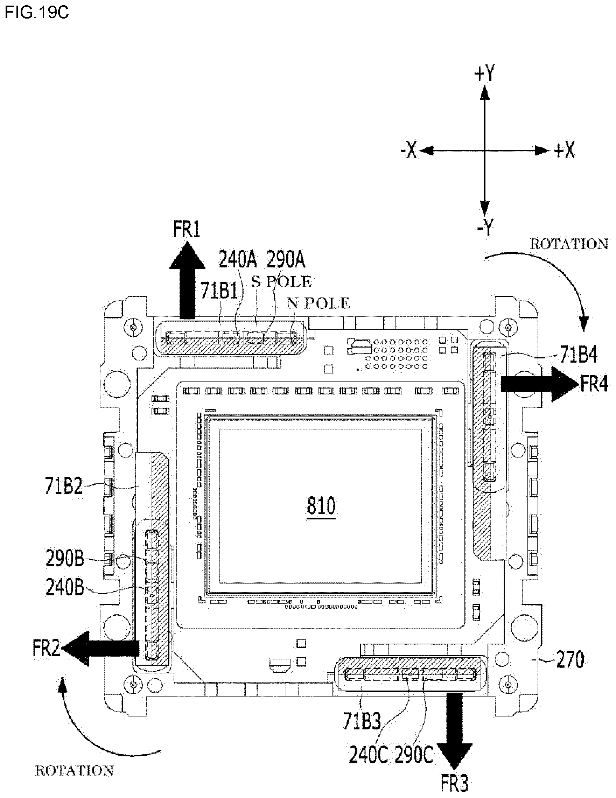

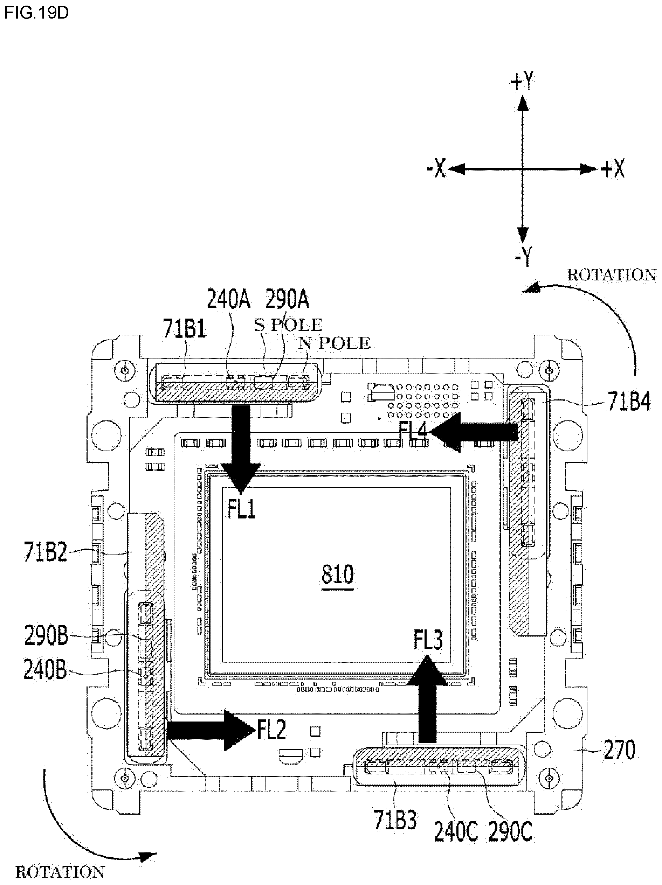

FIG. 19C illustrates clockwise rotation of the OIS moving unit in the case of driving through four channels. FIG. 19D illustrates counterclockwise rotation of the OIS moving unit in the case of driving through four channels.

Referring to FIG. 19C, by virtue of the first electromagnetic force FR1 resulting from the interaction between the first coil unit 230-1 and the first magnet unit 71B1, the second electromagnetic force FR2 resulting from the second coil unit 230-2 and the second magnet unit 71B2, the third electromagnetic force FR3 resulting from the interaction between the third coil unit 230-3 and the third magnet unit 71B3, and the fourth electromagnetic force FR4 resulting from the interaction between the fourth coil unit 230-4 and the fourth magnet unit 71B4, the OIS moving unit may be rotated clockwise about the optical axis or may be tilted or rolled relative to the optical axis.

Referring to FIG. 19D, by virtue of the first electromagnetic force FL1 resulting from the interaction between the first coil unit 230-1 and the first magnet unit 71B1, the second electromagnetic force FL2 resulting from the second coil unit 230-2 and the second magnet unit 71B2, the third electromagnetic force FL3 resulting from the interaction between the third coil unit 230-3 and the third magnet unit 71B3, and the fourth electromagnetic force FL4 resulting from the interaction between the fourth coil unit 230-4 and the fourth magnet unit 71B4, the OIS moving unit may be rotated counterclockwise about the optical axis or may be tilted or rolled relative to the optical axis.

For example, the direction of the first electromagnetic force FR1 (or FL1) and the direction of the third electromagnetic force FR3 (or FL3) may be opposite each other. Furthermore, for example, the direction of the second electromagnetic force FR2 (or FL2) and the direction of the fourth electromagnetic force FR4 (or FL4) may be opposite each other. Furthermore, for example, the direction of the first electromagnetic force RF1 (or FL1) and the direction of the second electromagnetic force FR2 (or FL2) may be perpendicular to each other.

In the case of driving through three channels, a drive signal may not be supplied to two coil units (for example, 130-1 and 130-3 or 130-2 and 130-4), which are connected to each other in series, and thus the electromagnetic force caused by the two coil units, which are connected to each other in series, may not be generated. For example, in the case of driving through three channels, the electromagnetic forces FR2 and FR4 may be omitted, and the electromagnetic forces FR1 and FR3 may be present in FIG. 19C. Alternatively, in the case of driving through three channels, the electromagnetic forces FR2 and FR4 may be present and the electromagnetic forces FR1 and FR3 may be omitted in FIG. 19C. Furthermore, in the case of driving through three channels, the electromagnetic forces FL2 and FL4 may be omitted and the electromagnetic forces FL1 and FL3 may be present in FIG. 19D. Alternatively, in the case of driving through three channels, the electromagnetic forces FL2 and FL4 may be present and the electromagnets FL1 and FL3 may be omitted in FIG. 19D.

In comparison with the driving through three channels, according to the driving through four channels shown in FIGs. 19C and 19D, it is possible to increase the electromagnetic force required for rotation of the OIS moving unit and thus to reduce drive current required to drive the first to fourth coil units 230-1 to 230-4,thereby reducing power consumption.

Although OIS operation for hand tremor correction is performed using the second magnet 71B and the second coil 230 in the embodiment shown in FIG. 2, the OIS operation for hand tremor correction may be performed using a shape-memory alloy member in another embodiment. For example, the shape-memory alloy member may be coupled to the stationary unit and the OIS moving unit and may be conductively connected to the first board unit 255. The controller 830 and 780 may supply a drive signal to the shape-memory alloy member, and may move the OIS moving unit in a direction perpendicular to the optical axis or may cause rotation, tilting or rolling of the OIS moving unit relative to the optical axis by virtue of the shape-memory alloy member.

In another embodiment, the OIS operation may be performed using the second magnet 71B and the second coil 230, and the camera device 10 may include a ball member (not shown) disposed between the base 210 and the holder 270 in order to support the OIS moving unit. Here, the ball member may support the OIS moving unit such that the OIS moving unit is moved in a direction perpendicular to the optical axis or is rotated, tilted or rolled relative to the optical axis using the frictional force and/or rolling force between the base 210 and the holder 270. In an embodiment, for example, the ball member may be disposed in the hole 59 in the base 210 and may be in contact therewith. In another embodiment, the ball member may be provided, and the reinforcing member 37 and the support member 220 may be omitted.

Referring to FIGs 12A and 12B, the second position sensor 240 may be disposed, coupled or mounted to the first board unit 255. The second position sensor 240 may be disposed, coupled or mounted to the first surface (for example, the upper surface) of the first circuit board 250. The second position sensor 240 may detect movement or displacement of the OIS moving unit in a direction perpendicular to the optical-axis direction, for example, shifting of the OIS moving unit in a direction perpendicular to the optical axis direction. The first position sensor 170 may be alternatively referred to as an "AF position sensor", and the second position sensor 240 may be alternatively referred to as an "OIS position sensor".

The second position sensor 240 may face or overlap the magnet 130 in the optical-axis direction. For example, the second position sensor 240 may include three or more sensors (for example, 240A to 2400), which correspond to or overlap three or more magnet units among the first to fourth magnet units 130-1 to 130-4 in the optical-axis direction, in order to detect movement of the OIS moving unit.

For example, the second position sensor 240 may include three or more sensors which correspond to or overlap three or more magnet units among the four magnet units 71B1 to 72B4 of the second magnet 71B.

For example, the second position sensor 240 may be disposed under the second coil 230.

For example, the second position sensor 240 may not overlap the second coil 230 in a direction perpendicular to the optical axis. For example, a sensing element of the second position sensor 240 may not overlap the second coil 230 in a direction perpendicular to the optical axis. The sensing element may be an element configured to detect a magnetic field.

For example, the center of the second position sensor 240 may not overlap the second coil 230 in a direction perpendicular to the optical axis. For example, the center of the second position sensor 240 may be the spatial center in x-axis and y-axis directions on the x-y coordinate plane perpendicular to the optical axis. Alternatively, the center of the second position sensor 240 may be the spatial center in x-axis, y-axis and z-axis directions.

In another embodiment, at least a portion of the second position sensor 240 may overlap the second coil 230 in a direction perpendicular to the optical axis.

For example, the second position sensor 240 may overlap the holes 41A to 41C in the holder 270 in the optical-axis direction. For example, the second position sensor 240 may overlap the cavity in the second coil 230 in the optical-axis direction. For example, at least a portion of the holes 41A to 41C in the holder 270 may overlap the cavity in the second coil 230 in the optical-axis direction.

For example, at least a portion of the second position sensor 240, for example, the center of the second position sensor 240 may not overlap the second coil 230.

For example, the second position sensor 240 may include the first sensor 240A, the second sensor 240B, and the third sensor 240C, which are disposed so as to be spaced apart from one another.

For example, each of the first to third sensors 240A, 240B and 240C may be a Hall sensor. In another embodiment, each of the first to third sensors 240A, 240B and 240C may be a driver IC including a Hall sensor and a driver. The description of the first position sensor 170 may be applied to the first to third sensors 240A, 240B and 240C with or without modification. For example, each of the first to third sensors 240A, 240B and 240C may be a displacement-detecting sensor in which output voltage thereof varies according to the relative position or the relationship with respect to a corresponding magnet unit.

Each of the first sensor 240, the second sensor 240B and the third sensor 240C may be conductively connected to the first circuit board 250.

The second position sensor 240 may be disposed below the cavity in the second coil 230. In another embodiment, the second position sensor 240 may be disposed outside the second coil 230 when viewed in the optical-axis direction or from above.

The second position sensor 240 may not overlap the second coil 230 in a direction perpendicular to the optical-axis direction. For example, the second position sensor 240 may overlap the holder 270 in a direction perpendicular to the optical-axis direction.

For example, the first sensor 240A may be disposed below the cavity in the first coil unit 230-1. The first sensor 240A may be disposed in a corresponding one 41A of the holes 41A to 41C in the holder 270. For example, the first sensor 240A may be disposed in the cavity in the first coil unit 230-1 when viewed from above.

The second sensor 240B may be disposed below the cavity in the second coil unit 230-2. The second sensor 240B may be disposed in another hole 41B among the holes 41A to 41C in the holder 270. For example, the second sensor 240B may be disposed in the cavity in the second coil unit 230-2 when viewed from above.

The third sensor 240C may be disposed below the cavity in the third coil unit 230-3. The third sensor 240C may be disposed in the other hole 41C among the holes 41A to 41C in the holder 270. For example, the third sensor 240C may be disposed in the cavity in the third coil unit 230-3 when viewed from above.

For example, each of the first to third sensors 240A, 240B and 240C may not overlap a corresponding one of the coil units 230-1 to 230-3 in a direction perpendicular to the optical axis. The first to third sensors 240A, 240B and 240C may overlap the holder 270 in a direction perpendicular to the optical axis.

By disposing the first to third sensors 240A, 240B and 240C so as not to overlap the OIS coil 230 in a direction perpendicular to the optical axis, it is possible to reduce influence of the magnetic field of the OIS coil 230 on the output of the OIS position sensor 240 and thus to perform accurate OIS feedback operation, thereby assuring reliability of OIS operation.

The second position sensor 240 may face, correspond to or overlap the magnet 130 in the optical-axis direction. For example, at the initial position of the OIS moving unit, at least a portion of the first sensor 240A may overlap the first magnet unit 71B1 of the second magnet 71B in the optical-axis direction. The first sensor 240A may output a first output signal (for example, a first output voltage) corresponding to the result of detection of the magnetic field of the first magnet unit 71B1.

For example, at the initial position of the OIS moving unit, at least a portion of the second sensor 240B may overlap the magnet 130-2 in the optical-axis direction. For example, at the initial position of the OIS moving unit, at least a portion of the second sensor 240B may overlap the second magnet unit 71B2 of the second magnet 71B in the optical-axis direction, and the second sensor 240B may output a second output signal (for example, a second output voltage) corresponding to the result of detection of the magnetic field of the second magnet unit 71B2.

Furthermore, for example, at the initial position of the OIS moving unit, at least a portion of the third sensor 240C may overlap the magnet 130-3 in the optical-axis direction. For example, at the initial position of the OIS moving unit, at least a portion of the third sensor 240C may overlap the third magnet unit 71B3 of the second magnet 71B in the optical-axis direction, and the third sensor 240C may output a third output signal (for example, a third output voltage) corresponding to the result of detection of the magnetic field of the third magnet unit 71B3.

The initial position of the OIS moving unit may be the original position of the OIS moving unit in the state in which no power or drive signal is applied to the second coil 230 from the controllers 830 and 780 or the position at which the OIS moving unit is positioned as the result of the support board being elastically deformed due only to the weight of the OIS moving unit. In addition, the initial position of the OIS moving unit may be the position at which the OIS moving unit is positioned when gravity acts in the direction from the first board unit 255 to the second board unit 800 or when gravity acts in the direction from the second board unit 850 to the first board unit 255.

In order to improve the linearity of the relationship between displacement of the OIS moving unit and the output of the second position sensor 250, each of the sensor units 240A, 240B and 240C may overlap a corresponding one of the magnet units 71B1, 71B2 and 72B3 in the optical-axis direction within the stroke range of the OIS moving unit.

Referring to FIGs. 12A and 12B, the capacitor 290 may be disposed on, coupled to or mounted on the first board unit 255. For example, the capacitor 290 may be disposed on, coupled to or mounted on a first surface (for example, the upper surface) of the first circuit board 250. In another embodiment, the capacitor 290 may be disposed on the second circuit board 260.

The capacitor 290 may be conductively connected or linked between the two output terminals of the second position sensor 240. The capacitor 290 may be conductively connected to the two terminals of the second position sensor 240. The capacitor 290 may remove noise of the output signal output from the two output terminals of the second position sensor 240.

When a drive signal is applied to the second coil 230 for OIS operation, a magnetic field may be generated at the second coil 230. The generated magnetic field may have an influence on the output of the second position sensor 240, with the result that accuracy of the output of the second position sensor 240 may be deteriorated and accuracy and reliability of OIS feedback operation may be deteriorated. The closer the second coil 230 and the second position sensor 240 are disposed to each other, the stronger the output of the second position sensor 240 is affected by the magnetic field of the second coil 230.

The influence of the magnetic field on the second coil 230 may be high-frequency noise in the output of the second position sensor 240. In other words, high-frequency noise attributable to the influence of the magnetic field on the second coil 230 may be included in the output of the second position sensor 240.

In an embodiment in which the controller 830 is disposed on the second board unit 800 for radiation, the distance between the controller 830 and the second position sensor 240 may increase, and the length of a wire for connection between the controller 830 and the second position sensor 240 may increase. For example, the wire connecting the controller to the second position sensor 240 may include a second wire for the first circuit board 250 and the support board 310 and a second wire for the second board unit 800. When the length of the wire increases for the above-mentioned reason, noise included in the output signal of each of the first to third sensors 240A to 240C of the second position sensor 240 may increase, and error may be generated in the target position or the target value with regard to displacement of the OIS moving unit due to the noise.

The capacitor 290 may serve to remove the high-frequency noise. Specifically, it is possible to remove the high-frequency noise attributable to the influence of the magnetic field of the second coil 230, and thus it is possible to prevent deterioration of accuracy and reliability of OIS feedback operation. In other words, the capacitor 290 may reduce or remove error in the target position with regard to displacement of the OIS moving unit attributable to the noise.

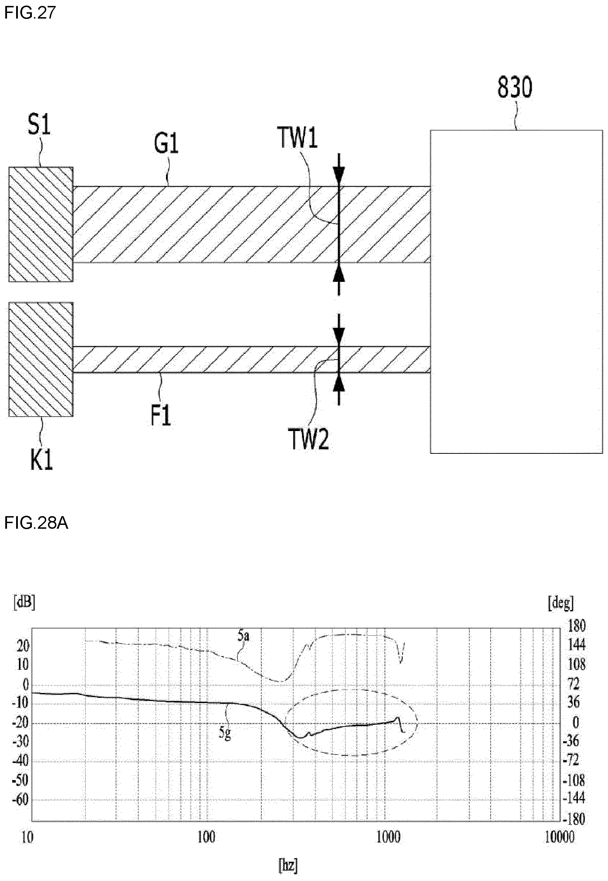

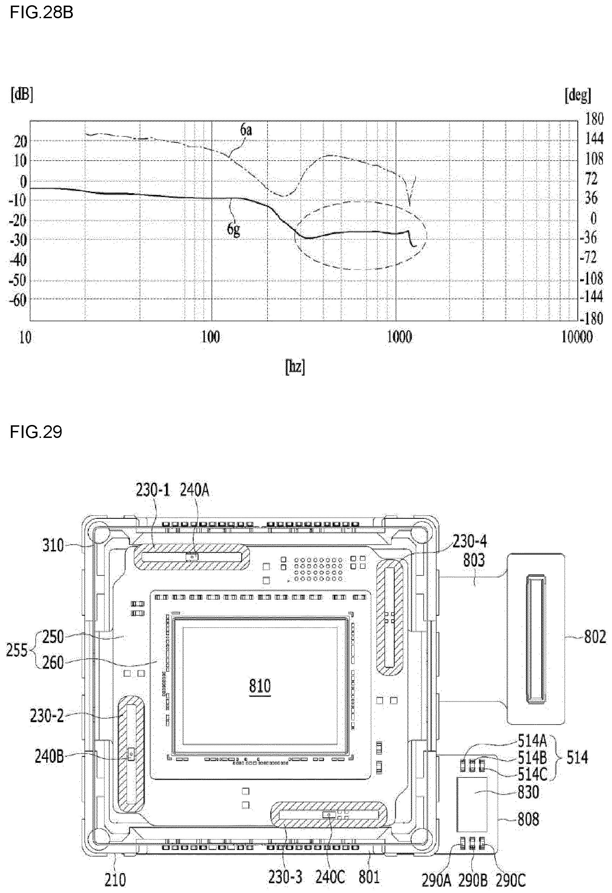

FIG. 28A illustrates frequency response characteristics of the second position sensor 240 and the second coil 230 in the case in which the capacitor 290 according to the embodiment is not provided. FIG. 28B illustrates frequency response characteristics of the second position sensor 240 and the second coil 230 in the case in which the capacitor 290 is provided. Here, 5a and 6a are phase graphs, and 5g and 6g are gain graphs. Here, the graphs for gain and phase may be defined as a log value (20log(Y)) of the ratio (Y=OUT/INPUT) of the output signal (OUT) of the OIS sensor (the second position sensor 240) to the input signal (INPUT) applied to the second coil 230.

Furthermore, performance and stability of OIS controlling for hand tremor correction may be verified through analysis of frequency response characteristics, for example, gain margin and phase margin using a frequency response analyzer.

Referring to FIG. 28A, due to the influence of the magnetic field generated at the second coil 230, gain may increase in a frequency range equal to or higher than the second resonant frequency, thereby reducing the gain margin. For example, the gain in the frequency range of 700 Hz to 1100 Hz may be -60 dB.

Referring to FIG. 28B, increase in gain in a resonant frequency range (for example, 200 Hz to 1100 Hz) equal to or higher than the first resonant frequency may decrease compared to FIG. 28A. For example, the gain in a frequency range of 200 Hz to 1100 Hz may be -60 dB or lower.

Because the noise included in the output signal of the second position sensor 240 is removed by the capacitor, the embodiment is able to suppress increase of gain in a frequency range (for example, 200 Hz to 1100 Hz) equal to or higher than the second resonant frequency and to prevent deterioration of reliability of hand tremor correction. In addition, because the embodiment is able to suppress increase in gain attributable to noise, it is possible to reduce noise generated during OIS operation.

The performance of control of OIS operation for hand tremor correction may be measured by suppression ratio. According to the embodiment, since noise included in the output signal of the second position sensor 240 is removed by the capacitor 290, it is possible to obtain an effect of improving the suppression ratio by 2 dB to 3 dB.

In another embodiment, the camera device 10 may include a low-pass filter or a high-pass filter which is conductively connected to two output terminals of the second position sensor 240, in place of the capacitor 290. For example, the low-pass filter may include at least one of a resistor, a coil or a capacitor.

For example, the capacitor 290 may be disposed below the second coil 230. For example, the capacitor 290 may not overlap the second coil 230 in a direction perpendicular to the optical axis. In another embodiment, at least a portion of the capacitor 290 may overlap the second coil 230 in a direction perpendicular to the optical axis.

For example, the capacitor 290 may be disposed in a corresponding one of the holes 41A to 41C in the holder 290. For example, the capacitor 290 may overlap a corresponding one of the holes 41A to 41C in the holder 270 in the optical-axis direction. Furthermore, for example, the capacitor 290 may overlap the cavity in the second coil 230 in the optical-axis direction.

The capacitor 290 may include capacitors 290A to 290C corresponding to the sensors 240A to 240C of the second position sensor 240. For example, the capacitor 290 may include first to third capacitors 290A to 290C which correspond to the first to third sensors 240A to 240C and are disposed so as to be spaced apart from one another.

For example, the first to third capacitors 290A to 290C may be conductively connected to the first board unit 255. For example, the first to third capacitors 290A to 290C may be conductively connected to the first circuit board 250.

When viewed in the optical-axis direction or from above, each of the first to third capacitors 290A to 290C may be disposed in the cavity in a corresponding one of the coil units 230-1 to 230-3 of the second coil 230.

For example, the first capacitor 290A may be disposed below the cavity in the first coil unit 230-1. For example, the first capacitor 290A may be disposed in a corresponding hole 41A among the holes 41A to 41C in the holder 270. For example, the first capacitor 290A may be disposed in the cavity in the first coil unit 230-1 when viewed from above.

For example, the second capacitor 290B may be disposed below the cavity in the second coil unit 230-2. For example, the second capacitor 290B may be disposed in another corresponding hole 41B among the holes 41A to 41C in the holder 270. For example, the second capacitor 290B may be disposed in the cavity in the second coil unit 230-2 when viewed from above.

The third capacitor 290C may be disposed below the cavity in the third coil unit 230-3. The third capacitor 290C may be disposed in another corresponding hole 41C among the holes 41A to 41C in the holder 270. For example, the third capacitor 290C may be disposed in the cavity in the third coil unit 230-3 when viewed from above.

The capacitances of the first to third capacitors 290A to 290C may be the same. In another embodiment, at least one of the first to third capacitors 290A to 290C may have a capacitance different from the two other capacitors.

For example, the capacitance of each of the first to third capacitors 290A to 290C may be 0.1 µF to 1 µF. When the capacitance of each of the first to third capacitors 290A to 290C is equal to or less than 0.1 µF, it is impossible to obtain a sufficient effect of removing high-frequency noise attributable to the magnetic field of the second coil 230. Meanwhile, when the capacitance of each of the first to third capacitors 290A to 290C is greater than 1 µF, it is impossible to perform OIS control in a desired frequency range because the first resonant frequency of the frequency response characteristic of the suppression ratio is affected.

The capacitor 290 may face or overlap the magnet 130, for example, the second magnet 71B in the optical-axis direction. For example, the first capacitor 290A may face or overlap the first magnet unit 130-1 in the optical-axis direction. The second capacitor 290B may face or overlap the second magnet unit 130-2 in the optical-axis direction. For example, the third capacitor 290C may face or overlap the third magnet unit 130-3 in the optical-axis direction.

For example, the first capacitor 290A and the first sensor 240A may be spaced apart from each other in the cavity in the first coil unit 230-1 when viewed in the optical-axis direction or from above. For example, the second capacitor 290B and the second sensor 240B may be spaced apart from each other in the cavity in the second coil unit 230-2 when viewed in the optical-axis direction or from above. For example, the third capacitor 290C and the third sensor 240C may be spaced apart from each other in the cavity in the third coil unit 230-3 when viewed in the optical-axis direction or from above.

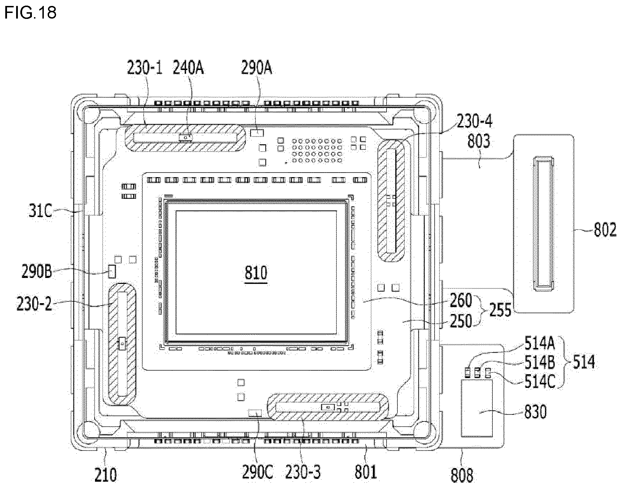

FIG. 18 illustrates disposition of the first to third capacitors 290A to 290C according to another embodiment.

Referring to FIG. 18, for example, the first capacitor 290A may be disposed outside the cavity in the first coil unit 230-1 when viewed from above. For example, the second capacitor 290B may be disposed outside the cavity in the second coil unit 230-2 when viewed from above. For example, the third capacitor 290C may be disposed outside the cavity in the third coil unit 230-3 when viewed from above.

For example, the first capacitor 290A may be disposed between the first coil unit 130-1 and the fourth coil unit 230-4 when viewed in the optical-axis direction or from above. For example, the second capacitor 290B may be disposed between the first coil unit 130-1 and the second coil unit 230-2 when viewed in the optical-axis direction or from above. For example, the third capacitor 290C may be disposed between the second coil unit 130-2 and the third coil unit 230-3 when viewed in the optical-axis direction or from above.

For example, the first capacitor 290A may be disposed between a first side of the upper surface of the first board unit 255 (for example, the first circuit board 250) and the image sensor 810 (or the bore 250A in the first circuit board 250) when viewed in the optical-axis direction or from above. In another embodiment, the first capacitor may be disposed on the first corner of the upper surface of the first board unit 255 (for example, the first circuit board 250).

For example, the second capacitor 290B may be disposed between a second side of the upper surface of the first board unit 255 (for example, the first circuit board 250) and the image sensor 810 (or the bore 250A in the first circuit board 250) when viewed in the optical-axis direction or from above. In another embodiment, the second capacitor may be disposed on the second corner of the upper surface of the first board unit 255 (for example, the first circuit board 250).

For example, the third capacitor 290C may be disposed between a third side of the upper surface of the first board unit 255 (for example, the first circuit board 250) and the image sensor 810 (or the bore 250A in the first circuit board 250) when viewed in the optical-axis direction or from above. In another embodiment, the third capacitor may be disposed on the third corner of the upper surface of the first board unit 255 (for example, the first circuit board 250).

Referring to FIG. 18, for example, the first capacitor 290A may not overlap the first magnet 130-1 in the optical-axis direction, the second capacitor 290B may not overlap the second magnet 130-1 in the optical-axis direction, and the third capacitor 290C may not overlap the third magnet 130-3 in the optical-axis direction.

In another embodiment, a portion of the first capacitor 290A may overlap one end of the first magnet 130-1 in the optical-axis direction, a portion of the second capacitor 290B may overlap one end of the second magnet 130-2 in the optical-axis direction, and the third capacitor 290C may overlap one end of the third magnet 130-3 in the optical-axis direction.

For example, the controllers 830 and 780 may control rolling of the OIS moving unit using at least one of the first output voltage of the first sensor 240A, the second output voltage of the second sensor 240B and the third output voltage of the third sensor 240C. For example, the controllers 830 and 780 may control rolling of the OIS moving unit using the first output voltage and the third output voltage.

For example, the controller 830 and 780 may control or adjust movement or displacement of the OIS moving unit in the first horizontal direction (for example, in the y-axis direction) or in the second horizontal direction (for example, in the x-axis direction) using at least one of the first to third output voltages. For example, the controllers 830 and 780 may control or adjust movement or displacement of the OIS moving unit in the first horizontal direction (for example, in the y-axis direction) using the first output voltage of the first sensor 240A, and may control or adjust movement or displacement of the OIS moving unit in the second horizontal direction using the second output voltage of the second sensor 240B.

Each of the first to third sensors 240A, 240B and 240C may be a Hall sensor. In another embodiment, each of the first to third sensors may be a driver IC including a Hall sensor. In a further embodiment, each of the first and second sensors 240A and 240B may be a Hall sensor, and the third sensor 240C may be a tunnel magnetoresistance (TMR) sensor. Here, the tunnel magnetoresistance (TMR) sensor may be a TMR magnetic angle sensor.

In still a further embodiment, each of the first to third sensors 240A, 240B and 240C may be a tunnel magnetoresistance (TMR) sensor. Here, the TMR sensor may be a TMR linear magnetic field sensor in which the output according to displacement (or stroke) of the OIS moving unit is linear.

The base 210 may be disposed below the first board unit 255. The base 210 may be spaced apart from the first board unit 255. The base 210 may have a polygonal shape, for example, a quadrilateral shape, which coincides with or corresponds to the cover member 300 or the first board unit 255.

For example, the base 210 may have the bore 210A which corresponds to or faces the first board unit 255. The bore 210A in the base 210 may be a through hole which is formed through the base 210 in the optical-axis direction. In another embodiment, the base may not have the bore.

For example, the base 210 may be coupled to the side plate 302 of the cover member 300. The side portion or the outer surface of the base 210 may include a step 211 (see FIG. 14) to which an adhesive is applied when the side portion or the outer surface is bonded to the side plate 302 of the cover member 300. Here, the step 211 may guide the side plate 302 of the cover member 300 which is coupled to the upper side thereof. The step 211 of the base 210 and the lower end of the side plate 302 of the cover member 300 may be bonded or fixed to each other using an adhesive or the like.

The base 210 may include one or more projections 216A and 216B projecting from the upper surface thereof. For example, the projections 216A and 216B may project upwards from the outer surface of the base 210. For example, the base 210 may include two projections 216A and 216B which face or overlap each other in the first horizontal direction (for example, in the y-axis direction).

For example, the base 210 may include four side portions (or side plates), and the projections 216A and 216B may be formed at two of the four side portions. For example, the projections 216A and 216B may be disposed or positioned in the center of the side portion (or the side plate) of the base 210.

The base 210 may include a groove 341B. The groove 341b may be an adhesive-receiving groove. The groove 341b may be formed in the outer surface of a corresponding one of the projections 216A and 216B of the base 210. The groove 341b may be formed in the upper surface of a corresponding one of the projections 216A and 216B of the base 210. The groove 341b may be formed from the upper surface to the lower surface of a corresponding one of the projections 216A and 216B. An adhesive may be disposed in the groove 341b in order to bond the support board 310 to the base 210. The groove 341b may include a plurality of a plurality of grooves. For example, the groove 341b may extend in the optical-axis direction. In another embodiment, the groove formed in a corresponding one of the projections 216A and 216B of the base 210 may extend in a direction perpendicular to the optical axis.

The second board unit 800 may be coupled to the base 210. The second board unit 800 may be disposed on the base 210.

For example, the second board unit 800 may be disposed below the base 210. For example, the second board unit 800 may be disposed so as to be spaced apart from the OIS moving unit, for example, the first board unit 255 and the first heat radiating member 280 in the optical-axis direction. For example, the second board unit 800 may be disposed bellow the lower surface of the base 210. The second board unit 800 may be coupled to the base 210. The second board unit 800 may be coupled to the base 210. For example, the second board unit 800 may be coupled to the lower surface of the base 210.

The second board unit 800 may serve to supply a signal to the image sensor unit 350 from the outside or to output the signal transmitted from the image sensor unit 350 to the outside.

The second board unit 800 may include a first region 801 (or a first board), which corresponds to, faces or overlaps the AF operation unit 100 or the image sensor 810 in the optical-axis direction, a second region 802 (or a second board) on which a connector 804 is disposed, and a third region 803 (or a third board) connecting the first region 801 to the second region 802. The connector 804 may include a port which is to be conductively connected both to the second region 802 of the second board unit 800 and to an external device (for example, the optical instrument 200A). The bore 210A in the base 210 may be closed or blocked by the first region 801 of the second board unit 800.

The first region 801 of the second board unit 800 may correspond to, face or overlap at least one of the cover member 300 or the base 210 in the optical-axis direction. For example, the first region 801 may overlap the upper plate 301 and the side plate 302 of the cover member 300 in the optical-axis direction.

Each of the first region 801 and the second region 802 of the second board unit 800 may include a rigid substrate. The third region 803 may include a flexible substrate. Each of the first region 801 and the second region 802 may further include a flexible substrate.

In another embodiment, at least one of the first to third regions 801 to 803 of the second board unit 800 may include at least one of a rigid substrate or a flexible substrate.

The second board unit 800 may be disposed behind the first board unit 255. For example, the first board unit 255 may be disposed between the AF operation unit 100 and the second board unit 800. In another embodiment, the second board unit may be disposed between the AF operation unit and the first board unit.

Although the first region 801 of the second board unit 800 may have a polygonal shape (for example, a quadrilateral shape, a square shape or a rectangular shape) when viewed from above, the disclosure is not limited thereto. In another embodiment, the first region 801 may have a circular shape or the like.

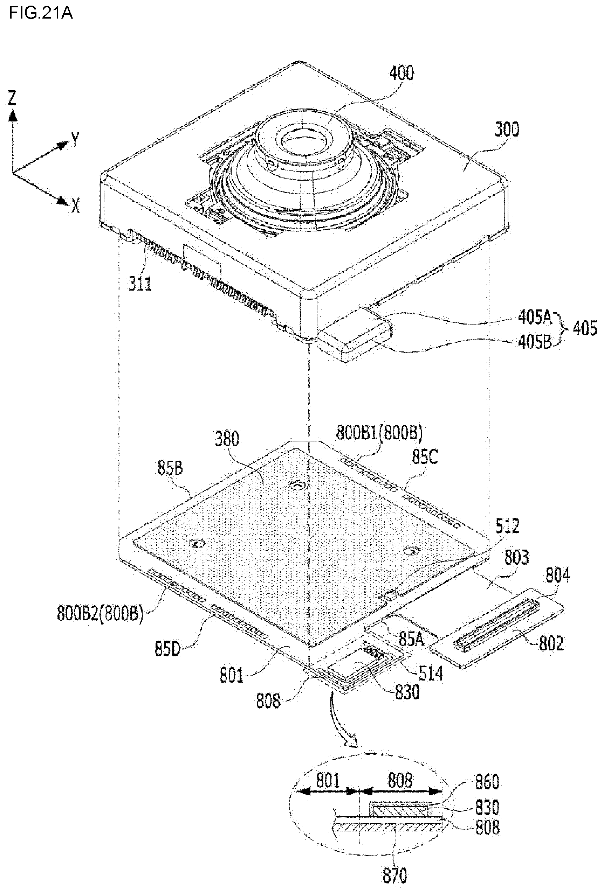

FIG. 21A illustrates disposition of the first to third regions 801 to 803 of the second board unit 800, an extension region 808, the AF moving unit, the OIS moving unit, and the controller 830 according to an embodiment.

Referring to FIG. 21A, the first region 801 may include four side portions 85A to 85D (or side surfaces). For example, the first region 801 may include first and second side portions 85A and 85B, which face each other or are opposed to each other in the second horizontal direction (for example, in the x-axis direction), and third and fourth side portions 85C and 85D, which face each other or are opposed to each other in the first horizontal direction (for example, in the y-axis direction).

The second region 802 may be disposed adjacent to the first side portion 85A of the first region 801, and the third region 803 may be connected to the first side portion 85A of the first region 801. For example, the third region 803 may extend from the first region 801 and may be connected to one side of the second region 802 that is opposed to the first side portion 85A. For example, the third region 803 may be spaced apart from the extension region 808.

The second board unit 800 may include a plurality of terminals 800B corresponding to terminals 311 of the support board 310. The plurality of terminals 800B may be formed in the first region 801 of the second board unit 800. For example, the second board unit 800 may include first terminals 800B1, which are disposed or arranged so as to be spaced apart from each other along one side of the third side portion 85C of the first region 801 in the second horizontal direction (for example, in the x-axis direction), and second terminals 800B2, which are disposed or arranged so as to be spaced apart from each other along one side of the fourth side portion 85D of the first region 801 in the second horizontal direction.

For example, the plurality of terminals 800B may be formed on a first surface (for example, the upper surface) of the second board unit 800 (for example, the first region 801) which faces the first board unit 255.

For example, the controller 830 may be disposed on the extension region which extends from one of the third and fourth side portions 85C and 85D of the first region 801 of the second board unit 800. In another embodiment, the controller may be disposed on the extension region which extends from the side portion of the first region 801 of the second board unit 800 on which the plurality of terminals are formed.

The first region 801 may have formed therein a coupling hole (not shown), and the base 210 may have formed thereon a coupling protrusion (not shown) to be coupled to the coupling hole in the first region 801.

The camera device 10 may further a second heat radiating member 380 which is disposed, coupled or fixed to the second board unit 800. For example, the second heat radiating member 380 may be disposed on, coupled or fixed to the upper surface of the first region 801 of the second board unit 800. In another embodiment, the second heat radiating member 380 may be omitted.

The camera device 10 may further include a third radiating member (not shown) which is disposed on, coupled or fixed to a second surface (for example, the lower surface) of the second board unit 800.

For example, the second heat radiating member 380 may be a plate-shaped member having predetermined thickness and hardness. The second heat radiating member 380 may face or overlap the first heat radiating member 280 in the optical-axis direction.

Although the controller 830 is disposed or coupled to the upper surface of the extension region 808 in FIG. 21A, the controller may also be disposed or coupled to the lower surface of the extension region 808 in another embodiment.

Although the controller 830 is disposed on the extension region 808 of the second board unit 800 which is positioned outside the cover member 300 in FIG. 21A, the controller may also be disposed in the first region of the second board unit 800 which is positioned outside the base 210 in another embodiment.

In a further embodiment, the controller may be disposed or mounted on the second circuit board 260 which is a sensor board. In another embodiment, for example, the controller may be disposed or mounted on the upper surface of the second circuit board 260. Because the heat radiating member 280 is disposed on or coupled to the lower surface of the second circuit board 260, when the controller is disposed on the second circuit board 260, the heat generated by the controller may be easily radiated by means of the heat radiating member 280, thereby improving heat radiation efficiency and radiating performance.

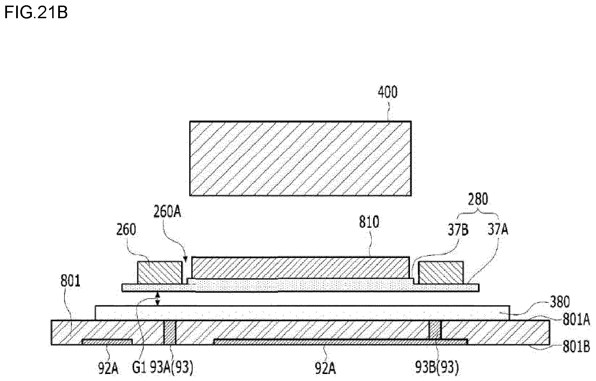

FIG. 21B is a schematic cross-sectional view of the lens module 400, the first board unit 255, the image sensor 810, the first heat radiating member 280, the second board unit 800, and the second heat radiating member 380 shown in FIG. 10A.

Referring to FIG. 21B, the image sensor 810 may be disposed in the bore 260A (or the hole) in the second circuit board 260, and may be coupled to the first heat radiating member 280.

For example, the first heat radiating member 280 may include a body 37A, which is disposed below the second circuit board 260, and a projection 37B (or a projection region), which is disposed in the bore 260A in the second circuit board 260.

The image sensor 810 may be disposed, couple or fixed to the projection 37B. For example, the image sensor 810 may be disposed, coupled or attached to the upper surface of the projection 37B. For example, the upper surface of the projection 37B may be positioned lower than the upper surface of the second circuit board 260. In another embodiment, the upper surface of the projection 37B may be flush with the upper surface of the second circuit board 260.

The second heat radiating member 380 may be disposed on the first surface 801A (or the upper surface) of the first region 801 of the second board unit 800 which faces the first heat radiating member 280 in the optical-axis direction.

The distance G1 (or the gap) between the first board unit 255 and the second board unit 800 in the optical-axis direction may be 0.05 mm to 0.7 mm. For example, the distance G1 may be the distance between the lower surface of the first heat radiating member 280 and the upper surface of the second heat radiating member 380.

In another embodiment, the distance G1 may be 0.15 mm to 0.5 mm. In a further embodiment, the distance G1 may be 0.15 mm to 0.3 mm. In still a further embodiment, the distance G1 may be 0.2 mm to 0.3 mm.

The second board unit 800 may include a first conductive layer 93 which is exposed from the first surface 801A and is in contact with the second heat radiating member 380, for example, the lower surface of the second heat radiating member 380. For example, the first conductive layer 93 may be heat-fused to the lower surface of the second heat radiating member 380 or may be coupled to the lower surface of the second heat radiating member 380 using a conductive adhesive, for example, solder or the like. For example, the first conductive layer 93 may be conductively connected to the second heat radiating member 380.

The second board unit 800 may include a second conductive layer 92A which is connected to the first conductive layer 93 and is exposed from the second surface 801B (or the lower surface) of the second board unit 800 that is the surface opposite the first surface 801A of the second board unit 800. For example, the second conductive layer 92A may be conductively connected to the ground of the second board unit 800.

The first conductive layer 93 may be a via which is formed through at least a portion of the second board unit 800. For example, the first conductive layer 93 may include a first via 93A which is formed through the second board unit 800 and is open or exposed at the second surface 801B of the second board unit 800. Furthermore, the first conductive layer 93 may include a second via 93B one end of which is in contact with the lower surface of the second heat radiating member 380 and the other end of which is in contact with or coupled or connected to the second conductive layer 92A.

In FIG. 21B, the second conductive layer 92A may be disposed in or coupled or attached to a groove formed in the second surface 801B of the second board unit 800. In another embodiment, the second conductive layer may be disposed in or coupled or attached to the second surface 801B of the second board unit 800 without the groove formed in the second surface 801B.

The first conductive layer 93 and the second conductive layer 92A may serve as radiating patterns or radiating pads for heat radiation of the second board unit 800. In other words, because the first conductive layer 93 and the second conductive layer 92A are merely intended to radiate heat, they may not be conductively connected to other wires of the second board unit 800 except for the ground of the second board unit 800. Here, the other wires may be wires conductively connected to an electronic element (or a circuit element), such as the image sensor 810, or the support board 310.

The second conductive layer 92A may be conductively connected to the cover member 300 (for example, the side plate 302) via solder, a conductive adhesive or conductive tape. In another embodiment, the second conductive layer 92A, which is connected to the ground of the second board unit 800, may be conductively connected to the cover member 300 by means of a bracket. The bracket may be a structure which receives or accommodates the camera device therein in order to protect the camera device. For example, the bracket may be made of a conductive member. Since the ground of the second board unit 800 and the second heat radiating member 380 are conductively connected to the cover member 300, it is possible to protect the camera device 10 from static electricity and to improve efficiency of heat radiation.

In another embodiment, the first conductive layer and the second conductive layer of the second board unit 800 may be applied to the second circuit board 260 with or without modification. For example, the second circuit board 260 according to another embodiment may include at least one third conductive layer which is in contact with the first heat radiating member 280, and at least a portion of the third conductive layer may be exposed from the second circuit board 260.

Since the second heat radiating member 380 is disposed on the first surface of the second board unit 800, it is possible to reduce the distance between the first heat radiating member 280 and the second heat radiating member 380 and thus to improve efficiency of heat radiation.

The heat radiated from the first heat radiating member 280 may be transmitted to the second heat radiating member 380 through convection or radiation, and the transmitted heat may be radiated to the outside through the second heat radiating member 380, thereby improving efficiency of heat radiation. Since the upper surface of the second heat radiating member 380 and the lower surface of the first heat radiating member 280 are disposed so as to face or overlap each other in the optical-axis direction, heat may be efficiently transmitted to the second heat radiating member 380 from the first heat radiating member 280.

For example, the first heat radiating member 280 and the second heat radiating member 380 may be made of the same material. In another embodiment, the first heat radiating member 280 and the second heat radiating member 380 may be made of different materials. For example, the thermal conductivity of the first heat radiating member 280 may be applied to the second heat radiating member 380 with or without modification.

The second heat radiating member 380 may stably support the second board unit 800, and may serve as a reinforcing member configured to suppress breakage of the second board unit 8900 attributable to external shock or contact.

In another embodiment, the second heat radiating member 380 may be made of a radiating member having high thermal conductivity, for example, exothermic epoxy, exothermic plastic, or exothermic synthetic resin.

The second heat radiating member 380 may include at least one groove or unevenness in order to improve efficiency of radiation. For example, a groove or unevenness having a predetermined pattern may be formed on at least one of the upper surface or the lower surface of the second heat radiating member 380.

In another embodiment, the second heat radiating member 380 may have a hole or a through hole in place of the groove. For example, the second heat radiating member according to another embodiment may have a plurality of through holes. The description of the predetermined pattern of the first heat radiating member 280 may be applied to the second heat radiating member 380 with or without modification.

The camera device according to another embodiment may include a radiating member disposed below the second board unit 800. Here, the description of the heat radiating member 280 or the radiating member 1450 to be described later may be applied to the heat radiating member according to another embodiment with or without modification.

The support board 310 may support the OIS moving unit such that the OIS moving unit is movable relative to the stationary unit in a direction perpendicular to the optical-axis direction, and may conductively connect the first board unit 255 to the second board unit 800.

The support board 310 may alternatively be referred to as a "support unit", a "support member", a "connecting board", or a "connecting portion". Alternatively, the support board 310 may alternatively be referred to as an "interposer". Alternatively, the interposer may include the first circuit board 250 and the support board 310 which are integrally formed.

In another embodiment, in place of the support board 310, a support unit, which is connected at one end thereof to the moving unit, for example, the first board unit 255 and at the other end thereof to the stationary unit, for example, the second board unit 800, may be provided. Here, the support unit may include at least one of a leaf spring or a suspension wire. For example, the support unit may conductively connect the first board unit 255 to the second board unit 800.

The support board 310 may include a flexible substrate or may be a flexible board. For example, the support board 310 may include a flexible printed circuit board (FPCB). At least a portion of the support board 310 may be flexible. The first circuit board 250 may be connected to the support board 310.

Referring to FIG. 16, for example, the support board 310 may include a connecting portion 320 connected to the first circuit board 250. For example, the first circuit board 250 and the support board 310 may be integrally formed. In another embodiment, the first circuit board 250 and the support board 310 may not be integrally formed but may be separately formed. The first circuit board 250 and the support board 310 may be connected to each other via the connecting portion 320, and may be conductively connected to each other. In another embodiment, the connecting portion 320 may be integrally formed with at least one of the support board 310 or the first circuit board 250.

The support board 310 may be conductively connected to the first circuit board 250. The support board 310 may be conductively connected to the second board unit 800. For example, one end of the support board 310 may be connected or linked to the first board unit 255 (for example, the first circuit board 250). The other end of the support board 310 may be connected or linked to the second board unit 800.

The support board 310 may support the OIS moving unit with regard to the stationary unit. The support board 310 may guide movement of the OIS moving unit. The support board 310 may guide the OIS moving unit such that the OIS moving unit is movable in a direction perpendicular to the optical-axis direction. The support board 310 may guide the OIS moving unit such that the OIS moving unit is rotated, tilted or rolled relative to the optical axis. The support board 310 may restrict movement of the OIS moving unit in the optical-axis direction.

A portion of the support board 310 may be coupled, attached or fixed to the base 210 which is the stationary unit, and another portion of the support board 310 may be coupled, attached or fixed to the holder 270 which is the OIS moving unit. For example, the bodies 86 and 87 of the support board 310 may be coupled to the projections 216A and 216B of the base 210 and the projections 27A and 27B of the holder 270. Terminal portions 7A to 7D of the support board 310 may be coupled to the terminals 800B of the second board unit 800, and may be conductively connected thereto.

A portion of the support board 310 may be coupled, attached or fixed to the base 210 which is the stationary unit. The support board 310 may include a circuit member 310A. The support board 310 may further include an elastic portion 310B coupled to the circuit member 310A. The elastic portion 310B, which is intended to flexibly support the OIS moving unit, may be embodied as an elastic body, for example, a spring. The elastic portion 310B may include metal or may be made of an elastic material. The circuit member, which is intended to conductively connect the first circuit board 250 to the second board unit 800, may be a flexible board or may include at least one of a flexible board or a rigid board. For example, the circuit member may be a flexible printed circuit board (FPCB).

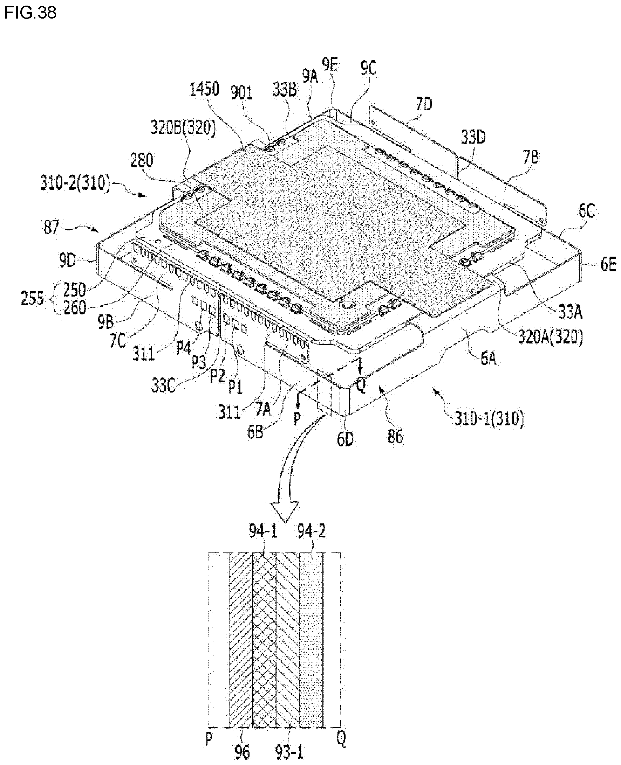

Referring to FIG. 38, the support board 310 according to another embodiment may include a conductive layer 93-1 and insulating layers 94-1 and 94-2. Here, the support board 310 may not include a radiating member 96 shown in FIG. 38. In another embodiment, the support board 310 may further include a protective layer which is disposed on at least one of the first insulating layer 94-1 and the second insulating layer 94-2. Here, the protective layer may be made of polyethylene terephthalate (PET). In another embodiment, the protective layer may be an EMI (electromagnetic interference)-shielding member, for example, a piece of EMI-shielding tape.

The support board 310 may be conductively connected to the first board unit 255 (for example, the first circuit board 250), and may include one or more connecting portions 320A and 320B which are conductively connected to the first board unit 255 (for example, the first circuit board 250). Furthermore, the support board 310 may be connected to the second board unit 800, and may include one or more terminal portions 7A to 7D which are conductively connected to the second board unit 800. Each of the one or more terminal portions 7A to 7D may include a plurality of terminals 311.

The terminal portions 7A to 7D may alternatively be referred to as "extending portions", "projecting portions", or "leg portions".

The support board 310 may include the bodies 86 and 87. Furthermore, the support board 310 may include an extension (for example, the terminal portions 7A to 7D) which extends from the bodies 86 and 87.

The support board 310 may have at least one hole 38B which is formed in at least one of the terminal portions 7A to 7D and the bodies 86 and 87. For example, the hole 38B may be a through hole.

For example, the terminal portions 7A to 7D may be fixed, coupled or attached to the stationary unit (for example, the base 210). The bodies 86 and 87 may include a first region, which is coupled to the moving unit (for example, the first board unit 255), and a second region, which is coupled to the stationary unit (for example, the base 210). In other words, the second region of the bodies 86 and 87 may be immovable and the first region of the bodies 86 and 87 may be movable during OIS operation. For example, the first region of the bodies 86 and 87 may include the connecting portion 320.

The base 210 may include at least one protrusion 38A to be coupled to the hole 38B in the support board 310. For example, the protrusion 38A may be disposed on the projections 216A and 216B of the base 210.

For example, the support board 310 may include a first support board 310-1 and a second support board 310-2 which are spaced apart from each other. The first and second support boards 310-1 and 310-2 may be line-symmetrically formed. In another embodiment, the first support board 310-1 and the second support board 310-2 may be integrally formed into a single board. In a further embodiment, the support board 310 may include three or more support boards.

The first and second support boards 310-1 and 310-2 may be disposed at opposite sides of the first circuit board 250. For example, the first support board 310-1 may include the first body 86 and one or more terminal portion 7A and 7B which extend from the first body 86. At least one of the terminal portions 7A and 7B of the first support board 310-1 may include a plurality of terminals 311.

The second support board 310-2 may include the second body 87 and one or more terminal portions 7C and 7D which extend from the second body 87. At least one of the terminal portions 7C and 7D of the second support board 310-2 may include a plurality of terminals 311.

The first circuit board 250 may include a first side portion 33A and a second side portion 33B, which are positioned so as to be opposed to each other, and a third side portion 33C and a fourth side portion 33D, which are positioned between the first side portion 33A and the second side portion 33B and are positioned so as to be opposed to each other.

For example, the first connecting portion 320A may connect the first body 86 to the first side portion 33A of the first circuit board 250, and the second connecting portion 320B may connect the second body 87 to the second side portion 33B of the first circuit board 250.

The first body 86 may include a first portion 6A, which corresponds to or faces the first side portion 33A of the first circuit board 250, a second portion 6B, which corresponds to a portion (or one side) of the third side portion 33C of the first circuit board 250, and a third portion 6C, which corresponds to a portion (or one side) of the fourth side portion 33D of the first circuit board 250. Furthermore, the first body 86 may include a first bent portion 6D, which connects one end of the first portion 6A to the second portion 6B and is bent at the one end of the first portion 6A, and a second bent portion 6E, which connects the other end of the first portion 6A to the third portion 6C and is bent at the other end of the first portion 6A.

For example, the first support board 310-1 may include the first terminal portion 7A and the second terminal portion 7B. For example, the first terminal portion 7A may extend or project toward the second board unit 800 from the second portion 6B of the first body 86, and the second terminal portion 7B may extend or project toward the second board unit 800 from the third portion 6C of the first body 86. The second terminal portion 7B may be positioned at the opposite side of the first terminal portion 7A with the first board unit 255 (for example, the first circuit board 250) interposed therebetween.

For example, the first connecting portion 320A may connect the first portion 6A of the first body 86 to the first side portion 33A of the first circuit board 250. The first connecting portion 320A may include a bent portion.

The second body 87 may include a first portion 9A, which corresponds to or faces the second side portion 33B of the first circuit board 250, a second portion 9B, which corresponds to or faces another portion (or the other side) of the third side portion 33C of the first circuit board 250, and a third portion 9C, which corresponds to or faces another portion (or the other side) of the fourth side portion 33D of the first circuit board 250. Furthermore, the second body 87 may include a first bent portion 9D, which connects one end of the first portion 9A to the second portion 9B and is bent at the one end of the first portion 9A, and a second bent portion 9E, which connects the other end of the first portion 9A to the third portion 9C and is bent at the other end of the first portion 9A.

For example, the second support board 310-2 may include the third terminal portion 7C and the fourth terminal portion 7D. The third terminal portion 7C may extend or project toward the second board unit 800 from the second portion 9B of the second body 87, and the fourth terminal portion 7D may extend or project toward the second board unit 800 from the third portion 9C of the second body 87. The fourth terminal portion 7D may be positioned at the opposite side of the third terminal portion 7C with the first board unit 255 (for example, the first circuit board 250) interposed therebetween.

For example, the second connecting portion 320B may connect the first portion 9A of the second body 87 to the second side portion 33B of the first circuit board 250. The second connecting portion 320B may include a bent portion.

The terminal portions (for example, 7A and 7C) of the support board 310 may be provided with terminals P1 to P4 which are to be conductively connected to the terminals B1 to B4 of the terminal portion 95 of the circuit board 190 of the AF operation unit 100. The terminals B1 to B4 of the terminal portion 95 of the circuit board 190 may be conductively connected to the terminals P1 to P4 of the terminal portions 7A and 7B of the support board 310 using solder or a conductive adhesive. In other words, the circuit board 190 of the AFD operation unit 100 may be conductively connected to the second board unit 800 via the support board 310.

Referring to FIG. 16, the circuit member 310A of the support board 310 may include a first insulating layer 29A, a second insulating layer 29B, and a conductive layer 29C formed between the first insulating layer 29A and the second insulating layer 29B. The conductive layer 29C may be a wiring layer for transmitting an electrical signal. For example, the second insulating layer 29B may be positioned outside the first insulating layer 29A.

Each of the first and second insulating layers 29A and 29B may be made of an insulating material, for example, polyimide, and the conductive layer 29C may be made of a conductive material, for example, copper, gold or aluminum, or may be made of alloy including copper, gold or aluminum.

The elastic portion 310B of the support board 310 may be disposed on the second insulating layer 29B. The elastic portion 310B may include at least one of copper, titanium or nickel or may be made of alloy including at least one of copper, titanium or nickel in order to serve as a spring. For example, the elastic portion 310B may be made of alloy of copper and titanium or alloy of copper and nickel.

The elastic portion 310B may be conductively connected to the ground of the first board unit 255 or the second board unit 800. The elastic portion 310B may be used in impedance matching of transmission lines (or wires) of the board units 255, 310 and 800, and may reduce loss of a transmission signal through impedance matching, thereby reducing influence of noise. For example, the matching impedance may be 40 ohm to 600 ohm. For example, the matching impedance may be 50 ohm. For example, an EMI member (for example, a piece of EMI tape) or a conductive member (for example, a piece of conductive tape) may be used for impedance matching.

The support board 310 may include a metal member or a conductive member provided on the outer surface thereof. For example, the metal member may be an EMI member (for example, a piece of EMI tape) or a conductive member (for example, a piece of conductive tape). For example, the EMI member or the conductive member may be disposed on or attached to at least one of the elastic portion 310B or the circuit member 310A. The support board 310 may further include a protective material or an insulating material which surrounds or covers the elastic portion 301B.

FIG. 17A is a first perspective view of the support board 310 coupled both to the holder 270 and to the base 210. FIG. 17B is a second perspective view of the support board 310 coupled both to the holder 270 and to the base 210.

Referring to FIGs. 17A and 17B, the holder 270 may include first to fourth side portions 64A to 64D (see FIG. 19A) which correspond to or face the first to fourth side portions 33A to 33D of the first circuit board 250.

The first and second side portions 64A and 64B of the holder 270 may be opposed to each other or may be disposed at opposite sides in the second horizontal direction (for example, in the x-axis direction). Furthermore, the third and fourth side portions 64C and 64D of the holder 270 may be opposed to each other or may be positioned at opposite sides in the first horizontal direction (for example, in the y-axis direction).

At least a portion of the support board 310 may be attached or coupled to the holder 270. For example, at least one of the connecting portions 320A and 320B of the support board 310 may be coupled to at least one of the first to fourth side portions 64A to 64D of the holder 270 using an adhesive. For example, the first connecting portion 320A may be coupled, attached or fixed to the first side portion 64A of the holder 270 using an adhesive, and the second connecting portion 320B may be coupled, attached or fixed to the second side portion 64B of the holder 270.

The first side portion 64A of the holder 270 may be provided with the first projection 27A, and the second side portion 64B of the holder 270 may be provided with the second projection 27B.

The support board 310 may be coupled, attached or fixed to the projections 27A and 27B of the holder 270. The support board 310 may be coupled, attached or fixed to the outer surfaces (or the inner surfaces) of the projections 27A and 27B of the holder 270.

For example, a portion of the support board 310 may be coupled, attached or fixed to the first projection 27A and the second projection 27B of the holder 270. The bodies 86 and 87 of the support board 310 may be coupled, attached or fixed to the first and second projections 27A and 27B of the holder 270.

For example, the first support board 310-1 may be coupled, attached or fixed to the first projection 27A, and the second support board 310-2 may be coupled, attached or fixed to the second projection 27B. For example, the first portion 6A of the first body 86 may be coupled, attached of fixed to the outer surface (or the inner surface) of the first projection 27A, and the first portion 9A of the second body 87 may be coupled, attached or fixed to the outer surface (or the inner surface) of the second projection 27B.

The base 210 may include first to fourth side portions 65A to 65D (see FIG. 14) which correspond to or face the first to fourth side portions 33A to 33D of the first circuit board 250. The first to fourth side portions 65A to 65D of the base 210 may correspond to or face the first to fourth side portions 64A to 64D of the holder 270.

The first and second side portions 65A and 65B of the base 210 may face each other or may be disposed at opposite sides in the first horizontal direction (for example, in the y-axis direction). Furthermore, the third and fourth side portions 65C and 65D of the base 210 may face each other or may be disposed at opposite sides in the second horizontal direction (for example, in the x-axis direction).

At least a portion of the support board 310 may be coupled, attached or fixed to the base 210. For example, the bodies 86 and 87 of the support board 310 may be coupled to the base 210 using an adhesive. For example, portions of the bodies 86 and 87 of the support board 310, which are connected to the terminal portions 7A to 7D, may be coupled to the base 210.

For example, at least a portion of the support board 310 may be coupled, attached or fixed to the projections 216A and 216B formed on the base 210. For example, the support board 310 may be coupled, attached or fixed to the outer surfaces (or the inner surfaces) of the projections 216A and 216B of the base 210. The first projection 216A may be formed on the third side portion 65C of the base 210, and the second projection 216B may be formed on the fourth side portion 65D of the base 210.

For example, the bodies 86 and 87 of the support board 310 may be coupled, attached or fixed to the first and second projections 216A and 216B of the base 210.

For example, one end (for example, the second portion 6B) of the first support board 310-1 may be coupled, attached or fixed to one area of the first projection 216A of the base 210, and the other end (for example, the third portion 6C) of the first support board 310-1 may be coupled, attached or fixed to one area of the second projection 216B of the base 210.

For example, one end (for example, the second portion 9B) of the second support board 310-2 may be coupled, attached or fixed to another area of the first projection 216A of the base 210, and the other end (for example, the third portion 9C) of the second support board 310-2 may be coupled, attached or fixed to another area of the second projection 216B of the base 210.

A first coupling area 69A may be defined between the first body 86 of the first support board 310-1 and the first projection 27A, and a second coupling area 69B may be defined between the second body 87 of the second support board 310-2 and the second projection 27B of the holder 270.

Furthermore, a third coupling area 59A may be defined between one end of each of the first and second support boards 310-1 and 310-2 and the first projection 216A of the base 210. A fourth coupling area 59B may be defined between the other end of each of the first and second support boards 310-1 and 310-2 and the second projection 216B of the base 210.

By virtue of the support board 310 and the first to fourth coupling areas 69A, 69B, 59A and 59B, the OIS moving unit may be flexibly supported with regard to the stationary unit. The terminals 311 of the support board 310 may be coupled to and conductively connected to the terminals 800B of the second board unit 800 using solder 902 (see FIGs. 17A and 17B) or a conductive adhesive.

In another embodiment, for example, the support member may be an elastic member excluding the board, for example, a spring, a wire, shape-memory alloy or a ball member. For example, when the support member is made of a wire, a plurality of wires may be disposed on at least one of the corners and side portions of the base 210 or the second board unit 800 in order to connect the first board unit 255 (for example, the second circuit board 260) to the second board unit 800 (or the base 210). For example, one end of each of the plurality of wires may be coupled to the first board unit 255 (for example, the second circuit board 260), and the other end of each of the plurality of wires may be coupled to the second board unit 800 (or the base 210).

The image sensor unit 350 may include at least one of the controller 830, a memory 512 or a capacitor 514.

The controller 830 may be disposed so as to be spaced apart from the first board unit 255. For example, the controller 830 may be disposed on the second board unit 800.

The memory 512 may be disposed on one of the first board unit 255 and the second board unit 800. For example, the memory 512 may be disposed or mounted on the first region 801 of the second board unit 800. For example, the memory 512 may avoid spatial interference with the second heat radiating member 380 or may be spaced apart from the second heat radiating member 380. For example, the second heat radiating member 380 may include an escape groove or opening for avoiding spatial interference with the memory 512, and the memory 512 may be disposed in the escape groove or opening in the second heat radiating member 380. The capacitor 514 may be disposed on at least one of the first board unit 255 or the second board unit 800.

The memory 512 may store a first data value (or a code value) corresponding to the output of the second position sensor 240 according to displacement (or stroke) of the OIS moving unit in a direction perpendicular to the optical axis (for example, in the x-axis direction or in the y-axis direction) for OIS feedback operation. Furthermore, the memory 512 may store a first data value (or a code value) corresponding to the output of the first position sensor 170 according to displacement (or stroke) of the bobbin 110 I the first direction (for example, in the optical-axis direction or in the z-axis direction) for AF feedback operation.

For example, each of the first and second data values may be stored in the memory 512 in a look-up table format. Furthermore, the memory 512 may store a mathematical formula, an algorithm or a program for operation of the controller 830. For example, memory 512 may be a non-volatile memory, for example, an electrically erasable programmable read-only memory (EEPROM).

The capacitor 514 may include one or more capacitors 514A, 514B and 514C. One (for example, 514A) of the capacitors 514A, 514B and 514C may be connected or linked between one of one of the input terminals of the controller 830 and the ground. Another (for example, 514B) of the capacitors 514A, 514B and 514C may be connected between two of the input terminals of the controller 830. Here, the input terminals of the controller may be terminals through which drive power or drive voltage is input.

The remaining one (for example, 514C) of the capacitors 514A, 514B and 514C may be connected between the common input terminal of the first to third sensors 240A to 240C and the ground terminal.

For example, one end of the capacitor 514C may be connected or linked to the common input terminal of the first to third sensors 240A to 240C, and the other end of the capacitor 514C may be conductively connected or linked to the ground terminal of the capacitor 514C. The capacitors 514A, 514B and 514C may serve to stabilize power or input voltage applied to the input terminals of the controller 830. Furthermore, the capacitor 514C may serve to stabilize power or input voltage supplied to the input terminals of the first to third sensors 240A to 240C.

The controller 830 may be positioned outside of the cover member 300 or may be disposed on one region of the second board unit 800 which is positioned outside the cover member 300.

Referring to FIG. 21A, the second board unit 800 may include the extension region 808 which is connected to the first region 801 and extends therefrom. The extension region 808 may extend from the first side portion 85A of the first region 801. For example, the extension region 808 may project from the outer surface of the first side portion 85A of the first region. For example, the extension region 808 may project from the outer surface of the first side portion 85A of the first region. For example, the extension region 808 may extend or project in the second horizontal direction (for example, in the x-axis direction).

The extension region 808 may be positioned outside the cover member 300 or may be positioned at an outer side of the cover member 300.

The extension region 808 may alternatively be referred to as a "fourth region", a "projecting region", an "extension portion", or a "projecting portion". The extension region 808 may not overlap the AF moving unit and the OIS moving unit in the optical-axis direction. For example, the extension region 808 may extend in the same direction (for example, in the second horizontal direction) as the third region 803.

The controller 830 may be disposed in the extension region 808 of the second board unit 800. For example, the controller 830 may be disposed or mounted on the upper surface of the extension region 808 of the second board unit 800. In another embodiment, the controller 830 may be disposed or mounted on the lower surface of the extension region 808. For example, the controller 830 may not overlap the cover member 300 in the optical-axis direction. For example, the extension region 808 may not overlap the cover member 800 in the optical-axis direction.

For example, the surface area of the upper surface of the extension region 808 may be equal to or larger than the surface area of the lower surface of the controller 830.

Because the extension region 808 and the third region 803 are connected to the first side portion 85A of the second board unit 800, it is possible to reduce the surface area that is occupied by the camera device 10 in a direction perpendicular to the optical axis. Therefore, the embodiment is able to reduce increase in the size of the camera device 10 attributable to the extension region 808.

In another embodiment, the extension region may be connected to one of second to fourth side portions 85B, 85C and 85D of the first region 801 of the second board unit 800, and may project from one of the second to fourth side portions 85B, 85C and 85D of the first region 801.

The controller 830 may be positioned outside the cover member 300 or may be positioned at the outer side of the cover member 300. For example, the controller 830 may be positioned outside the space defined between the cover member 300, the base 210 and the first region 801 of the second board unit 800.

For example, the controller 830 may not overlap the lens module 400, the AF moving unit, the OIS moving unit, and the first region 801 of the second board unit 800 in the optical-axis direction. At least one capacitor 514 may be disposed or mounted on the upper surface of the extension region 808.

Because the OIS moving unit including the image sensor and the first board unit is disposed so as to be spaced apart from the stationary unit including the second board unit in a sensor-shift-type camera device in which the image sensor is moved for hand tremor correction, it may be insufficient to radiate heat generated by the OIS moving unit to the outside through the stationary unit. In addition, the sensor-shift-type camera device may have a structure in which the AF operation unit and the OIS operation unit are confined in the cover member in order to prevent malfunction caused by foreign substances, it may not be easy to radiate heat to the outside of the camera device.

The image sensor, the second coil, and the controller may correspond to the heat-generating source. Here, the "controller" may be a driver IC configured to control AF operation and/or OIS operation.

With increase in the sizes of the image sensor and the lens, the stroke (or the moving distance) of the OIS moving unit for compensating for the angle of hand tremor correction (see FIG. 1) may increase, current consumption of the second coil for OIS operation may increase, and the communication speed of the controller may increase. Therefore, an amount of heat generated by the heat-generating source may increase, and the temperature of the camera device may increase.

When all of the image sensor, the second coil and the controller, which are the heat-generating source, are disposed on the OIS moving unit (referred to hereinafter as "CASE 1"), the temperature of the camera device may increase due to the structure of the sensor-shift-type camera device which is insufficient to radiate heat as described above.

The increase in the temperature of the camera device may cause degaussing of the AF and OSI operation magnets and/or the sensing magnet, thereby causing error of the AF and OIS operation. Furthermore, the increase in temperature of the camera device may cause variation in output signal of the AF position sensor and the OIS position sensor. Consequently, accuracy and reliability of AF operation and OIS operation may be deteriorated.

In addition, the increase in temperature of the controller may cause increase in temperature of the image sensor, whereby image loss of the image sensor and quantitative and qualitative degradation of image quality may occur.

In the case in which a shape-memory ally member is used for hand tremor correction, the operating temperature of the shape-memory alloy member is about 100 to 110 °C whereas the temperature of the controller during operation of the controller may rise to 160 to 180 °C. Due to the increase in the temperature of the controller, the temperature of the shape-memory alloy member may exceed the range of operating temperature. Consequently, there may be a difficulty in control of the shape-memory alloy member. Furthermore, when the temperature of the shape-memory alloy member increases, the resistance of the shape-memory alloy member may decrease and the amount of current flowing through the shape-memory alloy member may increase, thereby causing damage to the shape-memory alloy member. Furthermore, when the temperature of the shape-memory alloy member increases, the length of the shape-memory alloy member may decrease, thereby causing decrease in the stroke of the OIS moving unit.

In an embodiment, the image sensor 810 and the second coil 230 may be disposed on the OIS moving unit which is positioned in the cover member 300, and the controller 830 may be disposed on the extension region 808 of the second board unit 255 which does not overlap the image sensor 810 in the optical-axis direction. Therefore, the controller 830, which is the heat-generating source, may be separated or spaced apart from the image sensor 810 with the cover member 300 and/or the base 210 interposed therebetween, and may be disposed far away from the image sensor 810.

Because the controller 830 is disposed outside the cover member 300 and the base 210, it is easy to radiate heat. In addition, because the controller, that is, the heat source and the image sensor 810 are separated or isolated from each other by means of the cover member 300 and the base 210, it is possible to remarkably reduce the influence of the heat generated by the controller 830 on the image sensor 810.

According to a result of simulation, the temperature of the image sensor in CASE 1 increases to 100 to 120 °C whereas the temperature of the image sensor 810 of the camera device 10 according to the embodiment is 65 to 80 °C. In comparison with CASE 1, the embodiment is able to lower the temperature of the image sensor 810 by 20 to 55 °C.

The camera device 10 may include a third radiating member 870 which is disposed, coupled or attached to the extension region 808 in order to improved efficiency of heat radiation. The third radiating member 870 may be in contact with the extension region 808. For example, the third radiating member 870 may be disposed below the extension region 808. For example, the third radiating member 870 may be disposed, coupled or fixed to the lower surface of the extension region 808. The third radiating member 870 may be a plate-shaped member, and the description of the material of the first heat radiating member 280 may be applied to the third radiating member 870 with or without modification. At least a portion of the third radiating member 870 may overlap the controller 830 in the optical-axis direction.

The camera device 10 may include a cover can 405 which is disposed in the extension region 808 and accommodates the controller 830 therein in order to protect the controller 830 from external shock. The cover can 405 may include an upper plate 405A and a side plate 405B which is connected to the upper plate 405A and extends toward the extension region 808 from the upper plate 405A.

The cover can 405 may be disposed, coupled or fixed to the upper surface of the extension region 808. For example, the lower portion, the lower end or the lower surface of the cover can 405 may be coupled, attached or fixed to the upper surface of the extension region 808.

Because the cover can 405 accommodates the controller 830 therein, it is possible to prevent the heat generated by the controller 830 from being radiated to the outside and being transmitted to the image sensor. The description of the material of the first heat radiating member 280 and the cover member 300 may be applied to the cover can 405 with or without modification.

The camera device 10 may further include a heat radiating layer 860 disposed on the controller 830. The heat radiating layer 860 may cover the surface of the controller 830. For example, the heat radiating layer 860 may be disposed so as to surround the surface of the controller 830. For example, the heat radiating layer 860 may be in contact with the upper surface and the side surface of the controller 830 so as to surround the surfaces. The heat radiating layer 860 may be made of exothermic plastic or radiating resin, for example, exothermic epoxy. The heat radiating layer 860 may improve efficiency and performance of heat radiation of the controller 830.

In another embodiment, the radiating layer may be disposed on at least one of the upper surface or the side surface of the controller 830. For example, the radiating layer may expose at least a portion of the controller 830.

The controller 830 may be conductively connected to the second position sensor 240. The controller 830 may adjust or control the drive signal supplied to the second coil 230 and may perform feedback OIS operation using the output signal received from the sensors 240A, 240B and 240C of the second position sensor 240 and the first data value stored in the memory 512.

Furthermore, the controller 830 may be conductively connected to the first position sensor 170. For example, when the first position sensor 170 is embodied as a Hall sensor alone, the first position sensor 170 may be conductively connected to the controller 830. Here, the controller 830 may control the drive signal supplied to the first coil 120 and thus perform feedback autofocusing operation using the output signal of the first position sensor 170 and the second data value stored in the memory 512.

Although the controller 830 may be embodied as a driver IC, the disclosure is not limited thereto. For example, the controller 830 may be conductively connected to the terminals 800B of the second board unit 800.

The controller 830 may control the first position sensor, which is embodied as a Hall sensor alone, and the second position sensor, which is embodied as a Hall sensor alone. For example, the controller 830 may supply a drive signal to the first position sensor, which is embodied as a Hall sensor alone, and/or the second position sensor, which is embodied as a Hall sensor alone, and may receive the output signal of the first position sensor and/or the output signal of the second position sensor.

In another embodiment, the first position sensor may be embodied as a Hall sensor alone, and the second position sensor may be embodied as a drive IC including a Hall sensor. Here, the controller 830 may be conductively connected to the first position sensor, may supply a drive signal to the first position sensor, and may receive the output signal from the first position sensor.

For example, the controller 830 may include a drive driver configured to drive at least one of the first position sensor or the second position sensor.

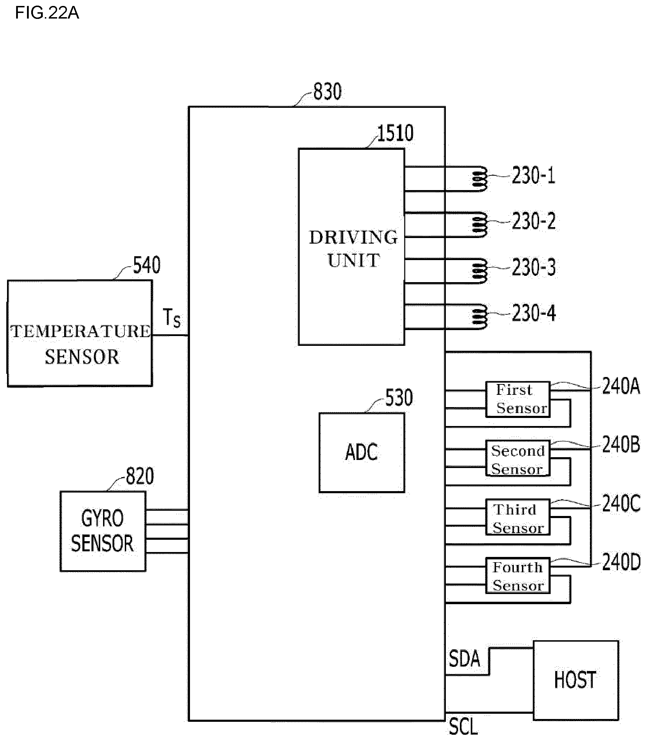

Referring to FIG. 22A, the image sensor unit 350 may further include a motion sensor 820 which is disposed on one of the first board unit 255 and the second board unit 800. The motion sensor 820 may be conductively connected to the controller 830. The motion sensor 820 may output rotational angular velocity information corresponding to movement of the camera device 10. For example, the motion sensor 820 may be a "gyro sensor". For example, the motion sensor 820 may be embodied as a biaxial or triaxial gyro sensor or an angular velocity sensor. For example, the motion sensor 820 may output information on amount of movement in the x-axis direction and the y-axis direction and an amount of rotation caused by movement of the camera device 10.

In another embodiment, the motion sensor may be omitted from the camera device 10. In the case in which the motion sensor is omitted from the camera device, the camera device 10 may receive position information about movement of the camera device 10 from the motion sensor provided at the optical instrument 200A.

The image sensor 350 may further include the filter 610 disposed between the lens module 400 and the image sensor 810. The image sensor unit 350 may further include a filter holder 600 in which the filter is disposed, seated or received. The filter holder 600 may alternatively be referred to as a "sensor base".

The filter 610 may serve to prevent or allow light of a specific frequency band in the light passing through the lens barrel 400 from being or to be incident on the image sensor 810. For example, the filter 610 may be an infrared-shielding filter. For example, the filter 610 may be disposed parallel to the x-y plane perpendicular to the optical axis OA. The filter 610 may be disposed below the lens module 400.

The filter holder 600 may be disposed under the AF operation unit 100. For example, the filter holder 600 may be disposed on the first board portion 255. For example, the filter holder 600 may be disposed on the upper surface of the second circuit board 260 of the first board unit 255.

The filter holder 600 may be coupled to one area of the second circuit board 260 around the image sensor 810 using an adhesive, and may be exposed through the bore 250A in the first circuit board 250. For example, the bore 250A in the circuit board 250 may expose the filter holder 600 disposed at the second circuit board 260 and the filter 610 disposed at the filter holder 600 therethrough. The filter holder 600 may have therein a bore 61A, which is formed in a region thereof in which the filter 610 is mounted or disposed, so as to allow the light that has passed through the filter 610 to enter the image sensor 810. The bore 61A in the filter holder 600 may be configured to have the form of a through hole, which is formed through the filter holder 600 in the optical-axis direction. For example, the bore 61A in the filter holder 600 may be formed through the center of the filter holder 600, and may be positioned so as to correspond to or face the image sensor 810.

The filter holder 600 may have a seating portion 500, in which the filter 610 is seated. The filter 610 may be disposed, seated or mounted in the seating portion 500. The seating portion 500 may be formed so as to surround the bore 61A. In another embodiment, the seating portion 500 of the filter holder 600 may be configured to have the form of a projection, which projects from the upper surface of the filter 610.

The image sensor unit 350 may further include an adhesive disposed between the filter 610 and the seating portion 500, and the filter 610 may be coupled or attached to the filter holder 600 via the adhesive.

In another embodiment, the filter holder may be coupled to the holder 270 or the AF operation unit 100.

Referring to FIG. 3, the cover member 300 may have the form of a box which is open at the lower portion thereof and includes the upper plate 301 and the side plate 302. The lower portion of the side plate 302 of the cover member 300 may be coupled to the base 210. The upper plate 301 of the cover member 300 may have a polygonal shape, for example, a quadrilateral shape or an octagonal shape. For example, the side plate 302 may include four side plates which are connected to each other. For example, the upper plate 301 of the cover member 300 may have formed therein a bore 303 through which the lens of the lens module 400 coupled to the bobbin 110 is exposed to external light.

Referring to FIGs. 1 and 3, the side plate 302 of the cover member 300 may have formed therein a groove 304 through which the terminal 95 of the circuit board 190 and the terminal 800B of the second board unit corresponding to the terminal 95 are exposed.

For example, the cover member 300 may be made of metal. For example, the cover member 300 may be made of SUS (steel use stainless, for example, SUS4 series). Furthermore, the cover member 300 may be made of steel plate cold commercial (SPC). For example, the cover member 300 may be made of SUS containing 50% or more of Fe. In order to prevent oxidization, antioxidizing metal, for example, nickel may be plated on the surface of the cover member 300. In another embodiment, for example, the cover member 300 may be made of a magnetic material or magnetic metal.

In a further embodiment, the cover member 300 may be made of an injection molding material, for example, plastic or resin. Furthermore, the cover member 300 may be made of an insulative material or a material capable of shielding electromagnetic waves.

The cover member 300 and the base 210 may accommodate therein the AF operation unit 100 and the OIS moving unit. The cover member 300 and the base 210 may protect the AF operation unit 100 and the OIS moving unit from external shock, and may prevent introduction of foreign substances from the outside.

For example, at the initial position of the OIS moving unit, the outer surface of the holder 270 may be spaced apart from the inner surface of the base 210 by a predetermined distance. For example, at the initial position of the OIS moving unit, the lower surfaces of the holder 270 and the first board unit 255 may be spaced apart from the base 210 by a predetermined distance.

The controller 830 may supply at least one drive signal to at least one of the first to fourth coil units 230-1 to 230-4, and may control the at least one drive signal to move the OIS moving unit in the x-axis direction and/or in the y-axis direction or to rotate, tilt or roll the OIS moving unit relative to the optical axis within a predetermined angle range.

FIG. 22A is a block diagram illustrating the configuration of the controller 830 and the first to third sensors 240A, 240B and 24C. The controller 830 may perform communication of transmitting and receiving data with respect to the host using a clock signal SCL and a data signal SDA, for example, I2C communication. For example, the host may be the controller 780 of the optical instrument 200A.

The controller 830 may be conductively connected to the second coil 230. The controller 830 may include a driving unit 1510 configured to supply a drive signal for driving the first to fourth coil units 230-1 to 230-4. For example, the driving unit 1510 may include an H bridge circuit or an H bridge driver capable of changing the polarity of the drive signal. Here, the drive signal may be a PWM signal for reduction of current consumption, and the drive frequency of the PWM signal may be 20 kHz or higher which exceeds an audible frequency range. In another embodiment, the drive signal may be a DC signal.

Each of the first to third sensors 240A, 240B and 240C may include two input terminals and two output terminals. The controller 830 may supply power or a drive signal to the two input terminals of each of the first to third sensors 240A to 240C. For example, first input terminals of the first to third sensors 240A to 240C may be connected to one another in common. For example, the two input terminals of each of the first to third sensors 240A to 240C may be a (+) input terminal and a (-) input terminal (for example, a ground terminal).

For example, the controller 830 may receive the first output voltage of the first sensor 240A, the second output voltage of the second sensor 240B and the third output voltage of the third sensor 240C, and may control movement (or displacement) of the OIS moving unit in the x-axis direction or in the y-axis direction using the received first to third output voltages. Furthermore, the controller 830 may control rotation, tilting or rolling of the OIS moving unit relative to the optical axis using the received first to third output voltages.

Furthermore, the controller 830 may include an analog-to-digital converter 530 configured to receive the output voltages output from the two output terminals of each of the first to third sensors 240A to 240C and to output data values, digital values or code values corresponding to the results of analog-to-digital conversion of the received output voltages. The controller 830 may control movement (or displacement) of the OIS moving unit in the x-axis direction or in the y-axis direction and rotation, tilting or rolling of the OIS moving unit relative to the optical axis.

A temperature sensor 540 may measure an ambient temperature (for example, the temperatures of the first to third sensors 240A, 240B and 240C), and may output a temperature detection signal corresponding to the result of the measurement. For example, the temperature sensor 540 may be a thermistor.

The resistance value of the resistor included in the temperature sensor 540 may vary according to an ambient temperature, and thus the value of the temperature detection signal Ts may vary according to an ambient temperature. A mathematical formula or a look-up table relating to an ambient temperature and the temperature detection signal Ts, which is established through calibration, may be stored in the memory or the controllers 830 and 780.

Because the output values of the first to third sensors 240A, 240B and 240C are also affected by temperature, it is necessary to compensate the output values of the first to third sensors 240A, 240B and 240C according to an ambient temperature for the purpose of accurate and reliable OIS feedback operation.

To this end, for example, the controllers 830 and 780 are able to compensate the output values (or data values corresponding to the output) of the first to third sensors 240A, 240B and 240C using the ambient temperature measure by the temperature sensor 540 and a temperature compensation algorithm or a compensation formula. The temperature compensation algorithm or the compensation formula may be stored in the controllers 830 and 780 and the memory 512.

The camera device may further include a fourth sensor 240D which corresponds to or faces the fourth magnet unit 130-4 in the optical-axis direction. The fourth sensor 240D may be disposed on the first board unit 255 (for example, the first circuit board 250). For example, the fourth sensor 240D may be disposed adjacent to one corner of the first circuit board 250 on which the first to third sensors 240A to 240C are not disposed. The description of the dispositional relationship between the first sensor 240A and the first coil unit 230-1 may be applied to the dispositional relationship between the fourth sensor 240D and the fourth coil unit 230-4 with or without modification.

For example, the fourth sensor 240D may be positioned so as to face the second sensor 240B in a diagonal direction. For example, the output voltage of the fourth sensor 240D may also be used in detection of movement of the OIS moving unit in the x-axis direction or in the y-axis direction. In another embodiment, the fourth sensor 240D may correspond to the first position sensor 170 of the AF operation unit 100.

The controller 830 may be conductively connected to the second coil 230 and the second position sensor 240 via the second board unit 800, the support board 310 and the first board unit 255.

In another embodiment, the controller 830 may be disposed on the first board unit 255. In another embodiment, for example, the controller 830 may be disposed on the first circuit board 250.

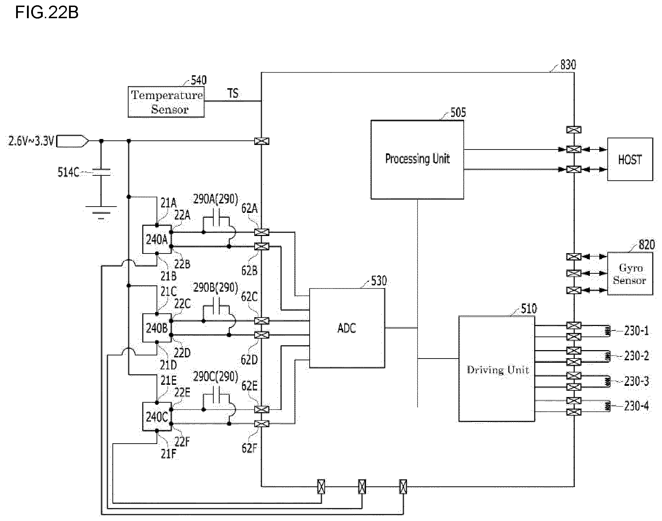

FIG. 22B is a block diagram of the controller 830, the first to third sensors 240A, 240B and 240C and the capacitors 290A, 290B and 290C.

Referring to FIG. 22B, the controller 830 may include a processing unit 505 configured to perform communication of transmitting and receiving data with respect to the host using the clock signal SCL and the data signal SDA, for example, I2C communication. For example, the host may be the controller 780 of the optical instrument 200A. For example, when the controller 830 and a separate AF driver are provided, data communication may be performed between the controller 830 and the AF driver, and the controller 830 may serve as the host.

The processing unit 505 may include a central processing unit (CPU) and a memory. For example, the memory may include at least one of a flash memory, a RAM or a ROM. The processing unit 505 may perform control for AF operation and OIS operation.

The controller 830 may be conductively connected to the second coil 230. The controller 830 may include a driving unit 1510 configured to supply a drive signal for driving the first to fourth coil units 230-1 to 230-4. For example, the driving unit 1510 may an H bridge circuit or an H bridge driver capable of changing the polarity of the drive signal. Here, the drive signal may be a PWM signal for reducing current consumption, and the drive frequency of the PWM signal may be 20 kHz or higher which exceeds the audible frequency range. In another embodiment, the drive signal may be a DC signal.

The second position sensor 240 may include two input terminals and two output terminals. For example, the first sensor 240A may include two input terminals 21A and 21B and two output terminals 22A and 22B. For example, the second sensor 240B may include two input terminals 21C and 21D and two output terminals 22C and 22D. For example, the third sensor 240C may include two input terminals 21E and 21F and two output terminals 22E and 22F.

The controller 830 may supply power or drive signals to two input terminals 21A to 21F and 22A to 22F of each of the first to third sensors 240A to 240C.

For example, one of first and second terminals of each of the first to third sensors 240A to 240C may be a (+) input terminal, and the other of the first and second terminals may be a (-) input terminal. For example, the (+) input terminal may be a terminal to which voltage higher than the voltage applied to the (-) input terminal is applied.

For example, first terminals 21A, 21C and 21E among the first and second terminals 21A to 21F of the first to third sensors 240A to 24C may be connected to each other in common. Here, the terminals which are connected to each other in common may be the (+) input terminals or the (-) input terminals (for example, the ground terminals) of the first to third sensors 240A to 240C.

The first sensor 240A may output a first output signal (for example, a first output voltage) through two output terminals 22A and 22B, and the second sensor 240B may output two output signals (for example, second output voltages) through two output terminals 22C and 22D, and the third sensor 240C may output third output signals (for example, third output voltages) through two output terminals 22E and 22F.

For example, the controller 830 may receive the first output voltage of the first sensor 240A, the second output voltage of the second sensor 240B, and the third output voltage of the third sensor 240C, and may control movement (or displacement) of the OIS movement in the x-axis direction or in the y-axis direction using the received first to third output voltages. Furthermore, the controller 830 may control rotation, tilting or rolling of the OIS moving unit relative to the optical axis using the received first to third output voltages.

Furthermore, the controller 830 may include the analog-to-digital converter 530 configured to receive output voltages which are output from the first and second output terminals 22A to 22F of the first to third sensors 240A to 240C and to output data values, digital values or code values corresponding to the result of analog-to-digital conversion of the received output voltages. The controller 830 may control movement (or displacement) of the OIS moving unit in the x-axis direction or in the y-axis direction and rotation, tilting or rolling of the OIS moving unit relative to the optical axis using the data values output from the analog-to-digital converter 530.

For example, the camera device 10 may include an amplifier (not shown). For example, the amplifier may be included in the controller 830. The amplifier may receive the output voltages output from the first and second output terminals 22A to 22F of the first to third sensors 240A to 24C, and may amplify the received output voltages. The output voltages, which are amplified by the amplifier, may be supplied to the analog-to-digital converter 530, and the analog-to-digital converter 530 may perform analog-to-digital conversion of the amplified output voltages and may output data values corresponding to the result of analog-to-digital conversion of the amplified output voltages.

The temperature sensor 540 may measure an ambient temperature (for example, the temperatures of the first to third sensors 240A, 240B and 24C, and may output a temperature-detecting signal Ts corresponding to the result of measurement. For example, the temperature sensor 540 may be a thermistor.

The resistance value of the resistor included in the temperature sensor 540 may vary according to ambient temperature, and thus the value of the temperature detection signal Ts may vary according to ambient temperature. A mathematical formula or a look-up table relating to ambient temperature and the temperature detection signal Ts, which is established through calibration, may be stored in the memory or the controllers 830 and 780.

Because the output values of the first to third sensors 240A, 240B and 240C are also affected by temperature, it is necessary to compensate the output values of the first to third sensors 240A, 240B and 240C according to ambient temperature for the purpose of accurate and reliable OIS feedback operation.

To this end, for example, the controllers 830 and 780 are able to compensate the output values (or data values corresponding to the output) of the first to third sensors 240A, 240B and 240C using the ambient temperature measure by the temperature sensor 540 and a temperature compensation algorithm or a compensation formula. The temperature compensation algorithm or the compensation formula may be stored in the controllers 830 and 780 and the memory 512.

The camera device may further include a fourth sensor 240D which corresponds to or faces the fourth magnet unit 130-4 in the optical-axis direction. The fourth sensor 240D may be disposed on the first board unit 255 (for example, the first circuit board 250). For example, the fourth sensor 240D may be disposed adjacent to one corner of the first circuit board 250 on which the first to third sensors 240A to 240C are not disposed. The description of the dispositional relationship between the first sensor 240A and the first coil unit 230-1 may be applied to the dispositional relationship between the fourth sensor 240D and the fourth coil unit 230-4 with or without modification.

For example, the fourth sensor 240D may be positioned so as to face the second sensor 240B in a diagonal direction. For example, the output voltage of the fourth sensor 240D may also be used in detection of movement of the OIS moving unit in the x-axis direction or in the y-axis direction.

The controller 830 may be conductively connected to the second coil 230 and the second position sensor 240 via the second board unit 800, the support board 310 and the first board unit 255.

The camera device 10 may include the capacitor 290 connected to the two output terminals of the second position sensor 240. For example, the capacitor 290 may be conductively connected to the two output terminals of the second position sensor 240 in parallel.

For example, the capacitor 290 may include the first to third capacitors 290A, 290B and 290C.

For example, the first capacitor 290A may be connected to the two output terminals 22A and 22B of the first sensor 240A. For example, the first capacitor 290A may be conductively connected to the two output terminals 22A and 22B of the first sensor 240A in parallel. For example, one end of the first capacitor 290A may be connected to one 22A of the two output terminals 22A and 22B of the first sensor 240A, and the other end of the first capacitor 290A may be connected to the other 22B of the two output terminals 22A and 22B of the first sensor 240A.

For example, the second capacitor 290B may be connected to the two output terminals 22C and 22D of the second sensor 240B. For example, the second capacitor 290B may be conductively connected to the two output terminals 22C and 22D of the second sensor 240B in parallel. For example, one end of the second capacitor 290B may be connected to one 22C of the two output terminals 22C and 22D of the second sensor 240B, and the other end of the first capacitor 290A may be connected to the other 22D of the two output terminals 22C and 22D of the second sensor 240B.

For example, the third capacitor 290C may be connected to the two output terminals 22E and 22F of the third sensor 240C. For example, the third capacitor 290C may be conductively connected to the two output terminals 22E and 22F of the third sensor 240C in parallel. For example, one end of the third capacitor 290C may be connected to one 22E of the two output terminals 22E and 22F of the third sensor 240C, and the other end of the third capacitor 290C may be connected to the other of the two output terminals 22E and 22F of the third sensor 240C.

The controller 830 may include first and second pads 62A and 62B, which are conductively connected to the two output terminals 22A and 22B of the first sensor 240A, third and fourth pads 62C and 62D, which are conductively connected to the two output terminals 22C and 22D, and fifth and sixth pads 62E and 62F, which are conductively connected to the two output terminals 22E and 22F of the third sensor 240C.

The output signal of the first sensor 240A may be input to the controller 830 through the first and second pads 62A and 62B of the controller 830. The output signal of the second sensor 240B may be input to the controller 830 through the third and fourth pads 62C and 62D of the controller 830. The output signal of the third sensor 240C may be input to the controller 830 through the fifth and sixth pads 62E and 62f.

The first capacitor 290A may be connected to the first and second pads 62A and 62B of the controller 830 in parallel. For example, one end of the first capacitor 290A may be connected to the first pad 62A of the controller 830, and the other of the first capacitor 290A may be connected to the second pad 62B of the controller 830.

The second capacitor 290B may be connected to the third and fourth pads 62C and 62D of the controller 830 in parallel. For example, one end of the second capacitor 290B may be connected to the third pad 62C of the controller 830, and the other of the second capacitor 290B may be connected to the fourth pad 62D of the controller 830.

The third capacitor 290C may be connected to the fifth and sixth pads 62E and 62F of the controller 830 in parallel. For example, one end of the third capacitor 290C may be connected to the fifth pad 62E of the controller 830, and the other of the third capacitor 290C may be connected to the sixth pad 62F of the controller 830.

The first output signal of the first sensor 240A may include noise due to the magnetic field generated by the first coil unit 230-1, and the first capacitor 290A may remove the noise.

The second output signal of the second sensor 240B may include noise due to the magnetic field generated by the second coil unit 230-2, and the second capacitor 290B may remove the noise.

The third output signal of the third sensor 240C may include noise due to the magnetic field generated by the third coil unit 230-3, and the third capacitor 290C may remove the noise.

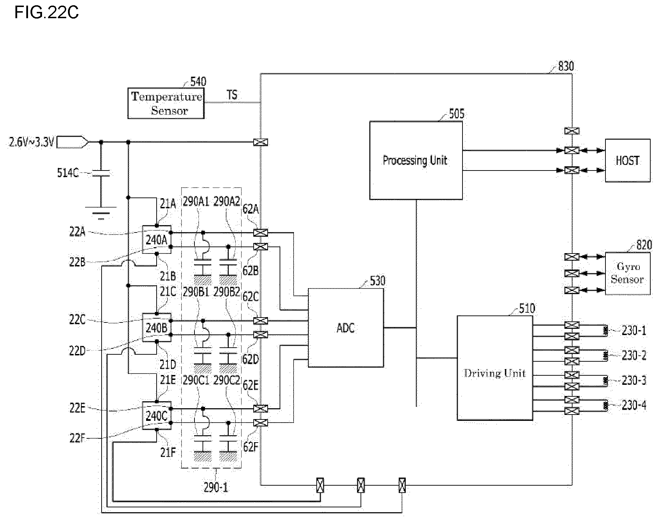

FIG. 22C illustrates a capacitor 290-1 according to a modification.

Referring to FIG. 22C, the capacitor 290-1 may include a first capacitor, which is connected between one of the two output terminals of the second position sensor 240 and the ground (or the ground terminal), and a second capacitor, which is connected between the other of the two output terminals of the second position sensor 240 and the ground (or the ground terminal).

The controller 830 may include two pads connected to the two output terminals of the second position sensor 240. For example, one end of the first capacitor of the capacitor 290-1 may be connected to one of the two pads of the controller 830. The other end of the first capacitor of the capacitor 290-1 may be connected to the ground (or the ground terminal) . For example, one end of the second capacitor of the capacitor 290-1 may be connected to the other of the two pads of the controller 830. The other end of the second capacitor of the capacitor 290-1 may be connected to the ground (or the ground terminal).

The capacitor 290-1 may include a first capacitor 290A1 connected to the first output terminal 22A of the first sensor 240A, and a second capacitor 290A2 connected to the second output terminal 22B of the first sensor 240A.

For example, the first capacitor 290A1 may be connected between the first output terminal 22A of the first sensor 240A and the ground (or the ground terminal). For example, one end of the first capacitor 290A1 may be connected to the first output terminal 22A of the first sensor 240A, and the other end of the first capacitor 290A1 may be connected to the ground (or the ground terminal). For example, one end of the first capacitor 290A1 may be connected to the first pad 62A of the controller 830, and the other end of the first capacitor 290A1 may be connected to the ground (or the ground terminal).

For example, the second capacitor 290A2 may be connected between the second output terminal 22B of the first sensor 240A and the ground (or the ground terminal). For example, one end of the second capacitor 290A2 may be connected to the second output terminal 22B of the first sensor 240A, and the other end of the second capacitor 290A2 may be connected to the ground (or the ground terminal). For example, one end of the second capacitor 290A2 may be connected to the second pad 62B of the controller 830, and the other end of the second capacitor 290A2 may be connected to the ground (or the ground terminal).

For example, each of the first and second capacitors 290A1 and 290A2 may be disposed in the cavity in the first coil unit 230-1 when viewed in the optical-axis direction or from above. For example, the first sensor 240A may be disposed between the first capacitor 290A1 and the second capacitor 290A2 when viewed in the optical-axis direction or from above. In another embodiment, at least one of the first or second capacitor 290A1 or 290A2 may be disposed outside the cavity in the first coil unit 230-1 or on the outer side of the first coil unit 230-1 when viewed in the optical-axis direction or from above.

The capacitor 290-1 may include a third capacitor 290B1 connected to the first output terminal 22C of the second sensor 240B, and a fourth capacitor 290B2 connected to the second output terminal 22D of the second sensor 240B.

For example, the third capacitor 290B1 may be connected between the first output terminal 22C of the second sensor 240B and the ground (or the ground terminal). For example, one end of the third capacitor 290B1 may be connected to the first output terminal 22C of the second sensor 240B, and the other end of the third capacitor 290B1 may be connected to the ground (or the ground terminal). For example, one end of the third capacitor 290B1 may be connected to the third pad 62C of the controller 830, and the other end of the third capacitor 290B1 may be connected to the ground (or the ground terminal).

For example, the fourth capacitor 290B2 may be connected between the second output terminal 22D of the second sensor 240B and the ground (or the ground terminal). For example, one end of the fourth capacitor 290B2 may be connected to the second output terminal 22D of the second sensor 240B, and the other end of the fourth capacitor 290B2 may be connected to the ground (or the ground terminal). For example, one end of the fourth capacitor 290B2 may be connected to the fourth pad 62D of the controller 830, and the other end of the fourth capacitor 290B2 may be connected to the ground (or the ground terminal).

For example, each of the third and fourth capacitors 290B1 and 290B2 may be disposed in the cavity in the second coil unit 230-2 when viewed in the optical-axis direction or from above. For example, the second sensor 240B may be disposed between the third capacitor 290B1 and the second capacitor 290B2 when viewed in the optical-axis direction or from above. In another embodiment, at least one of the third or fourth capacitor 290B1 or 290B2 may be disposed outside the cavity in the second coil unit 230-2 or on the outer side of the second coil unit 230-2 when viewed in the optical-axis direction or from above.

The capacitor 290-1 may include a fifth capacitor 290C1 connected to the first output terminal 22E of the third sensor 240C, and a sixth capacitor 290C2 connected to the second output terminal 22F of the third sensor 240C.

For example, the fifth capacitor 290C1 may be connected between the first output terminal 22E of the third sensor 240C and the ground (or the ground terminal). For example, one end of the fifth capacitor 290C1 may be connected to the first output terminal 22E of the third sensor 240C, and the other end of the fifth capacitor 290C1 may be connected to the ground (or the ground terminal). For example, one end of the fifth capacitor 290C1 may be connected to the fifth pad 62E of the controller 830, and the other end of the fifth capacitor 290C1 may be connected to the ground (or the ground terminal).

For example, the sixth capacitor 290C2 may be connected between the second output terminal 22F of the third sensor 240C and the ground (or the ground terminal). For example, one end of the sixth capacitor 290C2 may be connected to the second output terminal 22F of the third sensor 240C, and the other end of the sixth capacitor 290C2 may be connected to the ground (or the ground terminal). For example, one end of the sixth capacitor 290C2 may be connected to the sixth pad 62F of the controller 830, and the other end of the sixth capacitor 290C2 may be connected to the ground (or the ground terminal).

For example, each of the fifth and sixth capacitors 290C1 and 290C2 may be disposed in the cavity in the third coil unit 230-3 when viewed in the optical-axis direction or from above. For example, the third sensor 240C may be disposed between the fifth capacitor 290C1 and the sixth capacitor 290C2 when viewed in the optical-axis direction or from above. In another embodiment, at least one of the fifth or sixth capacitor 290C1 or 290C2 may be disposed outside the cavity in the second coil unit 230-2 or on the outer side of the second coil unit 230-2 when viewed in the optical-axis direction or from above.

The first capacitor 290A1 shown in FIG. 22C is capable of bypassing high-frequency noise, which is introduced into the first output terminal 22A of the first sensor 240A, to the ground, and the second capacitor 290A2 shown in FIG. 22C is capable of bypassing high-frequency noise, which is introduced into the second output terminal 22B of the first sensor 240A, to the ground. In other words, the first and second capacitors 290A1 and 290A2 are capable of removing high-frequency noise include in the output signal output from the first and second output terminals 22A and 222B of the first sensor 240A. Similarly, the third and fourth capacitors 290B1 and 290B2 are capable of removing high-frequency noise included in the output signal output from the first and second output terminals 22C and 22D of the second sensor 240B, and the fifth and sixth capacitors 290C1 and 290C2 are capable of removing high-frequency noise included in the output signal output from the first and second output terminals 22E and 22F of the third sensor 240C.

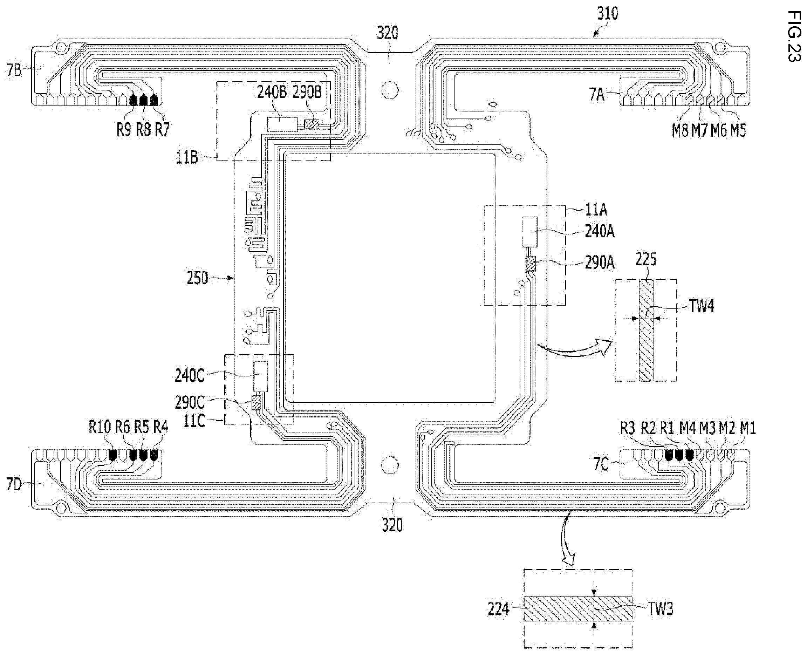

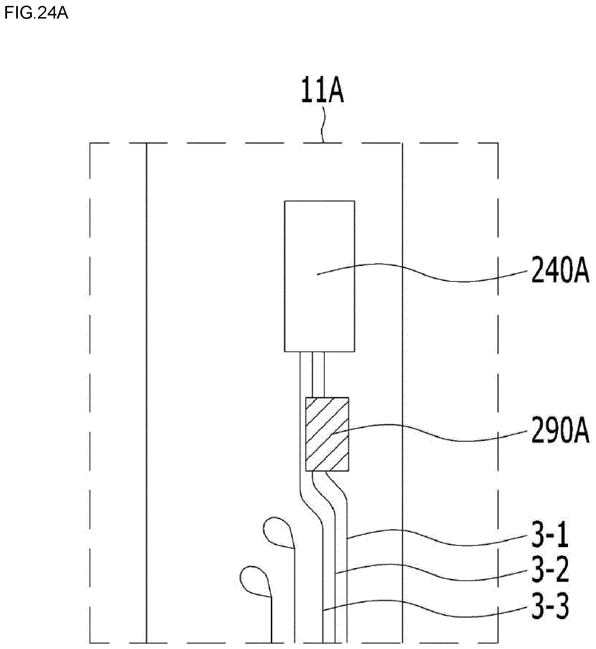

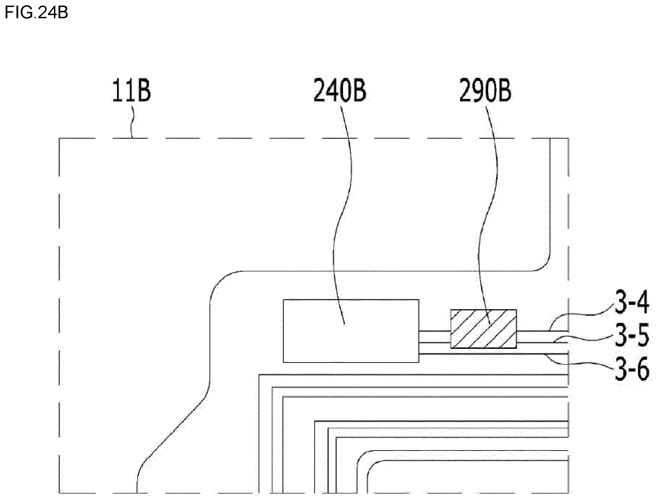

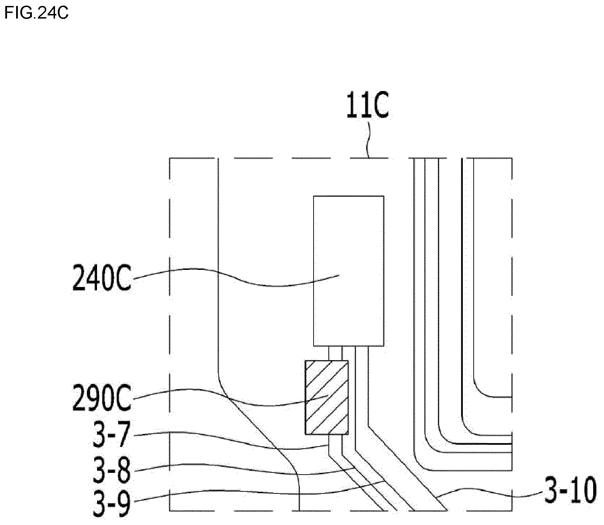

FIG. 23 illustrates disposition of the first circuit board 250, the terminals M1 to M8 and R1 to R10 of the support board 310, and the wires 224 and 225. FIG. 24A is an enlarged view of a first dotted portion 11A in FIG. 23. FIG. 24B is an enlarged view of a second dotted portion 11B in FIG. 23. FIG. 24C is an enlarged view of a third dotted portion 11C in FIG. 23. FIG. 23 is a view in which the support board 310 and the first circuit board 250 are spread out so as to be parallel to a plane perpendicular to the optical axis.

Referring to FIGs. 23, 24A and 24C, the first board unit 255, for example, the first circuit board 250 may include at least one first wire 224 conductively connected to the second coil 230, and one or more first terminals M1 to M8 conductively connected to the first wire 224.

For example, the first circuit board 250 may include first wires connected to the first to fourth coil units 230-1 to 230-4. For example, in an embodiment in which the first circuit board 250 and the support board 310 are integrally formed, the first wires may be formed both at the first circuit board 250 and at the support board 310. For example, the support board 310 may include first wires connected to the first wires of the first circuit board 250. Here, the first wires of the support board 310 may connect the first wires of the first circuit board 250 to the first terminals M1 to M8. For example, each of the first wires may be connected to a corresponding one of the first terminals M1 to M8 of the support board 310.

For example, the first wires provided at the first circuit board 250 and the support board 310 may connect opposite ends of the first to fourth coil units 130-1 to 130 to the first terminals M1 to M8 of the support board 310.

For example, the first circuit board 250 may include a first-first wire connected to one end of each of the first to fourth coil units 230-1 to 230-4, and a first-second wire connected to the other end of each of the first to fourth coil units 230-1 to 230-4.

In an embodiment in which the first circuit board 250 and the support board 310 are integrally formed, the first wire 224 may be formed both at the first circuit board 250 and at the support board 310. For example, the support board 310 may include the first wires connected to the first wires 224 of the first circuit board 250. Here, the first wires of the support board 310 may connect the first wires of the first circuit board 250 to the first terminals M1 to M8.

For example, in the case of four channels, the first wires may be formed at the first circuit board 250 and the support board 310 so as to be connected to four coil units 230-1 to 230-4. For example, the support board 310 may include the same number of first terminals M1 to M8 as the number of first wires 224.

The first board unit 255, for example, the first circuit board 250 may include at least one second wire 225 conductively connected to the second position sensor 240, and one or more second terminals R1 to R10 conductively connected to the second wire 225.

For example, the first board unit 255, for example, the first circuit board 250 may include second wires 3-1 to 3-10 which connect the second position sensor 240 to the second terminals R1 to R10 of the support board 310. For example, each of the second wires 3-1 to 3-10 may be connected to a corresponding one of the second terminals R1 to R10.

For example, the first circuit board 250 may include second wires 3-1 and 3-2, 3-4 and 3-5, and 3-7 and 3-8 connected to the output terminals 22A and 22B, 22C and 22D, 22E and 22F of the first to third sensors 240A to 240C.

For example, in an embodiment in which the first circuit board 250 and the support board 310 are integrally formed, the second wires may be formed both at the first circuit board 250 and at the support board 310. For example, the support board 310 may include second wires connected to the second wires of the first circuit board 250. Here, the second wires of the first circuit board 310 may connect the second wires of the first circuit board 250 to the second terminals R1 to R10.

For example, the first circuit board 250 may include a second-first wire connected to one of two output terminals of each of the first to third sensors 240A to 240C, and a second-second wire connected to the other end of the two output terminals of each of the first to third sensors 240A to 240C.

For example, the second wires 3-1 to 3-10, which are provided at the first circuit board 250 and the support board 310, may connect the output terminals 22A to 22F and the input terminals 21A to 21F of the first to third sensors 240A to 240C to the second terminals R1 to R10 of the support board 310.

Referring to FIG. 23, each of the two output terminals 22A and 22B of the first sensor 240A may correspond to two second wires 3-1 and 3-2 among the second wires 3-1 to 3-10, and may be connected to a corresponding one of the two second wires 3-1 and 3-2.

Each of the two output terminals 22C and 22D of the second sensor 240B may correspond to two other second wires 3-4 and 3-5 among the second wires 3-1 to 3-10, and may be connected to a corresponding one of the two other second wires 3-4 and 3-5.

Each of the two output terminals 22E and 22F of the third sensor 240C may correspond to two other second wires 3-7 and 3-8 among the second wires 3-1 to 3-10, and may be connected to a corresponding one of the two other second wires 3-7 and 3-8.

One of the two input terminals 21A and 21B of the first sensor 240A may be connected to the second wire 3-3, and may be conductively connected to the second terminal R3 of the support board 310 via the second wire 3-3.

Although not clearly illustrated in FIG. 23, the other of the two input terminals 21A and 21B of the first sensor 240A may be conductively connected to the second wire 3-10 via another wire, and may be conductively connected to the second terminal R10 of the support board 310 in common.

One of the two input terminals 21C and 21D of the second sensor 240B may be connected to the second wire 3-6, and may be conductively connected to the second terminal R9 of the support board 310 via the second wire 3-6.

Although not clearly illustrated in FIG. 23, the other of the two input terminals 21C and 21D of the second sensor 240B may be conductively connected to the second wire 3-10 via another wire, and may be conductively connected to the second terminal R10 of the support board 310 in common.

One of the two input terminals 21E and 21F of the third sensor 240C may be connected to the second wire 3-9, and may be conductively connected to the second terminal R6 of the support board 310 via the second wire 3-9.

Although not clearly illustrated in FIG. 23, the other of the two input terminals 21E and 21F of the third sensor 240C may be connected to the second wire 3-10 via another wire, and may be conductively connected to the second terminal R10 of the support board 310.

Specifically, one input terminal of each of the first to third sensors 240A to 240C may be conductively connected to the second wire 3-10 of the first circuit board 250 and the support board 310, and may be connected or linked to the second terminal R10 of the support board 310 in common.

The capacitor 290 may be conductively connected to the first board unit (for example, the first circuit board 250), which is conductively connected to the two output terminals of the second position sensor 240, and the two second wires of the support board 310 in parallel. One end of the capacitor 290 may be connected or linked to the second wire of one of the first circuit board 250 and the support board 310, which are connected or linked to the first output terminal of the second position sensor 240, and the other end of the capacitor 290 may be connected or linked to the second wire of the other of the first circuit board 250 and the support board 310, which are connected or linked to the second output terminal of the second position sensor 240.

For example, the first capacitor 290A may be connected both to the second wire 3-1 connected to the first output terminal 22a of the first sensor 240A and to the second wire 3-2 connected to the second output terminal 22B of the first sensor 240A, in parallel. For example, one end of the first capacitor 290A may be connected or linked to the second wire 3-1 connected to the first output terminal 22A of the first sensor 240A, and the other end of the first capacitor 290A may be connected or linked to the second wire connected to the second output terminal 22B of the first sensor 240A.

For example, the second capacitor 290B may be connected both to the second wire 3-4 connected to the first output terminal 22C of the second sensor 240B and to the second wire 3-5 connected to the second output terminal 22D of the second sensor 240B, in parallel. For example, one end of the second capacitor 290B may be connected or liked to the second wire 3-5 connected to the first output terminal 22C of the second sensor 240B, and the other end of the second capacitor 290B may be connected or linked to the second wire 3-5 connected to the second output terminal 22D of the second sensor 240B.

For example, the third capacitor 290C may be connected both to the second wire 3-7 connected to the first output terminal 22E of the third sensor 240C and to the second wire 3-8 connected to the second output terminal 22F of the third sensor 240C, in parallel. For example, one end of the second capacitor 290B may be connected or linked to the second wire 3-7 connected to the first output terminal 22E of the third sensor 240C, and the other end of the third capacitor 290C may be connected or linked to the second wire 3-8 connected to the second output terminal 22F of the third sensor 240C.

In place of the first to third capacitors 290A to 290C shown in FIG. 23, the first to sixth capacitors 290A1, 290A2, 290B1, 290B2, 290C1, and 290C2 according to the embodiment shown in FIG. 22C may be applied to the first circuit board 250 and the support board 310 as follows.

For example, one end of the first capacitor 290A1 shown in FIG. 22C may be connected or linked to the second wire 3-1 connected to the first output terminal 22A of the first sensor 240A, and the other end of the first capacitor 290A1 may be connected to the ground wire (or the earth wire) of the first circuit board 250 (and/or the support board 310). Here, the ground wire may be a wire connected or linked to the ground terminal among the terminals of the support board 310.

For example, one end of the second capacitor 290A2 shown in FIG. 22C may be connected or linked to the second wire 3-2 connected to the second output terminal 22B of the first sensor 240A, and the other end of the second capacitor 290A2 may be connected to the ground wire (or the earth wire) of the first circuit board 250 (and/or the support board 310).

For example, one end of the third capacitor 290B1 shown in FIG. 22C may be connected or linked to the second wire 3-4 connected to the first output terminal 22C of the second sensor 240B, and the other end of the third capacitor 290B1 may be connected to the ground wire (or the earth wire) of the first circuit board 250 (and/or the support board 310).

For example, one end of the fourth capacitor 290B2 shown in FIG. 22C may be connected or linked to the second wire 3-5 connected to the second output terminal 22D of the second sensor 240B, and the other end of the fourth capacitor 290B2 may be connected to the ground wire (or the earth wire) of the first circuit board 250 (and/or the support board 310).

For example, one end of the fifth capacitor 290C1 shown in FIG. 22C may be connected or linked to the second wire 3-7 connected to the first output terminal 22E of the third sensor 240C, and the other end of the fifth capacitor 290C1 may be connected to the ground wire (or the earth wire) of the first circuit board 250 (and/or the support board 310).

For example, one end of the sixth capacitor 290C2 shown in FIG. 22C may be connected or linked to the second wire 3-8 connected to the second output terminal 22F of the third sensor 240C, and the other end of the sixth capacitor 290C2 may be connected to the ground wire (or the earth wire) of the first circuit board 250 (and/or the support board 310).

For example, the other end of each of the first to sixth capacitors 290A1, 290A2, 290B1, 290B2, 290C1, and 290C2 may be conductively connected or linked to the ground terminal of the support board 310 in common.

One or more first terminals M1 to M8 of the support board 310 may be conductively connected to one or more first terminals S1 to S8 of the second board unit 800 using solder or a conductive adhesive.

For example, each of the plurality of first terminals M1 to M8 of the support board 310 may be conductively connected to a corresponding one of the plurality of terminals S1 to S8 of the second board unit 800.

One or more second terminals R1 to R10 of the support board 310 may be conductively connected to one or more second terminals K1 to K10 of the second board unit 800 using solder or a conductive adhesive.

For example, each of the plurality of second terminals R1 to R10 of the support board 310 may be conductively connected to a corresponding one of the plurality of second terminals K1 to K10 of the second board unit 800.

For example, the support board 310 may include four terminal portions 7A to 7D.

At least one of the four terminal portions 7A to 7D may have formed thereon one or more first terminals M1 to M8 which are conductively connected to the second coil 230.

For example, one (for example, 7C) of the four terminal portions 7A to 7D) may include first terminals (for example, M1 to M4) which are conductively connected to two (for example, 230-1 and 230-2) of the first to fourth coil units 230-1 to 230-4. For example, another (for example, 7A) of the four terminal portions 7A to 7D may include first terminals (for example, M5 to M8) which are conductively connected to the two remaining coil units (for example, 230-3 and 230-4) among the first to fourth coil units 230-1 to 230-4.

In another embodiment, each of the four terminal portions 7A to 7D may include a first terminal which is conductively connected to a corresponding one of the first to fourth coil units 230-1 to 230-4.

In a further embodiment, the first terminals, which are conductively connected to the first to fourth coil units 230-1 to 230-4, may be formed on one of the four terminal portions 7A to 7D.

At least one of the four terminal portions 7A to 7D may have formed thereon one or more second terminals R1 to R10 which are conductively connected to the second position sensor 240.

For example, each of three terminal portions (for example, 7B to 7D) among the four terminal portions 7A to 7D may include three second terminals R1 to R3, R4 to R6, or R7 to R9 which are conductively connected to a corresponding one the first to third sensor units 240A to 230C.

One (for example, 7D) of the three terminal portions (for example, 7B to 7D) may include one second terminal R10 to which first input terminals of the first to third sensor units 240A to 240C are conductively connected in common. In another embodiment, one second terminal, to which the first to third sensor units 240A to 240C are conductively connected in common, may be formed on the other remaining one (for example, 7A) of the four terminal portions 7A to 7D.

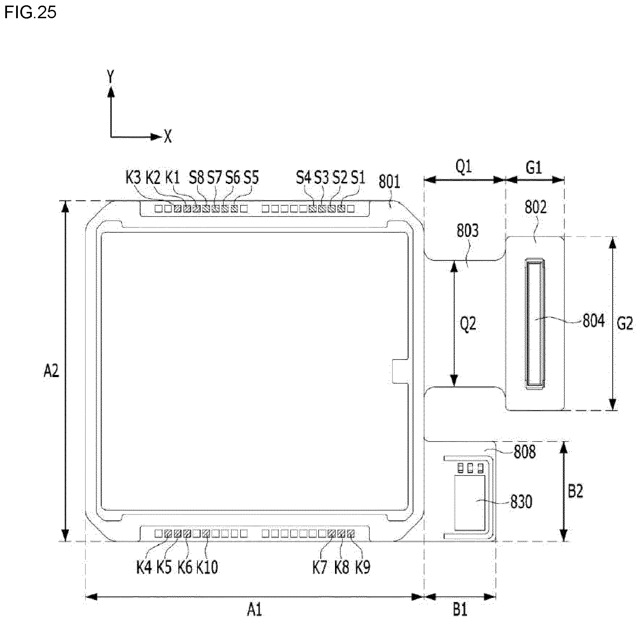

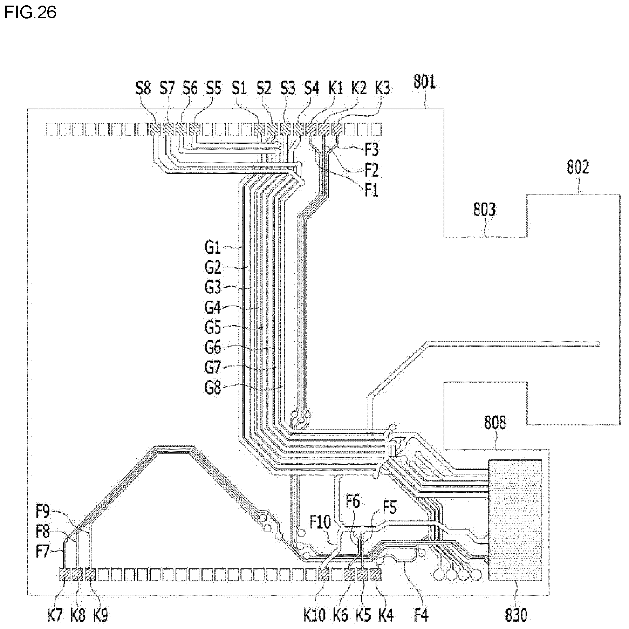

FIG. 25 illustrates terminals S1 to S8 and K1 to K10 of the second board unit 800 which is conductively connected to the support board 310. FIG. 26 illustrates one embodiment of wires G1 to G8 and F1 to F10 of the second board unit 800 which connect the controller 830 to the plurality of terminals S1 to S8 and K1 to K10 of the second board unit 800.

Referring to FIGs. 25 and 26, the surface area of the first region 801 (or the surface area of the upper surface) of the second board unit 800 may be larger than the surface area of the extension region 808 (or the surface area of the upper surface).

For example, the length A1 of the first region 801 of the second board unit 800 in the second horizontal direction (in the x-axis direction) may be greater than the length B1 of the extension region 800 in the second horizontal direction (in the x-axis direction). The length A2 of the first region 801 of the second board unit 800 in the first horizontal direction (in the y-axis direction) may be greater than the length B2 of the extension region 800 in the first horizontal direction (in the y-axis direction).

For example, the length G1 of the second region 802 may be less than the length Q1 of the third region 803 in the second horizontal direction. In another embodiment, the length G1 of the second region 802 in the second horizontal direction may be equal to or greater than the length Q1 of the third region 803 in the second horizontal direction.

For example, the length G2 of the second region 802 in the first horizontal direction may be greater than the length Q2 of the third region 803 in the first horizontal direction. In another embodiment, the length of the second region 802 in the first horizontal direction may be equal to or less than the length of the third region 803 in the first horizontal direction.

The length B2 of the extension region 808 in the first horizontal direction may be less than the length G2 of the second region 802 in the first horizontal direction. In another embodiment, the length of the extension region 808 in the first horizontal direction may be equal to or greater than the length of the second region 802 in the first horizontal direction.

The length B1 of the extension 808 in the second horizontal direction may be greater than the length G1 of the second region 802 in the second horizontal direction. In another embodiment, the length of the extension region 808 in the first horizontal direction may be equal to or less than the length of the second region 802 in the second horizontal direction.

The length B1 of the extension region 808 in the second horizontal direction may be less than the length Q1 of the third region 803 in second horizontal direction. In another embodiment, the length of the extension region 808 in the second horizontal direction may be equal to or greater than the length of the third region 803 in the second horizontal direction.

The length B2 of the extension region 808 in the first horizontal direction may be less than the length Q2 of the third region 803 in the first horizontal direction. In another embodiment, the length of the extension region 808 in the first horizontal direction may be equal to or greater than the length of the third region 803 in the first horizontal direction.

The second board unit 800 may include one or more first terminals S1 to S8, which are conductively connected to the first to fourth coil units 230-1 to 230-4 of the second coil 230, and one or more second terminals K1 to K10, which are conductively connected to the first to fourth sensors 240A to 240C of the second position sensor 240.

For example, the second board unit 800 may include the plurality of first terminals S1 to S8 which are conductively connected to the first terminals M1 to M8 of the support board 310. The number of first terminals may be eight in the case of four-channel driving, and the number of first terminals may be six in the case of three-channel driving. For example, two terminals may be required for each channel.

The second board unit 800 may include the plurality of second terminals K1 to K10 which are conductively connected to the second terminals R1 to R10 of the support board 310.

For example, the second board unit 800 may include three second terminals K1 to K9, which are conductively connected to each of the first to third sensors 240A to 240C, and one second terminal K10 (for example, a common terminal) for common connection.

For example, two second terminals R1 and R2 of the support board 310, which are conductively connected to two output terminals 22A and 222B of the first sensor 240A, may be conductively connected to two second terminals (for example, K1 and K2) of the second board unit 800. The second terminal R3 of the support board 310, which is conductively connected to the first input terminal 21A of the first sensor 240A, may be conductively connected to the second terminal (for example, K3) of the second board unit 800.

For example, two second terminals R7 and R7 of the support board 310, which are conductively connected to two output terminals 22C and 22D of the second sensor 240B, may be conductively connected to two second terminals (for example, K7 and K8) of the second board unit 800. Furthermore, the second terminal R9 of the support board 310, which is conductively connected to the first input terminal 21C of the second sensor 240B, may be conductively connected to the second terminal K9 of the second board unit 800.

For example, two second terminals R4 and R5 of the support board 310, which are conductively connected to two output terminals 22E and 22F of the third sensor 240C, may be conductively connected to two second terminals (for example, K4 and K5) of the second board unit 800. Furthermore, the second terminal R6 of the support board 310, which is conductively connected to the first input terminal 21E of the third sensor 240C, may be conductively connected to the second terminal (for example, K6) of the second board unit 800.

For example, the second terminal R10 of the support board 310, which is conductively connected to the second input terminal of each of the first to third sensors 240A to 240C, may be conductively connected to the second terminal K10 of the second board unit 800 which is a common connection terminal.

Referring to FIG. 26, the second board unit 800 may include one or more first wires G1 to G8 which conductively connect one or more first terminals S1 to S8 to the controller 830.

For example, each of the first wires G1 to G8 of the second board unit 800 may be conductively connected to a corresponding one of the first terminals S1 to S8 of the second board unit 800.

Furthermore, the second board unit 800 may include one or more second wires F1 to F10 which conductively connect one or more second terminals K1 to K10 to the controller 830.

For example, each of the second wires F1 to F10 of the second board unit 800 may be conductively connected to a corresponding one of the second terminals K1 to K10 of the second board unit 800.

Referring to FIGs. 23 and 26, the width TW3 of one first wire 224 of the first circuit board 250 (and/or the support board 310) may be less than the width TW1 of one first wire G1 of the second board unit 800 (TW3<TW1). The reason for this is to prevent the voltage supplied to the first wire 224 of the support board 310 from dropping by reducing voltage drop attributable to the first wire G1.

In another embodiment, the width TW3 of the first wire 224 may be equal to the width TW1 of the first wire G1.

The width TW4 of one second wire 225 of the first circuit board 250 (and/or the support board 310) may be less than the width TW2 of one second wire F1 of the second board unit 800 (TW4<TW2). The reason for this is to prevent the voltage supplied to the second wire 225 from dropping.

In another embodiment, the width TW4 of the second wire 225 may be equal to the width TW2 of the second wire F1.

For example, the resistance value of the second wire 225 of the first circuit board 250 (and/or the support board 310) may be greater than the resistance value of the first wire 224. In another embodiment, the resistance value of the second wire 225 may be equal to the resistance value of the first wire 224.

For example, the width TW3 of the first wire 224 of the first circuit board 250 (and/or the support board 310) may be greater than the width TW4 of the second wire 225 of the first circuit board 250 (and/or the support board 310) (TW3>TW4). For example, the width TW3 of the first wire 224 may be 110 to 140 um. Alternatively, for example, the width TW3 may be 120 to 130 µm.

The width TW3 in FIG. 23 means the line width of one first wire 224, and the width TW4 means the line width of one second wire 225.

For example, the width TW4 of the second wire 225 may be 50 to 70 um. Alternatively, for example, the width TW4 may be 60 to 65 um. In another embodiment, the width of the first wire 224 may be equal to the width of the second wire 225.

The value (TW3/TW4) obtained by dividing the width TW3 of the first wire 224 by the width TW4 of the fourth wire 225 may be 1.6 to 2.3. Alternatively, the divided value (TW3/TW4) may be 1.7 to 2.1.

When the divided value (TW3/TW4) is less than 1.6, the width TW3 may decrease and thus the resistance value of the first wire 224 may increase, with the result that the voltage drop attributable to the first wire 224 may increase and thus the drive voltage supplied to the second coil 230 may be lowered. Meanwhile, when the divided value (TW3/TW4) is greater than 2.3, the width TW4 may decrease and thus the resistance value of the second wire 225 may increase, with the result that the power consumed in the fourth wire 225 may increase and heat generation may increase.

The line width of the second wire F10 of the second board unit 800 connected to the common terminal K10 may be equal to or greater than the line width of the second wires F1 to F9 of the second board unit 800 connected to other second terminals K1 to K9.

FIG. 27 is a schematic conceptual diagram of the first wire G1 and the second wire K1 of the second board unit 800.

The description of FIG. 27 may be applied to the first wires G2 to G8 and other second wires K2 to K10 with or without modification. TW1 in FIG. 27 means the line width of one first wired (for example, G1), and TW2 means the line width of one second wire (for example, K1).

Referring to FIG. 27, the first wire (for example, G1) may be formed at the first region 801 and the extension region 808 of the second board unit 800, and may conductively connect the first terminal (for example, S1) of the second board unit 800 to the controller 830. For example, one end of the first wire G1 may be connected to the first terminal (for example, S1) of the second board unit 800, and the other end of the first wire G1 may be coupled or bonded to the controller 830 using solder or a conductive adhesive.

The second wire (for example, F1) may be formed at the first region 801 and the extension region 808 of the second board unit 800, and may conductively connect the second terminal

(for example, K1) of the second board unit 800 to the controller 830. For example, one end of the second wire F1 may be connected to the second terminal (for example, K1) of the second board unit 800, and the other end of the second wire F1 may be coupled or bonded to the controller 830 using solder or a conductive adhesive.

The resistance value of the first wire G1 may be 1 ohm or less. The reason for this is because the voltage drop attributable to the first wire G1 may increase and thus the driving voltage applied to the second coil 230 may be lowered when the resistance value of the first wire G1 is greater than 1 ohm.

For example, the resistance value of the first wire G1 may be 0.1 to 1 ohm. Alternatively, the resistance value of the first wire G1 may be 0.1 to 0.3 ohm.

Furthermore, the resistance value of the second wire F1 may be 2 ohm or less. The reason for this is because the power consumed in the second wire F1 may increase and heat generation may increase when the resistance value of the second wire F1 is greater than 2 ohm. For example, the resistance value of the second wire F1 may be 0.2 to 2 ohm. Alternatively, the resistance value of the second wire F1 may be 0.2 to 0.3 ohm.

For example, the resistance value of the second wire F1 may be greater than the resistance value of the first wire G1. In another embodiment, the resistance value of the second wire F1 may be equal to the resistance value of the first wire G1.

The width TW1 of the first wire G1 may be greater than the width TW2 of the second wire F1 (TW1>TW2). For example, the width TW1 of the first wire F1 may be 180 to 220 um. Alternatively, the width TW1 may be 190 to 210 um.

For example, the width TW2 of the second wire F1 may be 70 to 90 um. Alternatively, for example, the width TW2 may be 75 to 85 um. In another embodiment, the width of the first wire G1 may be equal to the width of the second wire F1.

The value (TW1/TW2) obtained by dividing the width TW1 of the first wire G1 by the width TW2 of the second wire F1 may be 2 to 3.14. Alternatively, the divided value may be 2 to 2.5. Alternatively, the divided value (TW1/TW2) may be 2.4 to 2.6.

When the divided value (TW1/TW2) is less than 2, the width TW1 may decrease and thus the resistance value of the first wire G1 may increase, with the result that the voltage drop attributable to the first wire G1 may increase and thus the driving voltage supplied to the second coil 230 may be lowered.

When the divided value (TW1/TW2) is greater than 3.14, the width TW2 may decrease and thus the resistance value of the second wire F1 may increase, with the result that the power consumed in the second wire F1 may increase and heat generation may increase.

FIG. 29 illustrates disposition of the first to third capacitors 290A to 290C according to another embodiment.

Referring to FIG. 29, the first to third capacitors 290A, 290B and 290C may be disposed on the second board unit 800. For example, the first to third capacitors 290A, 290B and 290C may be disposed on the extension region of the second board unit 800. For example, the first to third capacitors 290A to 290C may be disposed outside the cover member 300, and may not overlap the cover member 300 in the optical-axis direction.

For example, the capacitors 514A to 514C may be disposed at one side of the controller 830, and first to third capacitors 290A, 290B and 290C may be disposed at the opposite side of the controller 830.

In another embodiment, the capacitors 514A to 514C or the first to third capacitors 290A, 290B and 290C may be disposed in one area of the extension region positioned between the controller 830 and the first region 801 (or the base 210) of the second board unit 800.

The first capacitor 290A according the embodiment shown in FIG. 29 may be connected to the second wire F1 of the second board unit 800, which is conductively connected to the first output terminal 22A of the first sensor 240A, and the second wire F2 of the second board unit 800, which is conductively connected to the second output terminal 22B of the first sensor 240A, in parallel.

In FIG. 29, for example, one end of the first capacitor 290A may be connected or linked to the second wire F1 of the second board unit 800, and the other end of the first capacitor 290A may be connected or linked to the second wire F2 of the second board unit 800.

The second capacitor 290B according to the embodiment shown in FIG. 29 may be connected to the second wire F7 of the second board unit 800, which is conductively connected to the first output terminal 22C of the second sensor 240B, and the second wire F8 of the second board unit 800, which is conductively connected to the second output terminal 22D of the second sensor 240B, in parallel.

In FIG. 29, for example, one end of the second capacitor 290B may be connected or linked to the second wire F7 of the second board unit 800, and the other end of the second capacitor 290B may be connected or linked to the second wire F8 of the second board unit 800.

The third capacitor 290C according to the embodiment shown in FIG. 29 may be connected to the second wire F4 of the second board unit 800, which is conductively connected to the first output terminal 22E of the third sensor 240C, and the second wire F5 of the second board unit 800, which is conductively connected to the second output terminal 22F of the second sensor 240B, in parallel.

In FIG. 29, for example, one end of the third capacitor 290C may be connected or linked to the second wire F4 of the second board unit 800, and the other end of the third capacitor 290C may be connected or linked to the second wire F5 of the second board unit 800. In the embodiment shown in FIG. 29, for example, the first to third capacitors 290A to 290C may be directly connected or linked to second wires F1, F2, F7, F8, F4, and F5 formed in the extension region 808 of the second board unit 800 using solder or a conductive adhesive.

In another embodiment, the first to third capacitors 290A to 290C may be disposed in the first region 801 of the second board unit 800. In this case, the first to third capacitors 290A to 290C may be directly connected or linked to second wires F1, F2, F7, F8, F4, and F5 formed in the first region 801 of the second board unit 800 using solder or a conductive adhesive.

Because the first to third capacitors 290A to 290D according to the embodiment shown in FIG. 29 are disposed adjacent to the controller 830, the first to third capacitors 290A to 290D are capable of removing noise introduced into the wires 3-1, 3-2, 3-4, 3-5, 3-7, 3-8, F1, F2, F7, F8, F4, and F5 connected between the output terminals of the first to third sensors 240A to 240C and the controller 830.

In place of the first to third capacitors 290A to 290C shown in FIG. 29, first to sixth capacitors 290A1, 290A2, 290B1, 290B2, 290C1, and 290C2 according to an embodiment shown in FIG. 22B may be applied to the second board unit 800 as follows.

The first to sixth capacitors 290A1, 290A2, 290B1, 290B2, 290C1, and 290C2 shown in FIG. 22B may be disposed on the second board unit 800. For example, the first to sixth capacitors 290A1, 290A2, 290B1, 290B2, 290C1, and 290C2 may be disposed on the extension portion 808 of the second board unit 800.

In FIG. 22B, for example, one end of the first capacitor 290A1 may be directly connected or conductively linked to the second wire F1 of the second board unit 800, and other end of the first capacitor 290A1 may be directly connected or conductively linked to the ground wire (or the earth wire) of the second board unit 800. Here, the ground wire of the second board unit 800 may be a wire connected or linked to the ground terminal among the terminals of the second board unit 800.

In FIG. 22B, for example, one end of the second capacitor 290A2 may be directly connected or conductively linked to the second wire F2 of the second board unit 800 using solder or a conductive adhesive, and the other end of the second capacitor 290A1 may be directly connected or conductively linked to the ground wire (or the earth wire) of the second board unit 800.

In FIG. 22B, for example, one end of the third capacitor 290B1 may be directly connected or conductively linked to the second wire F7 of the second board unit 800 using solder or a conductive adhesive, and the other end of the third capacitor 290B1 may be directly connected or conductively linked to the ground wire (or the earth wire) of the second board unit 800.

In FIG. 22B, one end of the fourth capacitor 290B2 may be directly connected or conductively linked to the second wire F8 of the second board unit 800 using solder or a conductive adhesive, and the other end of the fourth capacitor 290B2 may be directly connected or conductively linked to the ground wire (or the earth wire) of the second board unit 800.

In FIG. 22B, one end of the fifth capacitor 290C1 may be directly connected or conductively linked to the second wire F4 of the second board unit 800 using solder or a conductive adhesive, and the other end of the fifth capacitor 290C1 may be directly connected or conductively linked to the ground wire (or the earth wire) of the second board unit 800.

In FIG. 22B, one end of the sixth capacitor 290C2 may be directly connected or conductively linked to the second wire F5 of the second board unit 800 using solder or a conductive adhesive, and the other end of the sixth capacitor 290C2 may be directly connected or conductively linked to the ground wire (or the earth wire) of the second board unit 800.

For example, the other end of each of the first to sixth capacitors 290A1, 290A2, 290B1, 290B2, 290C1, and 290C2 may be conductively connected or linked to the ground terminal of the second board unit 800 in common.

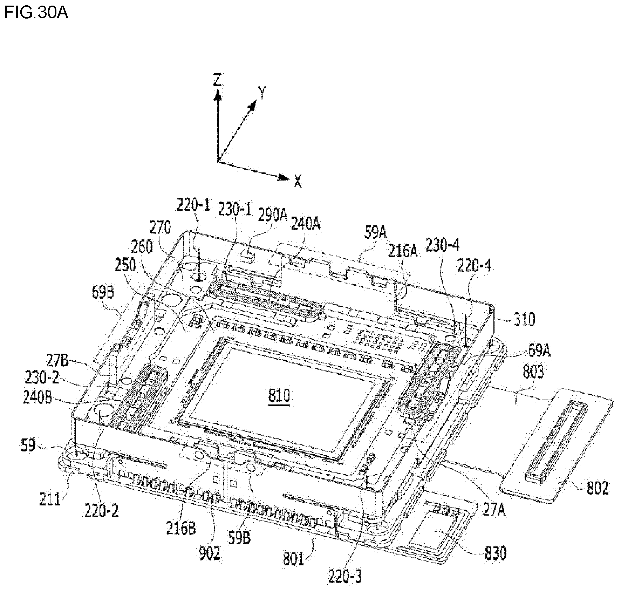

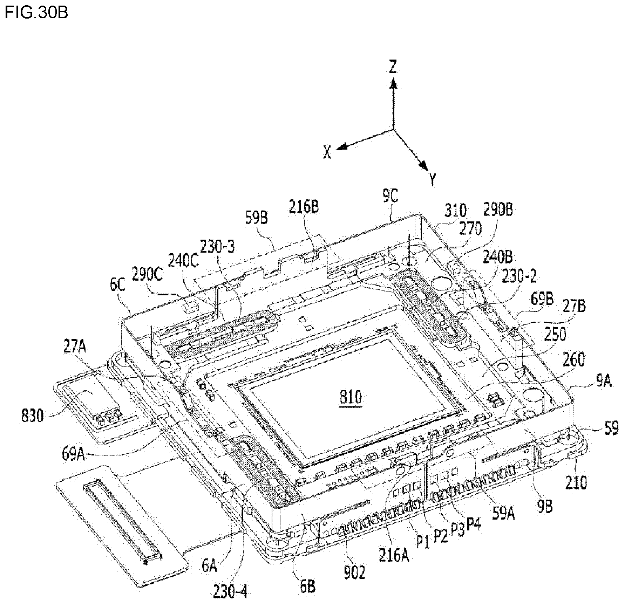

FIG. 30A illustrates disposition of the first capacitor 290A according to a further embodiment. FIG. 30B illustrates disposition of the second and third capacitors 290B and 290C according to a further embodiment.

Referring to FIGs. 30A and 30B, the capacitor 290 may be disposed on the support board 310. For example, the capacitor 290 may be disposed on the inner surface of the support board 310. The capacitor 290 may be conductively connected to the support board 310.

For example, the first to third capacitors 290A to 290C may be disposed on the bodies 86 and 87 of the support board 310. For example, the first to third capacitors 290A to 290C may be disposed on the inner surfaces of the bodies 86 and 87 of the support board 310.

For example, the first capacitor 290A may be disposed closer to the first coil unit 230-1 than to the second coil unit 230-2 and the third coil unit 230-3. For example, the first capacitor 290A may be disposed closer to the first sensor 240A than to the second sensor 240B and the third sensor 240C.

For example, the second capacitor 290B may be disposed closer to the second coil unit 230-2 than to the first coil unit 230-1 and the third coil unit 230-3. For example, the second capacitor 290B may be disposed closer to the second sensor 240B than to the first sensor 240A and the third sensor 240C.

For example, the third capacitor 290C may be disposed closer to the third coil unit 230-3 than to the first coil unit 230-1 and the second coil unit 230-2. For example, the third capacitor 290C may be disposed closer to the third sensor 240C than to the first sensor 340A and the second sensor 240B.

For example, the first capacitor 290A may be connected to two second wires 3-1 and 3-2 of the support board 310 in parallel using solder or a conductive adhesive. For example, the second capacitor 290B may be connected to two other second wires 3-4 and 3-5 of the support board 310 in parallel using solder or a conductive adhesive. For example, the third capacitor 290C may be connected to two other second wires 3-7 and 3-8 of the support board 310 in parallel using solder or a conductive adhesive.

In place of the first to third capacitors 290A to 290C shown in FIGs. 30A and 30B, the first to sixth capacitors 290A1, 290A2, 290B1, 290B2, 290C1, and 290C2 according to the embodiment shown in FIG. 22B may be applied to the support board 310 as follows.

For example, one end of each of the first to sixth capacitors 290A1, 290A2, 290B1, 290B2, 290C1, and 290C2 shown in FIG. 22B may be directly connected or conductively linked to a corresponding one of the second wires 3-1, 3-2, 3-4, 3-5, 3-7, and 3-8 of the support board 310 using solder or a conductive adhesive.

The other end of each of the first to sixth capacitors 290A1, 290A2, 290B1, 290B2, 290C1, and 290C2 may be conductively connected or linked to the ground wire (or the earth wire) of the support board 310 in common.

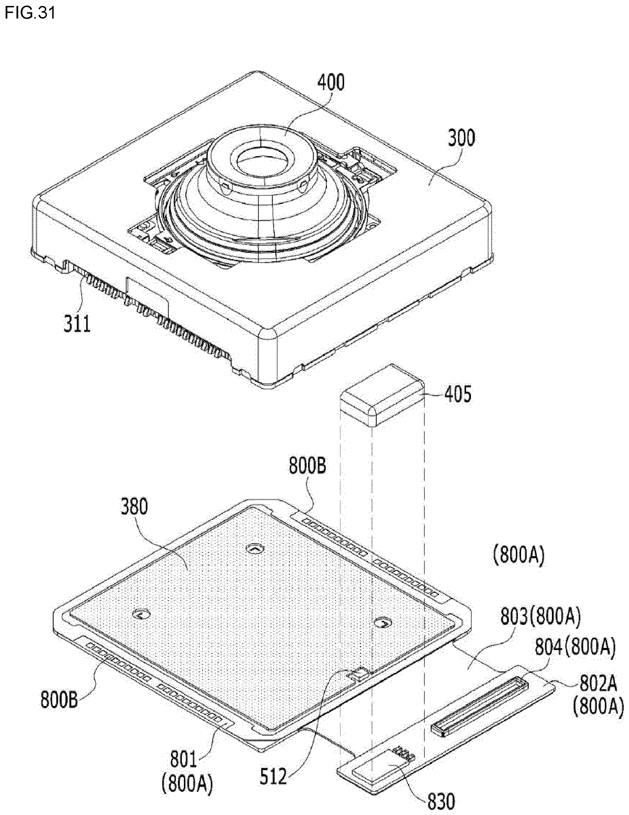

FIG. 31 illustrates a modification of disposition of the controller 830 shown in FIG. 21A.

Referring to FIG. 31, a second board unit 800A shown in FIG. 31 may not include the extension region 808 shown in FIG. 21A, and the controller 830 may be disposed in the second region 802A of the second board unit 800A. For example, the controller 830 may be disposed, coupled or mounted on the upper surface of the second region 802A of the second board unit 800A. The controller 830 may be conductively connected to the second region 802A. For example, the second region 802A may have formed thereon the third wired (or the third conductive pattern) conductively connected to the controller 830, and the third wire (or the third conductive pattern) may be conductively connected to the terminals 800B of the second board unit 800 via the first wires (or the first conductive patterns) of the third region 803 and the first region 801. The description of the width of the first wire may be applied to the third wire with or without modification.

In FIG. 31, the cover can 405 may be disposed, coupled or fixed to the second region 802A of the second board unit 800A. For example, the lower portion, the lower end or the lower surface of the side plate 405B of the cover can 405 may be coupled, attached or fixed to the upper surface of the second region 802A.

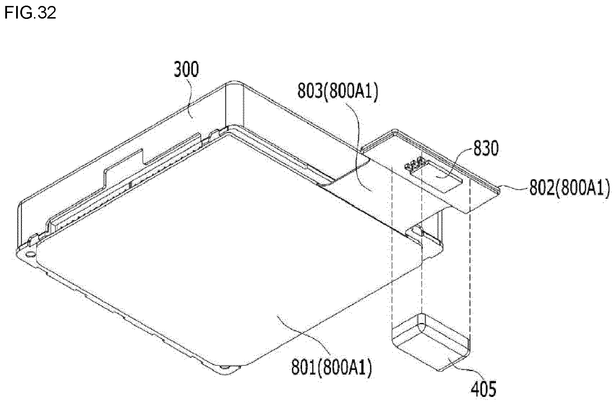

FIG. 32 illustrates another modification of disposition of the controller 830 shown in FIG. 21A.

Referring to FIG. 32, a second board unit 800A1 shown in FIG. 32 may not include the extension region 808 shown in FIG. 21A, and the controller 830 may be disposed, coupled or mounted on the lower surface of the second region 802 of the second board unit 800A1. For example, the second region 802 may have formed thereon a fourth wire (or a fourth conductive pattern) conductively connected to the controller 830, and the fourth wire (or the fourth conductive pattern) may be conductively connected to the terminals 800B of the second board unit 800 via the first wire (or the first conductive pattern) of the third region 803 and the first region 801. The description of the width of the first wire may be applied to the fourth wire with or without modification.

In FIG. 32, the cover can 405 may be disposed, coupled or fixed to the lower surface of the second region 802 of the second board unit 800A. For example, the lower portion, the lower end or the lower surface of the side plate 405B of the cover can 405 may be coupled, attached or fixed to the lower surface of the second region 802A.

Although the connector 804 is disposed on the upper surface of the second regions 802 or 802A of the second board unit 800, 800A or 800A1 in FIGs. 21A, 31 and 32, the connector may be disposed on the lower surface of the second region of the second board unit 800A in another embodiment.

When the first to third capacitors 290A to 290C shown in FIG. 29 are applied to the embodiment shown in FIGs. 31 and 32, the first to third capacitors 290A to 290C may be disposed in the second region 802A or 802 of the second board unit 800A. The second region 802A or 802 and the third region 803 of the second board unit 800A may include first wires connected to the first wires G1 to G8 of the first region 801 of the second board unit 800A and second wires connected to the second wires F1 to F10 of the first region.

The description of the connection relationship between the first to third capacitors 290A to 290C and the second wires F1, F2, F7, F8, F4, and F5 may be applied to the connection relationship between the second wires of the second and third regions 802A or 802 and 803 of the second board unit 800A or 800A1 and the first to third capacitors 290A to 290C shown in FIGs. 31 and 32 with or without modification.

Furthermore, the description the connection relationship between the first to sixth capacitors 290A1, 290A2, 290B1, 290B2, 290C1, and 290C2 and the second wires F1, F2, F7, F8, F4, and F5 shown in FIG. 29 may be applied to the connection relationship between the second wires of the second and third regions 802A or 802 and 803 of the second board unit 800A or 800A1 and the first to sixth capacitors 290A1, 290A2, 290B1, 290B2, 290C1, and 290C2 shown in FIGs. 31 and 32 with or without modification.

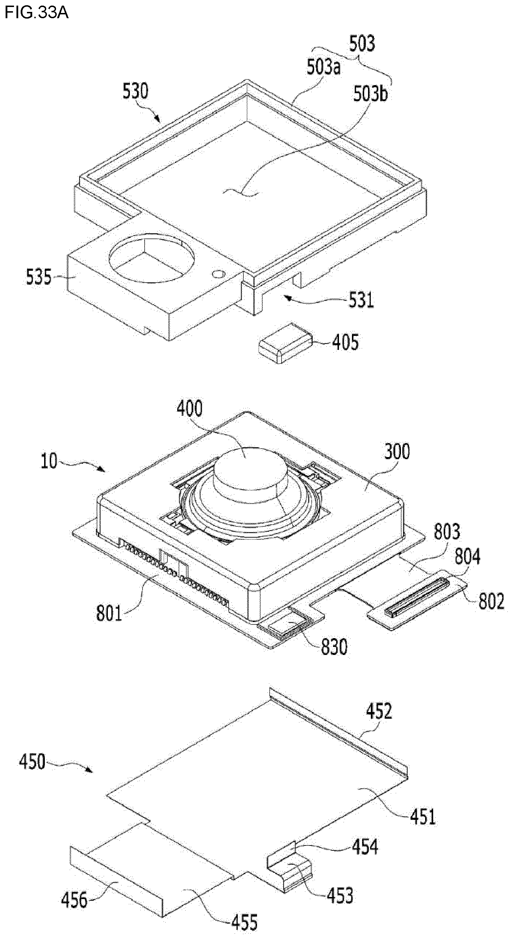

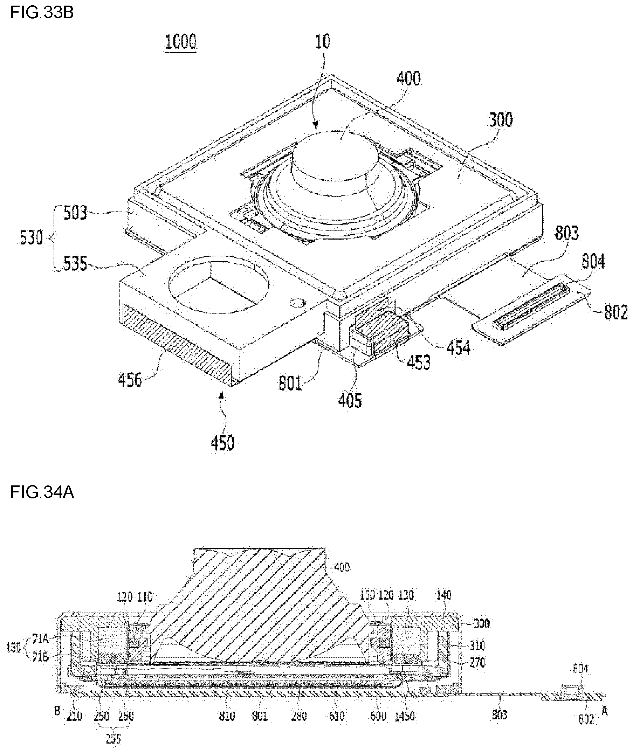

FIG. 33A is an exploded perspective view of the camera device 1000 according to another embodiment. FIG. 33B is an assembled perspective view of the camera device 1000 shown in FIG. 33A.

Referring to FIGs. 33A and 33B, the camera device 1000 may include a first camera device 10, a second camera device (not shown), a bracket 530, and a conductive member 450.

The second camera device may be one of an AF camera module or an OIS camera module. The AF camera module is intended to fulfill only autofocus function, and the OIS camera module is intended to fulfill both autofocus function and OIS function.

The bracket 530 may be a structure in which the camera device is received or accommodated in order to protect the camera device. The bracket 530 may include a first reception portion 503 configured to accommodate the first camera device 10 therein and a second reception portion 535 configured to accommodate the second camera device therein. For example, the first reception portion 503 may include a side wall 503a and a bore (or a through hole) 503a. In another embodiment, the first reception portion may have the form of a box including an upper plate, a side plate, and a bore formed through the upper plate. For example, the second reception portion 535 may have the form of a box including an upper plate, a side plate, and a bore formed through the upper plate. In another embodiment, the second reception portion 535 may also include a side wall and a bore (or a through hole). The reception portion 503 may alternatively be referred to as a first bracket or a first housing, and the second reception portion 535 may alternatively be referred to as a second bracket or a second housing.

Although the first reception portion 503 and the second reception portion 535 may be coupled to each other or may be in contact with each other and the first reception portion 503 and the second reception portion 535 may be integrally formed in FIG. 33A, the first reception portion 503 and the second reception portion 535 may be spaced apart from each other of may be separately constructed in another embodiment.

For example, the bracket 530 may be made of a conductive member. For example, the bracket 530 may be made of metal having high heat radiation efficiency. For example, the bracket 530 may include at least one of SUS, aluminum, nickel, phosphorus, bronze or copper.

The bracket 530 may include a side portion (or a side wall) which corresponds to or faces the side plate 302 of the cover member 300 of the first camera device 10. For example, the inner surface of the side portion (or the side wall) of the bracket 530 may be in contact with the outer surface of the side plate 302 of the cover member 300, and the bracket 530 may improve the heat radiation efficiency.

The bracket 530 may include an escape portion 531 for avoiding spatial interference with the cover can 405. For example, the escape portion 531 may have the form of an opening, a groove or a hole. For example, the escape portion 531 may be formed in the side portion (or the side wall) of the bracket 530.

The conductive member 450 may be disposed below the second board unit 800, and may be in contact with at least one of the second board unit 800, the bracket 530 or the cover can 405.

For example, the conductive member 450 may be coupled, attached or fixed to the second board unit 800, the bracket 430 and the cover can 405. For example, the conductive member 450 may be in contact with the second conductive layer 92A or may be coupled or attached thereto.

The conductive member 450 may transmit and radiate heat generated by the second board unit 800 to the bracket 430, thereby improving heat radiation efficiency of the camera device 10.

Furthermore, the conductive member 450 may conductively connect the second conductive layer 92A, which is conductively connected to the ground (or the ground terminal) of the second board unit 800, to the cover member 300, thereby protecting the camera device 10 from static electricity.

Furthermore, the conductive member 450 may be in contact with the cover can or may be coupled or attached to the cover can 405, and may transmit the heat, transmitted to the cover can 405 from the controller 830, to the bracket 530, thereby improving heat radiation efficiency of the camera device 10.

For example, the conductive member 450 may include a first portion 451, which is disposed below the second board unit 800 and is in contact with the lower surface of the second board unit 800, a second portion 452, which is connected to the first portion 451 and is attached to the bracket 530 so as to be in contact therewith, a third portion 453, which is connected to the first portion 451 and is attached to the cover can 405 so as to be in contact therewith, and a fourth portion 454, which is connected to the third portion and is attached to the bracket 530 so as to be in contact therewith.

Furthermore, the conductive member 450 may further include a fifth portion 455, which is connected to the first portion 451 and is attached to the second camera device so as to be in contact therewith, and a sixth portion 456, which is connected to the fifth portion 455 and is attached to the bracket 530 so as to be in contact therewith.

The conductive member 450 may be made of metal, for example, copper, aluminum or the like. For example, the description of the first heat radiating member 280 may be applied to the conductive member 450 with or without modification.

The conductive member 450 may alternatively be referred to as a "piece of conductive tape" or a "piece of radiating tape".

In another embodiment, the bracket 530 may conductively connect the second conductive layer 92A, which is connected to the ground of the second board unit 800, to the cover member 300, thereby protecting the camera device 10 from static electricity and improving efficiency of heat radiation.

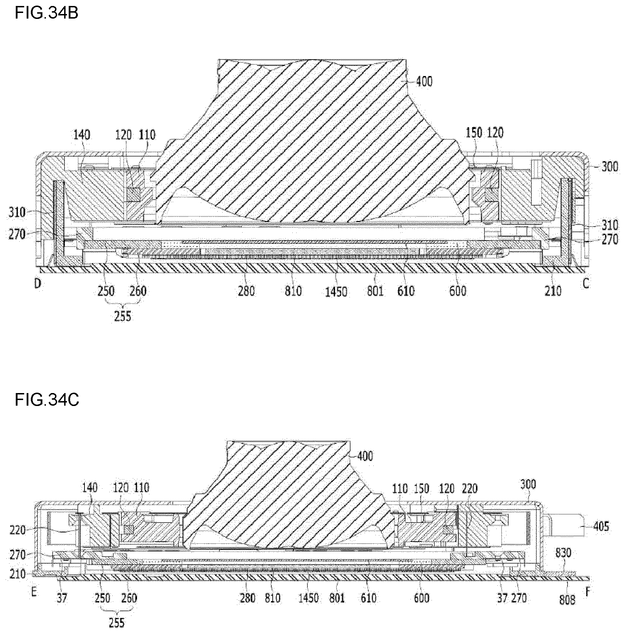

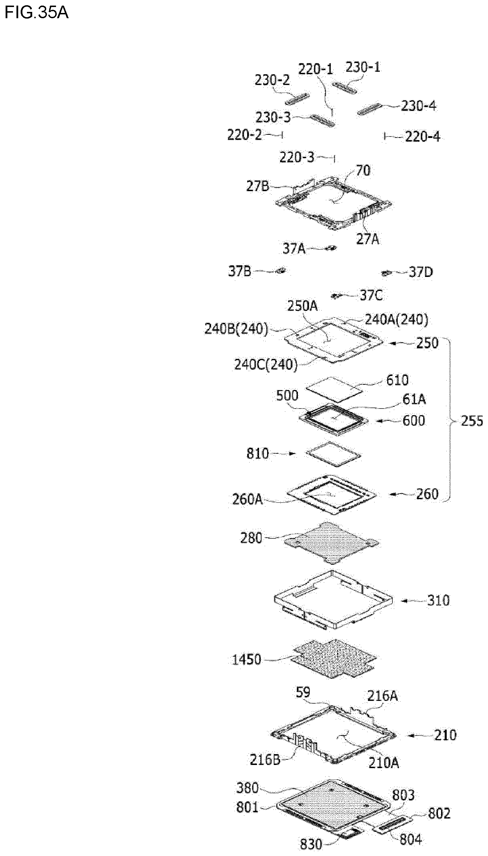

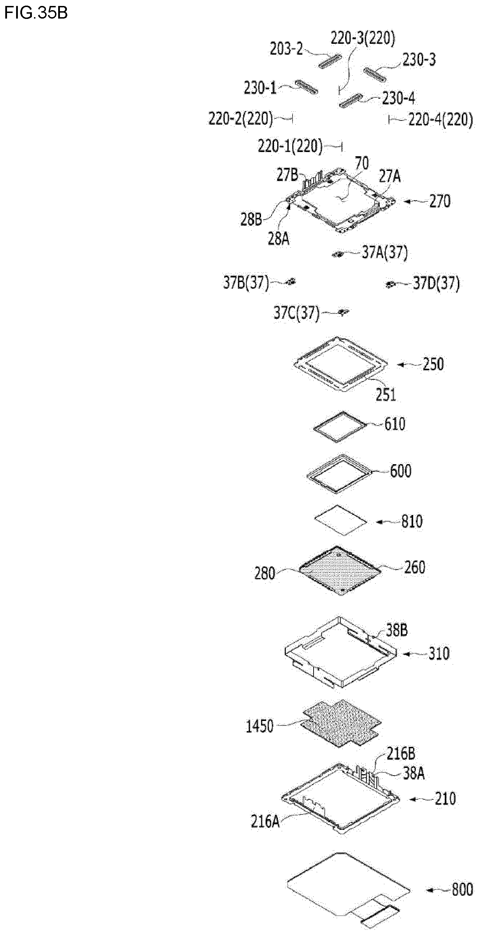

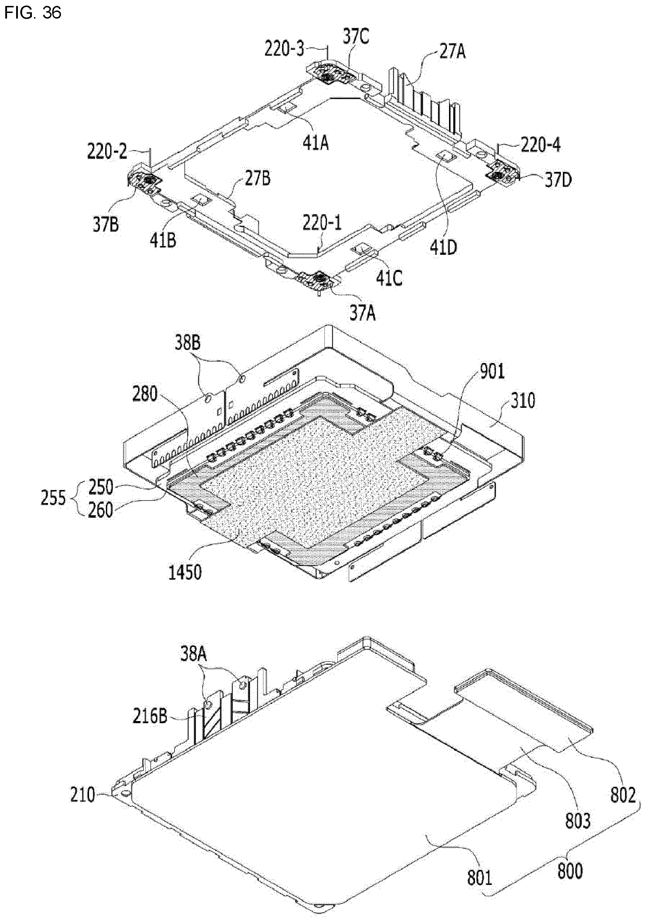

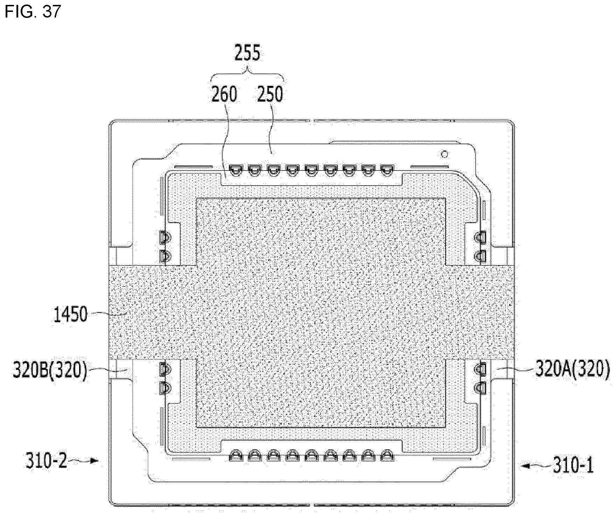

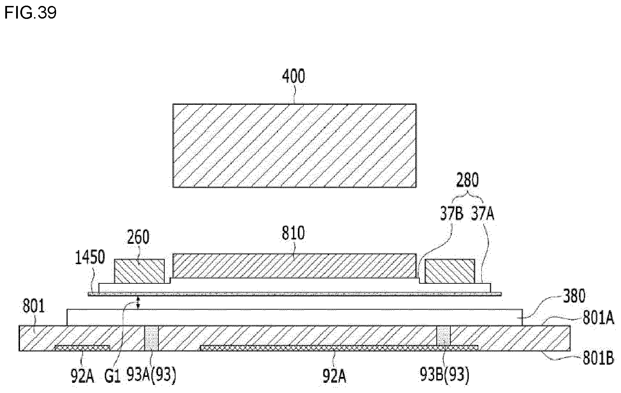

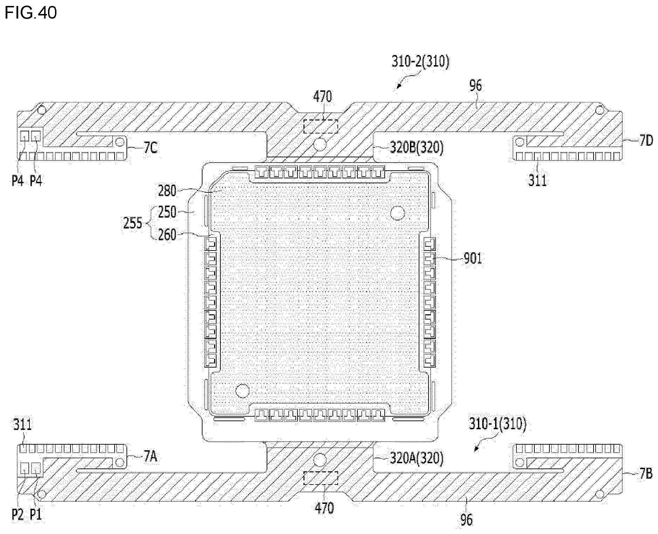

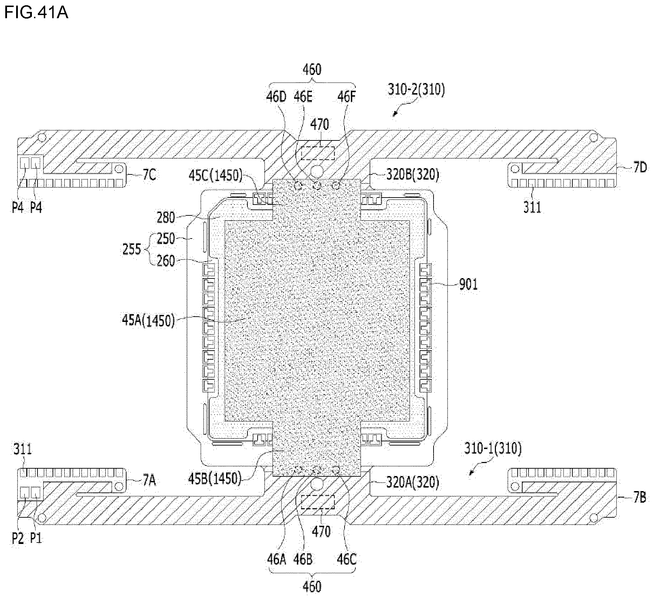

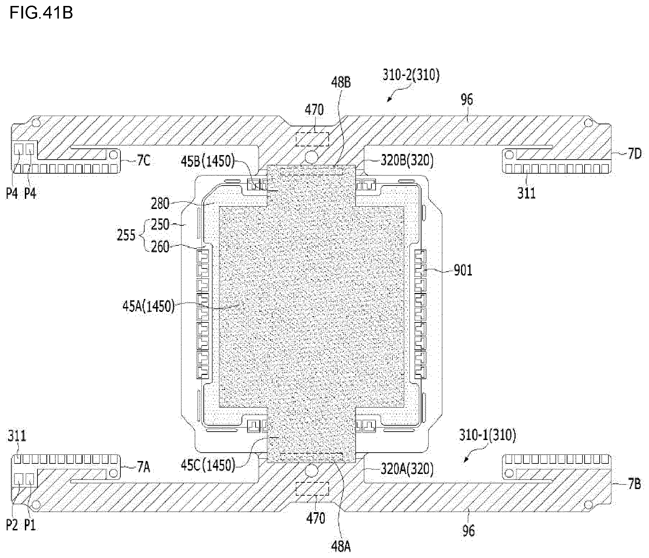

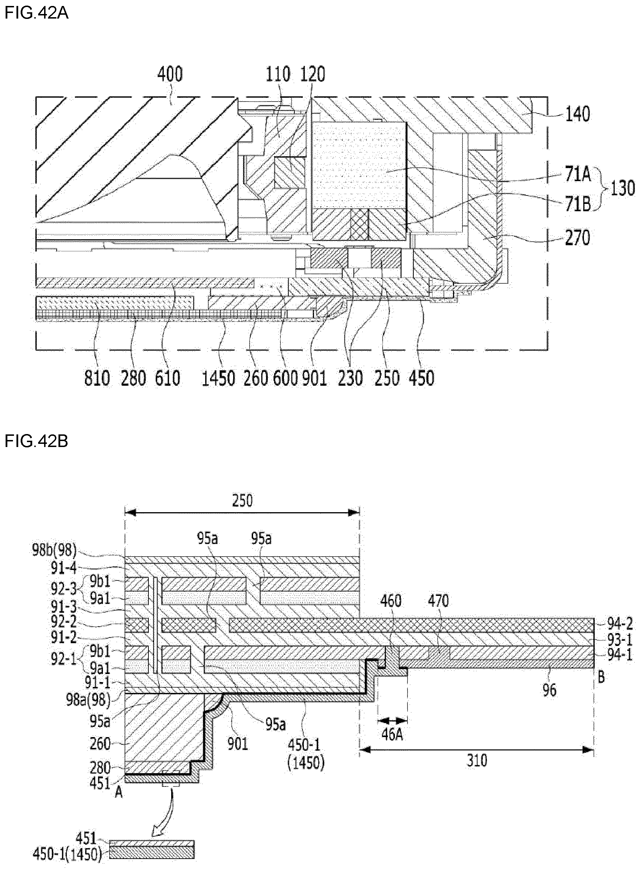

FIG. 34A is a cross-sectional view of the camera device according to another embodiment, taken along line A-B in FIG. 1. FIG. 34B is a cross-sectional view of the camera device according to the embodiment shown in FIG. 34A, taken along line C-D in FIG. 1. FIG. 34C is a cross-sectional view of the camera device according to the embodiment shown in FIG. 34A, taken along line E-F in FIG. 1. FIG. 35A is a first exploded perspective view of the image sensor unit according to the embodiment shown in FIG. 34A. FIG. 35B is a second exploded perspective view of the image sensor unit according to the embodiment shown in FIG. 34A. FIG. 36 is a bottom perspective view of the holder, the terminal unit, the first terminal unit, the support board, the base, and the second board unit shown in FIG. 35A. FIG. 37 is a bottom view of the first board unit, the support board, the first heat radiating member, and the radiating member shown in FIG. 35A. FIG. 38 is a perspective view of the first board unit, the support board, and the radiating member shown in FIG. 35A. FIG. 39 is a schematic cross-sectional view of the lens module, the first board unit, the image sensor, the second board unit, and the radiating member shown in FIG. 35A. FIG. 40 is a lower plan view of the first board unit 255, the support board 310, and the heat radiating member 280 shown in FIG. 35A. FIG. 41A is a view in which the radiating member 1450 is additionally provided to FIG. 40. FIG. 41B is a view illustrating another embodiment of the portions 48A and 48B of the radiating member 1450, which are in contact with the conductive layer 93-1 of the support board 310. FIG. 42A is a fragmentary enlarged view of FIG. 34A. FIG. 42B is a cross-sectional view of an embodiment of the first board unit 255, the heat radiating member 280, the support board 310, and the radiating member 1450 shown in FIG. 42A.

Referring to FIGs. 34A to 42B, for example, the camera device 10 may include the stationary unit, a moving unit including the first radiating body 280 disposed on the stationary unit and the image sensor 810 disposed on the first radiating body 280, a support unit (for example, 310) configured to support the moving unit such that the moving unit is movable in a direction perpendicular to the optical-axis direction, and the second radiating body 1450 connecting the first radiating body 280 to the support unit (for example, 310). The support unit (for example, 310) may be connected between the moving unit and the stationary unit.

The moving unit may include the first board unit 255 on which the image sensor 810 is disposed, the stationary unit may include the second board unit 800 which is disposed so as to be spaced apart from the first board unit 255, and the support unit may connect the first board unit 255 to the second board unit 800.

The second radiating body 1450 may include a body 45A coupled to the lower surface of the first radiating body 280, and connecting portions 45B and 45C connecting the body 45A to the support unit (for example, 310).

The second radiating body 1450 may include a first region coupled to the first radiating body 280 and a second region coupled to the support unit. The second radiating body 1450 may include a graphite sheet.

The support unit may include a conductive layer 93-1, a first insulating layer 94-1 disposed on the lower surface of the conductive layer 93-1, and a second insulating layer 94-2 disposed on the upper surface of the conductive layer 93-1. In the support unit, a portion of the first insulating layer 94-1 may be removed such that a region of the conductive layer 93-1 is exposed and the second radiating body 1450 is coupled to at least a portion of the region of the conductive layer 93-1 and the first radiating body 280.

The second radiating layer 450 may be in contact with a portion of the conductive layer 93-1 of the support unit.

The support unit may include the third radiating body 96. The second radiating body 1450 may be in contact with the third radiating body 96. The third radiating body 96 may be disposed below the first insulating layer 94-1. The third radiating body 96 may include a graphite sheet.

The second radiating body 1450 may be in contact with the first radiating body 280, the first board unit 255, and the support unit.

The first board unit 255 may include the first circuit board 250 connected to the support unit, the second circuit board 260 conductively connected to the image sensor 810, and the solder 901 conductively connecting the first circuit board 250 to the second circuit board 260.

The camera device 10 may include an insulating layer 451 disposed between the solder 901 and the second radiating body 1450.

The camera device 10 may include the cover member 300 configured to accommodate therein the moving unit and the support unit, and may include a fourth radiating body 480 connected to the cover member 300 and the support unit. The cover member 300 may include the upper plate 301 and the side plate 302 connected to the upper plate 301. The side plate 302 may have an opening 307 through which a portion of the support unit is exposed. The fourth radiating body 480 may be in contact with the side plate 302 and a portion of the support unit that is exposed through the opening 307. The fourth radiating body 480 may include a graphite sheet.

The camera device 10 according to another embodiment may include the first radiating body 280, the first board unit 255 disposed on the first radiating body 280, the image sensor 810 disposed on the first radiating body 280, the second board unit 800 disposed so as to be spaced apart from the first board unit 255, the support unit (for example, 310) configured to support the image sensor 810 such that the image sensor 810 is movable in a direction perpendicular to the optical-axis direction and to conductively connect the first board unit 255 to the second board unit 800, and the second radiating body 1450 connecting the first radiating body 280 to the support unit (for example, 310).

The camera device 10 according to another embodiment may include the moving unit including the first radiating body 280, the first board unit 255 disposed on the first radiating body 280, and the image sensor 810 conductively connected to the first board unit 255, the stationary unit including the second board unit 800 disposed so as to be spaced apart from the first board unit 255, the support unit (for example, 310) configured to support the moving unit such that the moving unit is movable in a direction perpendicular to the optical-axis direction and to conductively connect the first board unit 255 to the second board unit 800, and the second radiating body 1450 connecting the first radiating body 280 to the support unit (for example, 310) .

The camera device 10 according to a further embodiment may include the moving unit including the first board unit 255 and the image sensor 810 disposed on the first board unit 255, the stationary unit including the second board unit 800 which is disposed so as to be spaced apart from the first board unit 255, the support unit (for example, 310) configured to support the moving unit such that the moving unit is movable relative to the stationary unit in a direction perpendicular to the optical-axis direction and to conductively connect the first board unit 255 to the second board unit 800, the cover member 300 accommodating therein the moving unit and the support unit (for example, 310), and the radiating member 480 connected to the cover member 300 and the support unit (for example, 310). The cover member 300 may include the upper plate 301 and the side plate 302 connected to the upper plate 301. The side plate 302 may have an opening 307 through which a portion of the support unit (for example, 310) is exposed. The first heat radiating member 480 may be in contact with the side plate 302 and a portion of the support unit (for example, 310). The support unit (for example, 310) may include the second heat radiating member 96, and the first heat radiating member 480 may be in contact with the second heat radiating member 96. The support unit (for example, 310) may include the conductive layer 93-1, the first insulating layer 94-1 disposed on the lower surface of the conductive layer 93-1, and the second insulating layer 94-2 disposed on the upper surface of the conductive layer 93-1. The first heat radiating member 480 may include a portion which is in contact with a portion of the conductive layer 93-1. The first board unit 255 may include the third heat radiating member 280 on which the image sensor 810 is disposed. The camera device 10 may include the fourth radiating member 1450 connected to the third heat radiating member 280 and the support unit (for example, 310).

The first circuit board 250 may be a rigid board, and the support board 310 may be a flexible board.

Referring to FIG. 38, the support board 310 may include the conductive layer 93-1. Furthermore, the support board 310 may include the first insulating layer 94-1 disposed on one surface (or a first surface) or one side of the conductive layer 93-1. Furthermore, the support board 310 may include the second insulating layer 94-2 disposed on the other surface (or a second surface) or the other side of the conductive layer 93-1. For example, the support board 310 may include the heat radiating member 96. In another embodiment, for example, the support board 310 may include at least one of the first insulating layer 94-1, the second insulating layer 94-2, or the heat radiating member 96.

For example, the heat radiating member 96 may be an outer surface of the support board 310. The reason for this is to cause the heat radiating member 96 and the heat radiating member 450 to be brought into contact with each other or to be connected to each other. Hereinafter, the "heat radiating member" may alternatively be referred to as "heat radiating sheet", "heat radiating tape", "heat radiating layer", "heat radiating film", "heat radiating plate", "heat radiating plate", or "heat radiating body".

For example, the heat radiating member 96 may be one surface of the support board 310 on which the terminals P1 to P4 and/or the terminal 311 of the support board 310 are formed. For example, the terminals P1 to P4 and/or the terminal 311 may be exposed from the heat radiating member 96.

The heat radiating member 96 may include a heat radiating material having high thermal conductivity. For example, the heat radiating member 96 may include metal having high thermal conductivity. For example, the heat radiating member 96 may include graphite. For example, the heat radiating member 96 may be a conductive member or a piece of conductive tape. For example, the heat radiating member 96 may be a graphite layer or a graphite sheet.

For example, the heat radiating member 96 may be disposed on at least one of the connecting portions 320A and 320B, the bodies 86 and 87 and the terminal portions 7A to 7D of the support board 310. For example, the heat radiating member 96 may be disposed on the connecting portions 320A and 320B and the terminal portions 7A to 7D of the support board 310. For example, the area in which the heat radiating member 96 is disposed may be the obliquely hatched portion of the support board 310 in FIGs. 40 and 41A.

The camera device 10 may further include a protective layer or an insulating layer disposed on the heat radiating member 96 in order to protect the heat radiating member 96 from external shock or to prevent corrosion or oxidization of the heat radiating member 96. For example, the protective layer may cover at least a portion of the heat radiating member 96. In FIG. 38, for example, the protective layer may be disposed at a lower side or an outer side of the heat radiating member 96. For example, the lower side or the outer side of the heat radiating member 96 may be a side close to P in FIG. 38.

In another embodiment, the camera device 10 may include the protective layer disposed between the heat radiating member 96 and the first insulating layer 94-1 in FIG. 38.

For example, the protective layer may be made of polyethylene terephthalate (PET). In another embodiment, the protective layer may be an EMI-shielding member, for example, a piece of EMI-shielding tape.

For example, the first circuit board 250 may include a plurality of conductive layers 91-1 to 91-m (m being a natural number greater than 1). Although FIG. 42B illustrates four conductive layers 91-1 to 91-4 which are sequentially formed, the disclosure is not limited thereto. The number of conductive layers may be two or more.

For example, at least one of the plurality of conductive layers may include a piece of copper film, a wire or a conductive pattern layer for transmitting an electrical signal. For example, the conductive layers 91-1 to 91-4 may be made of conductive metal, for example, copper, aluminum, gold, silver or an alloy including at least one thereof. For example, the conductive layers 91-1 to 91-4 may include at least one of a pattern layer, a wire, or a terminal (or a pad).

For example, the first circuit board 250 may include insulating layers 92-1 to 92-3 disposed between the plurality of conductive layers 91-1 to 91-4. The insulating layers 92-1 to 92-3, which are intended to provide electrical insulation between the conductive layers 91-1 to 91-4, are capable of preventing electrical short between the conductive layers 91-1 to 9-4.

Although FIG. 42B illustrates three insulating layers 92-1 to 92-3 disposed between the conductive layers, the disclosure is not limited thereto. The number of insulating layers may be determined depending on the number of conductive layers, and may be one of more. The insulating layer may alternatively be referred to as "insulating foil" or "insulating film".

The first circuit board 250 may include at least one of a rigid insulating layer made of a rigid material or a flexible insulating layer made of a flexible material. Here, the flexible insulating layer may have a property of being flexibly bent, and the rigid insulating layer may have a higher strength or hardness than the flexible insulating layer.

For example, the flexible insulating layer may include flexible resin, for example, polyimide. For example, the rigid insulating layer may include rigid resin, for example, prepreg. For example, the rigid insulating layer may include prepreg and coverlay. For example, the coverlay may include resin. Furthermore, for example, the coverlay may include resin and an adhesive. For example, the resin may be polyimide. For example, the coverlay may be formed into a film or a sheet.

For example, at least one of the plurality of insulating layers 92-1 to 92-3 of the first circuit board 250 may be a rigid insulating layer, and at least one of the plurality of insulating layers 92-1 to 92-3 may be a flexible insulating layer.

For example, the first circuit board 250 may include a first insulating layer 92-1 disposed between the first insulating layer 92-1 and the second conductive layer 91-2, a second insulating layer 92-2 disposed between the second conductive layer 91-2 and the third conductive layer 91-3, and a third insulating layer 92-3 disposed between the third conductive layer 91-3 and the fourth conductive layer 91-4.

For example, each of the first insulating layer 92-1 and the third insulating layer 92-3 may be a rigid insulating layer. For example, each of the first insulating layer 92-1 and the third insulating layer 92-3 may include a prepreg 9a1 and a coverlay 9b1.

The second insulating layer 92-2 may be a flexible insulating layer. For example, the second insulating layer 92-2 may include polyimide.

The first circuit board 250 may include a cover layer which is positioned at the outermost conductive layers (for example, 91-1 and 91-4) in order to protect the conductive layers 91-1 to 91-4 from external shock or the like. For example, the cover layer 98 may include a first cover layer 98a disposed on the lower surface of the first conductive layer 91-1 which is the lowermost conductive layer, and a second cover layer 98b disposed on the upper surface of the fourth conductive layer 91-4 which is the uppermost conductive layer.

The cover layer 98 may be made of an insulating material, for example, solder resist (SR). For example, the cover layer 98 may be made of photo solder resist (PSR) or dry-film type solder resist (DFSR).

Next, the support board 310 may include the conductive layer 93-1, the first insulating layer 94-1 disposed on the lower surface of the conductive layer 93-1, and the second insulating layer 94-2 disposed on the upper surface of the conductive layer 93-1. The first and second insulating layers 94-1 and 94-2 may surround the conductive layer 93-1 in order to conductively insulate the conductive layer 93-1. For example, the first insulating layer 94-1 may alternatively be referred to as a "base member" or a "base layer".

The conductive layer 93-1 may include at least one of a pattern layer, a wiring layer, or a terminal (or a pad). For example, the conductive layer 93-1 may include the terminal 311.

Each of the first and second insulating layers 94-1 and 94-2 may be a flexible insulating layer. For example, the first insulating layer 94-1 may be made of coverlay, and the second insulating layer 94-2 may be made of polyimide.

For example, the first insulating layer 94-1 of the support board 310 may be the same layer as the coverlay 9b1. For example, the same layer may be a layer which is made of the same material through the same process. For example, the first insulating layer 94-1 of the support board 310 may be connected to the coverlay 9b1 of the first circuit board 250.

For example, the conductive layer 93-1 of the support board 310 may be the same layer as the second conductive layer 91-2 of the first circuit board 250. For example, the second insulating layer 94-2 of the support board 310 may be the same layer as the second insulating layer 92-2 of the first circuit board 250.

The first circuit board 250 may include a via 95A configured to conductively connect two conductive layers among the plurality of conductive layers to each other. Here, the term "via" may alternatively be referred to as "contact" or "contact via". The via may extend through the insulating layers positioned between two conductive layers which are to be conductively connected to each other.

The heat radiating member 1450 may connect the support board 310 to the heat radiating member 280.

For example, the heat radiating member 1450 may connect the radiating member 280 to the connecting portion 320 of the support board 310. For example, at least a portion of the heat radiating member 1450 may be in contact with, coupled or attached to the heat radiating member 280, and at least another portion of the heat radiating member 1450 may be in contact with, coupled or attached to the support board 310 (for example, the connecting portion 320) .

For example, a portion of the heat radiating member 1450 may be in contact with, coupled or attached to a portion of the first board unit 255. For example, a portion of the heat radiating member 1450 may be in contact with, coupled or attached to at least one of the first circuit board 250 or the second circuit board 260.

For example, the heat radiating member 1450 may include the body 45A, which is in contact with, coupled or attached to the heat radiating member 280, and the connecting portions (or extending portions) 45B and 45C connecting the body 45A to the support board 310. For example, the body 45A may alternatively be referred to as a "first portion" or a "first region". Furthermore, the connecting portion 45B or 45C may include a second region, which is contact with, coupled or attached to the support board 310, and a third region connecting the first region and the second region of the support board 310 to each other.

For example, the connecting portion may include a first connecting portion 45B connecting one side of the body 45A to a portion (for example, 320A) of the support board 320, and a second connecting portion 45C connecting another side of the body 45A to another portion (for example, 320B) of the support board 320. For example, the first connecting portion 45B and the second connecting portion 45C may be positioned opposite each other with the body 45A interposed therebetween. For example, the crosswise length of each of the first and second connecting portions 45B and 45C may be less than the crosswise length of the body 45A. In another embodiment, for example, the crosswise length of each of the first and second connecting portions 45B and 45C may be equal to or greater than the crosswise length of the body 45A.

In FIG. 41B, the heat radiating member 1450 may not be disposed in one area of the lower surface of the heat radiating member 280. For example, the area of the lower surface, on which the heat radiating member 280 is not disposed, may be the peripheral area of the lower surface of the heat radiating member 280. For example, the peripheral area may be an area of the lower surface of the body 45A which falls within a predetermined range on the outer surface of the heat radiating member 280.

In another embodiment, the heat radiating member 1450 may cover the entire area of the lower surface of the heat radiating member 280. For example, the heat radiating member 1450 may cover 50 to 100% of the entire area of the lower surface of the heat radiating member 280. Alternatively, the heat radiating member 1450 may cover 50 to 90% of the entire area of the lower surface of the heat radiating member 280. Alternatively, the heat radiating member 1450 may cover 50 to 80% of the entire area of the lower surface of the heat radiating member 280.

When the covered area is less than 50%, heat radiation efficiency (or heat radiation performance) may be lowered. Meanwhile, when the covered area is greater than 80% and equal to or less than 100%, improvement of heat radiation efficiency (or heat radiation performance) may be small. From an economical point of view, the covered area may be equal to or less than 80%.

Although the connecting portions 45B and 45C of the heat radiating member 1450 are coupled to the connecting portion 320 of the support board 310 in FIG. 41B, the connecting portions 45B and 45C of the heat radiating member 1450 may be connected, coupled or attached to the bodies 86 and 87 and the connecting portion 320 of the support board 310 in another embodiment.

For example, the heat radiating member 1450 (for example, the body 45A) may be coupled or attached to the lower surface of the heat radiating member 280 using an adhesive. Furthermore, for example, the heat radiating member 1450 may be coupled or attached to the outer surface of the support board 310 using an adhesive.

For example, the heat radiating member 1450 may be coupled or attached to the outer surface of the connecting portions 320A and 320B. Here, the outer surface of the support board 310 may be a surface close to character "P" in FIG. 16. For example, the outer surface of the support board 310 may be a surface corresponding to the heat radiating member 96 of the support board 310 in FIG. 16.

The support board 310 may include the heat radiating member 96, and the heat radiating member 1450 may be connected to or in contact with the heat radiating member 96 of the support board 310. Referring to FIG. 42B, for example, at least a portion of the heat radiating member 1450 may overlap the heat radiating member 96 of the support board 310. Referring to FIG. 42B, at least a portion of the heat radiating member 1450 may be in contact with the heat radiating member 96 of the support board 310. For example, a portion of the heat radiating member 1450 may be disposed below the heat radiating member 96 of the support board 310.

Assuming that the heat radiating member 280 is a portion of the first board unit 255, the heat radiating member 1450 may be coupled or connected to the first board unit 255. For example, the heat radiating member 1450 may overlap the image sensor 810 in the optical-axis direction. For example, the heat radiating member 1450 may overlap the heat radiating member 280 in the optical-axis direction.

The heat generated by the image sensor 810 may be transmitted to the heat radiating member 1450 via the heat radiating member 280. The heat radiating member 1450 may serve to transmit the heat, transmitted from the heat radiating member 280, to the support board 310. By virtue of the heat radiating member 1450, it is possible to improve heat transmission from the heat radiating member 280 to the support member 310, and the embodiment is able to improve heat radiation efficiency and heat radiation performance. Furthermore, the heat radiating member 96 of the support member 310 may serve to radiate the heat transmitted from the heat radiating member 1450, with the result that the embodiment is able to improve heat radiation efficiency and heat radiation performance.

The heat radiating member 1450 may include a heat radiating material having high thermal conductivity. For example, the heat radiating member 1450 may be made of metal having high thermal conductivity. For example, the heat radiating member 1450 may include graphite. For example, the heat radiating member 1450 may be a conductive member or a piece of conductive tape. For example, the heat radiating member 1450 may be a graphite layer or a graphite sheet.

For example, the heat radiating member 1450 may include a conductive member 1450-1, and may have electrical conductivity. A portion (for example, the connecting portions 45B and 45C) of the heat radiating member 1450 may be disposed on the solder 901, and may be in contact with or attached to the solder 901. For example, at least a portion of the heat radiating member, for example, the connecting portions 45B and 45C may overlap the solder 901, the terminal 251 of the first circuit board 250, and the terminal 261 of the second circuit board 260 in the optical-axis direction.

In order to prevent electrical short between the solder 901 and the heat radiating member 1450, the insulating member 451 may be disposed between the solder 901 and the heat radiating member 1450. For example, the insulating member 451 may be disposed between the heat radiating member 1450 and the terminal 251 of the first circuit board 250. For example, the insulating member 451 may be disposed between the heat radiating member 1450 and the terminal 261 of the second circuit board 260. For example, the insulating member 451 is capable of preventing electrical short between the solder 901 and the heat radiating member 1450 and of preventing damage to the first board unit 255 attributable to electrical short.

For example, the insulating member 451 may include an insulating material. For example, the insulating member may be made of a resin material or insulating tape. For example, the insulating member 451 may be an insulating adhesive. The insulating member 451 may alternatively be referred to as an "insulating layer".

For example, the insulating member 451 may be disposed between the heat radiating member 1450 and the solder 901. Furthermore, for example, the insulating member 451 may be disposed between the heat radiating member 1450 and the first board unit 255. Furthermore, for example, the insulating member 451 may be disposed between the heat radiating member 1450 and the second circuit board 260. For example, the insulating member 451 may be disposed between the heat radiating member 1450 and the first circuit board 255.

In another embodiment, for example, the insulating member 451 may be a component of the heat radiating member 1450. In another embodiment, for example, the heat radiating member 1450 may include the conductive member 1450-1 and the insulating member 451. For example, the heat radiating member 1450 may be composed of two layers. One of the two layers may be the conductive member 1450-1, and the other of the two layers may be the insulating member 451.

In another embodiment, the heat radiating member 1450 may be a non-conductive member or an insulating member.

In a further embodiment, in order to prevent electrical short between the heat radiating member 1450 and the solder 901, the solder may not be disposed in the area in which the heat radiating member 1450 is disposed. In another embodiment, for example, the solder connecting the first circuit board 250 to the second circuit board 260 may not overlap the heat radiating member 1450 in the optical-axis direction. In another embodiment, for example, the terminal 251 of the first circuit board 250, the terminal 261 of the second circuit board 260, and the solder 901 may avoid spatial interference with the heat radiating member 1450, and the terminal 251 of the first circuit board 250, the terminal 261 of the second circuit board 260, and the solder 901 may not be in contact with each other. In another embodiment, for example, the terminals 251 and 261 of the first and second circuit boards 250 and 260 and the heat radiating member 1450 may not overlap each other in the optical-axis direction, and may not be in contact with each other.

For example, the heat radiating member 96 of the support board 310 may be made of the same material as the heat radiating member 1450, and the description of the heat radiating member 1450 may be applied to the heat radiating member 96 of the support board 310 with or without modification. For example, the heat radiating member 96 may be coupled or attached to the first insulating layer 94-1 using an adhesive member.

Referring to FIG. 42B, the heat radiating member 1450 may include a portion 460 which is coupled or attached to or in contact with a portion of the conductive layer 93-1 of the support board 310.

For example, the support board 310 may include a portion of the conductive layer 93-1 which is exposed from the insulating layer 94-1, and the portion 460 of the heat radiating member 1450 may be coupled or attached to or in contact with a portion of the conductive layer 93-1.

For example, because the support board 310 may be provided with a portion of the insulating layer 94-1, an area (for example, a "first exposed area") of the conductive layer 93-1 may be exposed, and the portion 460 or 48A/48B of the heat radiating member 1450 may be coupled or attached to or in contact with at least a portion of the first exposed area of the conductive layer 93-1. For example, the heat radiating member 1450 may be conductively connected to the first exposed area of the conductive layer 93-1. For example, heat may be transmitted between the heat radiating member 1450 and the first exposed area of the conductive layer 93-1.

Furthermore, for example, because the support board 310 may not be provided with a portion of the insulating layer 94-1, another area (for example, a "second exposed area") of the conductive layer 93-1 may be exposed, and a portion 470 of the heat radiating member 96 may be coupled or attached to or in contact with at least a portion of the second exposed area of the conductive layer 93-1. For example, the heat radiating member 96 may be conductively connected to the second exposed area of the conductive layer 93-1. For example, heat may be transmitted between the heat radiating member 96 and the second exposed area of the conductive layer 93-1.

In FIGs. 41A and 41B, for example, the first exposed area may have a shape corresponding to the portion 460 or 48A/48B of the heat radiating member 1450. In FIG. 41A, for example, the support board 310 may include a plurality of first exposed areas. For example, the first exposed areas may be formed at a single connecting portion 45B or 45C so as to be spaced apart from each other. Each of the first exposed areas may have a circular shape, an elliptical shape, or a polygonal shape (for example, a quadrilateral shape). In FIG. 41A, for example, the surface area of the first exposed area may be smaller than the surface area of each of the connecting portions 45B and 45C. In FIG. 41A, for example, the surface area of the first exposed area may be equal to or smaller than the surface area of the second exposed area of the conductive layer 93-1 corresponding to a portion 470 of the heat radiating member 96. In another embodiment, the surface area of the first exposed area may be larger than the surface area of the second exposed area.

In FIG. 41B, one first exposed area may be formed at one connecting portion 45B or 45C. In FIG. 41B, the shape of the first exposed area may be a rectangular shape. For example, the surface area of the first exposed area may be smaller than the surface area of each of the connecting portions 45B and 45C. In FIG. 41B, for example, the surface area of the first exposed area may be equal to or larger than the surface area of the second exposed area. In FIG. 41B, in another embodiment, the surface area of the first exposed area may be smaller than the surface area of the second exposed area.

For example, the portion 460 or 48A/48B of the heat radiating member 1450 may extend through the insulating layer 94-1 and may be coupled or attached to or in contact with a portion of the conductive layer 93-1. For example, the portion 460 or 48A/48B of the heat radiating member 1450 may be a portion of the connecting portions 45A, 45B.

For example, a portion (the first exposed area) of the conductive layer 93-1, which is in contact with the portion 460 or 48A/48B of the heat radiating member 1450, may be the ground layer of the support board 310. Here, the ground layer of the support board 310 may be a layer connected to the ground terminal among the terminals 311 of the support board 310. Alternatively, for example, the ground layer of the support board 310 may be conductively connected to the ground terminal among the terminals 311 of the second board unit 800. Alternatively, for example, the ground layer of the support board 310 may be conductively connected to the ground terminal among the terminals 251 of the first circuit board 250 or the ground terminal among the terminals 261 of the second circuit board 260.

Because the portion 460 or 48A/48B of the heat radiating member 1450 may be in contact with the conductive layer 93-1, it is possible to transmit or radiate heat through the conductive layer 93-1, with the result that the embodiment is able to improve heat radiation efficiency and heat radiation performance. Particularly, because the surface area of the ground layer may be larger than the width or the surface area of the wiring layer of the support board 310 when a portion of the conductive layer 93-1, which is in contact with the portion 460 of the heat radiating member 1450, is the ground layer of the support board 310, it is possible to further improve heat radiation efficiency and heat radiation performance.

For example, the portion 460 or 48A/48B of the heat radiating member 1450 may be a portion which is coupled to or in contact with the heat radiating member 96 of the support board 310. For example, a portion of the heat radiating member 1450 may be positioned in the area 46A in which the heat radiating member 1450 and the heat radiating member 96 of the support board 310 overlap each other. For example, the portion 460 of the heat radiating member 1450 may extend through the heat radiating member 96 and the insulating layer 94-1 and may be coupled or attached to or in contact with a portion of the conductive layer 93-1.

In FIG. 42A, the portion 460 of the heat radiating member 1450 may be one or more in number. For example, the portion 460 of the heat radiating member 1450 may include a plurality of portions 46A to 46F which are spaced apart from each other.

For example, the first connecting portion 45A may include one or more portions 46A to 46C, and the second connecting portion 45B may include one or more portions 46D to 46F. For example, portions 46A to 46C of the first connecting portion 45A may be in contact with the conductive layer 93-1 of the first connecting portion 320A of the support board 310, and portions 46D to 46F of the second connecting portion 45B may be in contact with the conductive layer 93-1 of the second connecting portion 320B of the support board 310.

When the heat radiating member 1450 is viewed from the front, for example, the portion 460 of the heat radiating member 1450 may have a circular shape, an elliptical shape or a polygonal shape, and may have various shapes in another embodiment.

For example, the distances between the plurality of portions 46A to 46C may be the same. In another embodiment, the distances between the plurality of portions 46A to 46C may be different from each other. The plurality of portions 46A to 46C may be disposed adjacent to the periphery of the connecting portion. In another embodiment, the plurality of portions 46A to 46C may be disposed in the central area of the connecting portion.

In another embodiment, the portion 460 of the heat radiating member 1450, which is in contact with a portion of the conductive layer 93-1, may be omitted.

Referring to FIG. 41B, each of the portions 48A and 48B of the heat radiating member 1450 may have a rectangular shape. Because the embodiment shown in FIG. 41B is different in shape from the embodiment shown in FIG. 41A, the description of the portion 460 of the heat radiating member shown in FIG. 41A may be applied to the portions 48A and 48B of the heat radiating member 1450 shown in FIG. 41B with or without modification.

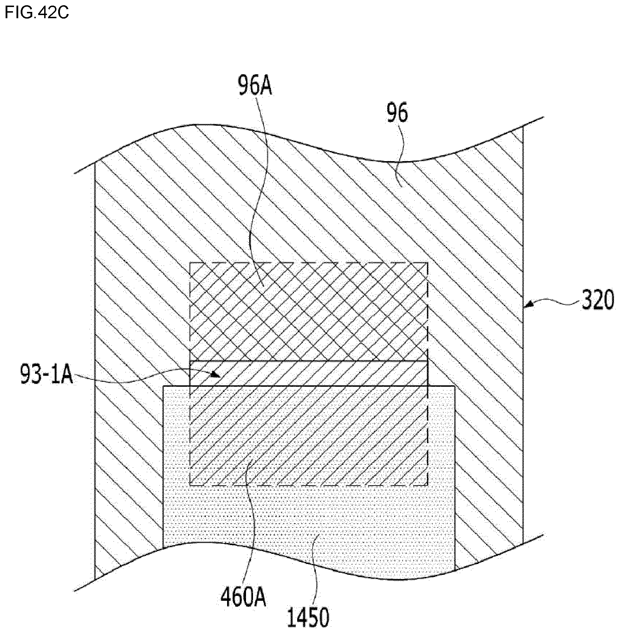

FIG. 42C illustrates disposition of the heat radiating member 1450 and the heat radiating member 96 of the support board 310 according to another embodiment.

Referring to FIG. 42C, a portion 460A of the heat radiating member 1450 may be coupled or attached to or in contact with a portion 93-1A of the conductive layer 93-1 of the support board 310. For example, the portion 93-1A of the conductive layer 93-1 may be exposed or open from the insulating layer 94-1. The portion of the heat radiating member 96 of the support board 310 may be coupled or attached to or in contact with the portion 93-1A of the conductive layer 93-1 of the support board 310. For example, the portion 460A of the heat radiating member 1450 may be disposed in a first area of the portion 93-1A of the conductive layer 93-1 and may be in contact with or coupled to the first area. Furthermore, a portion of the heat radiating member 96 of the support board 310 may be coupled or attached to or in contact with the portion 93-1A of the conductive layer 93-1 of the support board 310. For example, the portion 460A of the heat radiating member 1450 may be disposed in the first area of the portion 93-1a of the conductive layer 93-1 and may be in contact with or coupled to the first area. Furthermore, the portion 96A of the heat radiating member 96 of the support board 310 may be disposed in a second area of the portion 93-1A of the conductive layer 93-1 and may be in contact with or coupled to the second area. The portion 93-1A of the conductive layer 93-1 may be the ground layer of the support board 310. The description of the portion of the conductive layer 93-1, which is in contact with the portion 460 of the heat radiating member 1450 shown in FIG. 41A, may be applied to the portion 93-1A of the conductive layer 93-1 with or without modification.

For example, the portion 460A of the heat radiating member 1450 and the portion 470 of the heat radiating member 96 of the support board 310 may be spaced apart from each other on the portion 93-1A of the conductive layer 93-1. For example, at least a portion of the conductive layer 93-1, which is exposed or open from the insulating layer 94-1, may be positioned between the portion 460A of the heat radiating member 1450 and the portion 470 of the heat radiating member 96 of the support board 310. In another embodiment, the portion 460A of the heat radiating member 1450 and the portion 470 of the heat radiating member 96 of the support board 310 may be in contact with each other.

Referring to FIGs. 41A and 42B, the heat radiating member 96 of the support board 310 may be coupled or attached to or in contact with another portion of the conductive layer 93-1 of the support board 310. For example, the portion 470 of the heat radiating member 96 of the support board 310 may be coupled or attached to or in contact with another portion of the conductive layer 93-1 of the support board 310. Because the portion 470 of the heat radiating member 96 of the support board 310 is in contact with the conductive layer 93-1, it is possible to transmit or radiate heat through the conductive layer 93-1, with the result that the embodiment is able to improve heat radiation efficiency and heat radiation performance.

For example, the support board 310 may include another portion of the conductive layer 93-1 which is exposed from the insulating layer 94-1, and the portion 470 of the heat radiating member 96 of the support board 310 may be coupled or attached or in contact with another portion of the conductive layer 93-1.

For example, the portion 470 of the heat radiating member 96 of the support member 310 may be coupled or attached to or in contact with another portion of the conductive layer 93-1. For example, the portion 460 of the heat radiating member 96 may be coupled or attached to or in contact with portions of the conductive layers of the connecting portions 320A and 320B.

For example, another portion of the conductive layer 93-1, which is in contact with the portion 470 of the heat radiating member 96 of the support board 310 may be the ground layer. The description of the shape of the portion 460 of the heat radiating member 1450 may be applied to the shape of the portion 470 of the heat radiating member 96 of the support board 310 with or without modification.

The portion 460 of the heat radiating member 1450 and the portion 470 of the heat radiating member 96 of the support member 310 may be spaced apart from each other.

The camera device 10 may further include a protective layer or an insulating layer disposed on the heat radiating member 1450 in order to protect the heat radiating member 1450 from external shock or to prevent corrosion or oxidization of the heat radiating member 1450. For example, the protective layer may cover at least a portion of the heat radiating member 1450.

For example, the protective layer may be made of polyethylene terephthalate (PET). In another embodiment, the protective layer may be an EMI-shielding member, for example, a piece of EMI-shielding tape.

Referring to FIGs. 40 and 41A, in order to the connect support board 310 including the heat radiating member 96 to the heat radiating member 280, the body 45A of the heat radiating member 1450 may be attached to the lower surface of the heat radiating member 280, and the connecting portions 45B and 45C of the heat radiating member 1450 may be attached to the connecting portions 320A and 320B of the support board 310.

With increase in the sizes of the image sensor and the lens, the stroke (or the moving distance) of the OIS moving unit for compensating for the angle of hand tremor correction (see FIG. 1) may increase, current consumption of the second coil for OIS operation may increase, and the communication speed of the controller may increase. The second coil 230, the image sensor 810, and the controller 830 may be the heat generating sources which radiate heat. The larger the amount of heat generation from the heat generating sources, the higher the temperature of the camera device. In addition, due to the inefficient structure in heat radiation of the sensor-shift-type camera device, the temperature of the camera device may increase.

The increase in temperature of the camera device may cause degaussing of AF and OIS operation magnets and/or the sensing magnet, thereby causing error of the AF and OIS operations. Furthermore, the increase in temperature of the camera device may cause variation in output signal of the AF position sensor and the OIS position sensor. Consequently, accuracy and reliability of AF operation and OIS operation may be deteriorated.

In addition, the increase in temperature of the controller may cause increase in the temperature of the image sensor, whereby image loss of the image sensor and quantitative and qualitative degradation of image quality may occur. The embodiment is able to improve the efficiency with which heat generated by the image sensor is radiated through the heat radiating members 1450 and 96.

In the embodiment, the path along which the heat generated by the image sensor 810 flows will be described as follows. The heat may be transmitted to the heat radiating member 280 from the image sensor 810, and is then transmitted to the connecting portion 320 of the support board 310 from the heat radiating member 280 through the heat radiating member 1450. The heat may be transmitted to the second board unit 800, which is coupled to the terminal portions 7A and 7D of the support board 310, from the support board 310 through the heat radiating member 96 of the support member 310.

Particularly, because the thermal conductivity of the heat radiating members 1450 and 96 is about 4.9 times the thermal conductivity of copper when the heat radiating members 1450 and 96 are graphite sheets, the heat radiation efficiency may be further improved, thereby preventing the temperature of the camera device from increasing higher than a predetermined reference temperature.

Furthermore, because the embodiment is constructed so as to include the heat radiating member 1450 attached thereto, it is possible to improve heat radiation efficiency and heat radiation performance without increase in the size of the camera device, thereby preventing increase in the temperature of the camera device and preventing performance deterioration of the camera device attributable to increase in temperature.

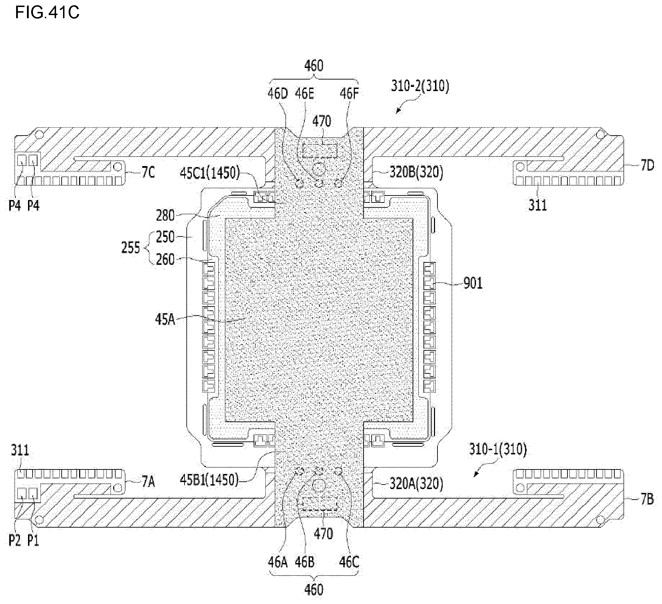

FIG. 41C illustrates a modification of the heat radiating member shown in FIG. 41A.

The heat radiating member 1450 shown in FIG. 41C may include the body 45A and connecting portions 45B1 and 45C connecting the body 45A to the support unit (for example, 310). In FIG. 41C, the heat radiation member 1450 may be coupled or attached to or in contact with the connecting portions 320A and 320B of the support unit (for example, 310) and at least a portion of the body 45A.

For example, a first connecting portion 45B1 of the heat radiating member 1450 may be coupled or attached to or in contact with the first connecting portion 320A of the support unit (for example, 310) and at least a portion of the body 45A connected to the first connecting portion 320A. For example, a second connecting portion 45C1 of the heat radiating member 1450 may be coupled or attached to or in contact with the second connecting portion 320B and at least another portion of the body 45 connected to the second connecting portion 320B. The modification shown in FIG. 41C may be applied to the embodiment shown in FIG. 41B with or without modification.

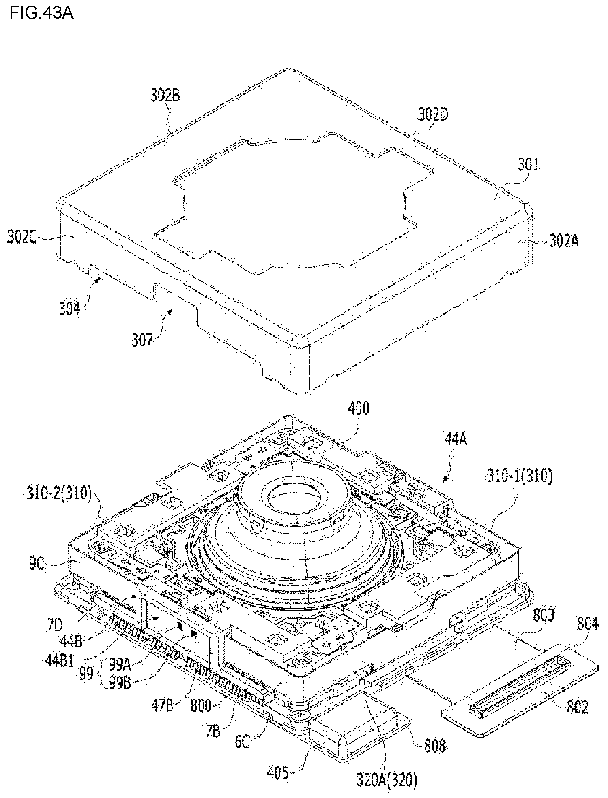

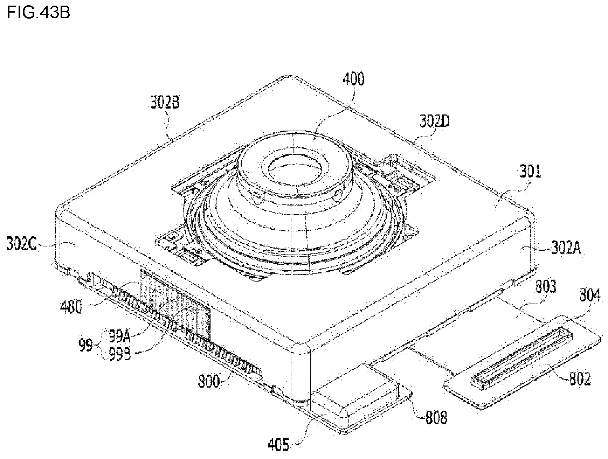

FIG. 43A is a perspective view of the camera device 10 from which the cover member 300 is separated. FIG. 43B illustrates the heat radiating member 480 connecting the cover member 300 to the support board 310 shown in FIG. 43A.

Referring to FIGs. 43A and 43B, the camera device 10 may further include the heat radiating member 480 which is connected or coupled to or in contact with the cover member 300 and the support board 310. For example, the heat radiating member 480 may be connected or coupled to or in contact with the cover member 300 and the heat radiating member 96 of the support board 310. The description of the material of the heat radiating member 1450 may be applied to the heat radiating member 480 with or without modification.

For example, the side plate 302 of the cover member 300 may have the opening 307 through which a portion of the support board 310 is open or exposed. For example, the cover member 300 may include a plurality of side plates 302A to 302D. The side plate 302C may have the opening 307 through which a portion of the support board 310 is open or exposed. For example, the side plate 302C may be a side plate corresponding to one side of the second board unit 800 at which the terminals 800B of the second board unit 800 are formed. For example, the side plate 302C may be a side plate which corresponds to or faces the terminals 7A to 7D of the support board 310.

A portion of the support board 310, which is exposed through the opening 307, may be a portion of the heat radiating member 310. Referring to FIG. 16, because the heat radiating member 96 is disposed outside the support board 310, a portion of the heat radiating member 96 of the support board 310 may be exposed through the opening 306 in the cover member 300.

For example, the portion of the support board 310, which is exposed through the opening 307, may be portions of the bodies 86 and 87. For example, the portion of the support board 310, which is exposed through the opening 307, may be the portions 6C and 9C of the bodies 86 and 87 connected to the terminal portions 7A to 7D.

Referring to FIG. 43A, the projection 44B of the housing 140 may have an opening 44B1 (or a groove) through which a portion of the support board 310 is open or exposed.

In another embodiment, the projection 44B may be omitted, and a portion of the support board 310 may be exposed through the opening 307 in the cover member 300.

Referring to FIG. 43B, the heat radiating member 480 may be connected or coupled to or in contact with the side plate 302C of the cover member 300 and the support board 310. A portion of the heat radiation member 480 may be disposed on or coupled to or in contact with the side plate 302C of the cover member 300, and another portion of the heat radiating member 480 may be disposed on or coupled to or in contact with the portion of the support board 310 which is exposed through the opening 307.

For example, a portion of the heat radiating member 96 of the support board 310 may be open or exposed through the opening 307, and another portion of the heat radiating member 480 may be connected or coupled to or in contact with the heat radiating member 96 of the support board 310 which is exposed through the opening 307.

In the embodiment shown in FIGs. 43A and 43B, the path along which the heat generated by the image sensor 810 flows will be described as follows. Heat may be transmitted to the heat radiating member 280 from the image sensor 810, and may be transmitted to the heat radiating member 96 of the support board 310 from the heat radiating member 280 through the heat radiating member 1450. The heat may be transmitted to the cover member 300 from the heat radiating member 96 of the support board 310 through the heat radiating member 480, and may be radiated from the cover member 300. Consequently, since the heat is transmitted to the cover member 300 from the support board 310 through the heat radiating member 480, it is possible to improve heat radiation efficiency.

A portion of the heat radiating member 480 may be coupled or attached to or in contact with another portion 99 of the conductive layer 93-1 of the support board 310. For example, the support board 310 may include another portion 99 of the conductive layer 93-1 which is open or exposed from at least one of the insulating layer 94-1 and the heat radiating member 96, and the heat radiating member 480 may be coupled or attached to or in contact with the exposed portion 99 of the conductive layer 93-1.

The cover member 300 may open or expose another portion 99 of the conductive layer 93-1 of the support layer 310, and at least a portion of the heat radiating member 480 may be coupled or attached to or in contact with another portion 99 of the conductive layer 93-1 of the support board 310. For example, the portion 99 may include one or more portions 99A and 99B, and each of the portions 99A and 99B may have a polygonal shape (for example, a quadrilateral shape), a circular shape, or an elliptical shape. For example, another portion 99 of the conductive layer 93-1 may be the ground layer of the support board 310.

Since the heat radiating member 480 is in contact with another portion 99 of the conductive layer 93-1, the embodiment is able to improve heat radiation efficiency and heat radiation performance. Particularly, because the surface area of the ground layer is larger than the width or surface area of the wiring layer of the support board 310 when another portion 99 of the conductive layer 93-1 is the ground layer, it is possible to further improve heat radiation efficiency and heat radiation performance. In another embodiment, another portion 99 of the conductive layer 93-1 of the support board 310 may be omitted.

In another embodiment, the portion of the support board 310, which is exposed through the cover member 300, may be a portion of one of the portions 6A to 6C and 9A to 9C of the bodies 86 and 87.

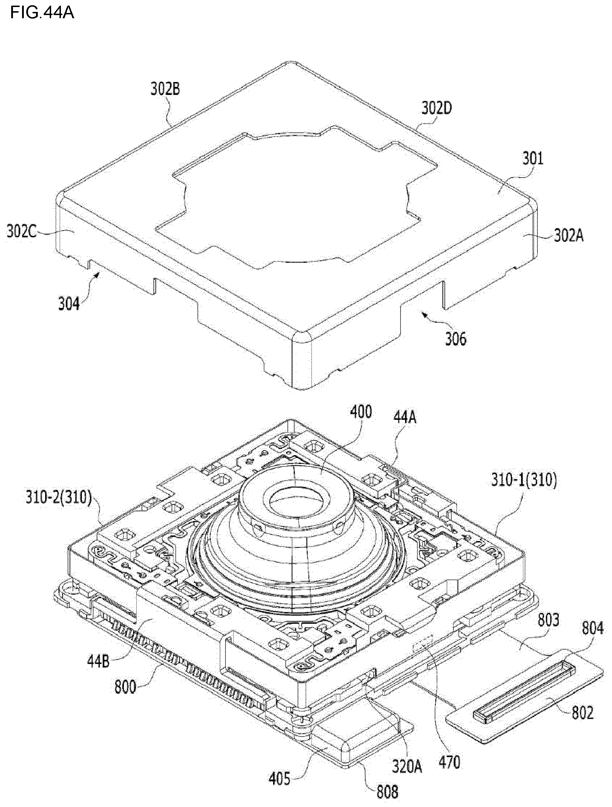

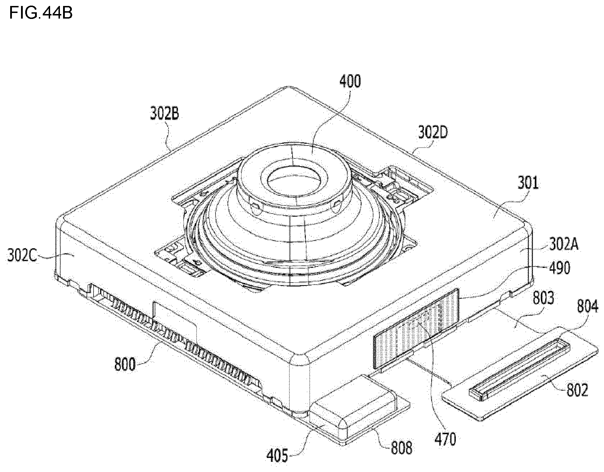

FIG. 44A illustrates a modification of the embodiment shown in FIG. 43A. FIG. 44B illustrates a modification of the embodiment shown in FIG. 44B.

Referring to FIGs. 44A and 44B, the camera device 10 may include a heat radiating member 490 which is connected or coupled to or in contact with the cover member 300 and one region of the heat radiating member 96 of the support board 310. The description of the heat radiating member 1450 may be applied to the heat radiating member 490 with or without modification.

The side plate 302A of the cover member 300 may have an opening 306 through which a portion 470 of the heat radiating member 96 of the support board 310 is open or exposed. For example, the side plate 302A may be a side plate corresponding to one side of the second board unit 800 at which the terminals 800B of the second board unit 800 are not formed. For example, the region of the support board 310 that is exposed through the opening 306 may include a portion 470 of the heat radiating member 96 of the support board 310. Here, the description of FIG. 41B may be applied to the portion 470 of the heat radiating member 96 with or without modification. In another embodiment, the portion 460 of the heat radiating member 1450 shown in FIG. 41A may be applied, in place of the portion 470 of the heat radiating member 96 shown in FIG. 44A.

Referring to FIG. 44B, the heat radiating member 490 may be connected or coupled to or in contact with the side plate 302A of the cover member 300 and one region of the support board 310. For example, a portion of the heat radiating member 490 may be disposed on, coupled to or in contact with the side plate 302A of the cover member 300, and another portion of the heat radiating member 480 may be disposed on, coupled to or in contact with the region of the support board 310 that is open or exposed through the opening 306.

Because the heat radiating member 490 may be coupled to or in contact with the portion 470 of the heat radiating member 96, the embodiment shown in FIG. 44B is able to improve efficiency of heat transmission to the cover member 300 from the support board 310 and thus to improve heat radiation performance, compared to the embodiment shown in FIG. 43B.

According to the embodiment, by virtue of the heat radiating member 1450, heat may be transmitted to the support board 310 from the first board unit 255 (for example, the heat radiating member 280), and thus it is possible to improve heat radiation efficiency and heat radiation performance. For example, by virtue of the heat radiating member 1450, heat may be directly conducted to the support board 310 from the heat radiation member 280.

Furthermore, because the heat radiating member 1450 includes the portion 460 which is contact with a portion the conductive layer 93-1 of the support board 310, the embodiment is able to further improve heat radiation efficiency and heat radiation performance.

Furthermore, because the support board 310 includes the heat radiating member 96, it is possible to improve heat radiation efficiency and heat radiation performance of the support board 310, and thus the embodiment is able to improve performance of radiating heat generated by the heat radiating source, for example, the image sensor 810, the second coil 230, and the controller 830. Furthermore, because the heat radiating member 96 includes the portion 470 which is in contact with another portion of the conductive layer 93-1, the embodiment is able to further improve heat radiation efficiency and heat radiation performance.

Furthermore, because the heat radiating member 1450 is in contact with the heat radiating member 96 of the support board 310, the embodiment is able to improve heat radiation efficiency and heat radiation performance.

Furthermore, because heat is transmitted to the cover member 300 from the support board 310 through the heat radiating member 480, the embodiment is able to improve heat radiation efficiency and heat radiation performance.

Furthermore, because the portion 460 or 470 of the support board 310 is connected to the cover member 300 via the heat radiating member 490, the embodiment is able to further improve heat radiation efficiency and heat radiation performance.

The results obtained by measuring temperature of the camera device during operation of the camera device in Case 1 in which a graphite sheet as the heat radiating member is attached to the camera device and Case 2 in which a graphite sheet is not attached to the camera device are as follows.

The temperature of the camera device in Case 2 is 78.31 °C, and the temperature of the camera device in Case 1 is 53.33 °C. By virtue of attachment of the graphite sheet to the camera device, it is possible to obtain an effect of lowering temperature by 24.98 °C. In Case 1 of the above experiment, the graphite sheet is attached to the second board unit (or a separate test board including the second board unit mounted thereon) and the inner surface of a cellular phone (for example, the inner surface of a copper cover). Here, the second board unit may be the second board unit 800 according to the embodiment. The temperature of the camera device is an average value of temperatures of five samples.

The case in which a graphite sheet is attached to the second board unit 255 of the camera device 10 (or an additional test board including the second board unit 255 mounted thereon) and the inner surface of a cellular phone (for example, the inner surface of a copper cover) is assumed as Case 3. Case 3 is able to further improve heat radiation efficiency than Case 1 and Case 2 by virtue of the heat radiating members 1450 and 96 disposed in the camera device 10 and/or the heat radiating member 490 attached to the cover member 300. Therefore, the temperature of the camera device in Case 3 during operation of the camera device is lower than the temperature of the camera device in Case 1, and it is possible to maximize an effect of lowering temperature.

Furthermore, the camera device according to the embodiment may be included in an optical instrument, which is designed to form the image of an object in a space using reflection, refraction, absorption, interference, diffraction or the like, which are characteristics of light, to extend eyesight, to record an image obtained through a lens or to reproduce the image, to perform optical measurement, or to propagate or transmit an image. For example, although the optical instrument according to the embodiment may be a mobile phone, cellular phone, smart phone, portable smart instrument, digital camera, laptop computer, digital broadcasting terminal, PDA (Personal Digital Assistant), PMP (Portable Multimedia Player), navigation device, or the like, the disclosure is not limited thereto. Furthermore, any device capable of taking images or photographs is possible.

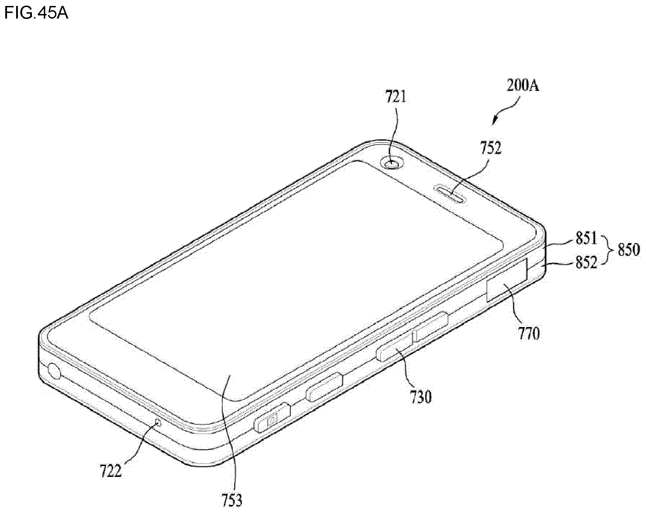

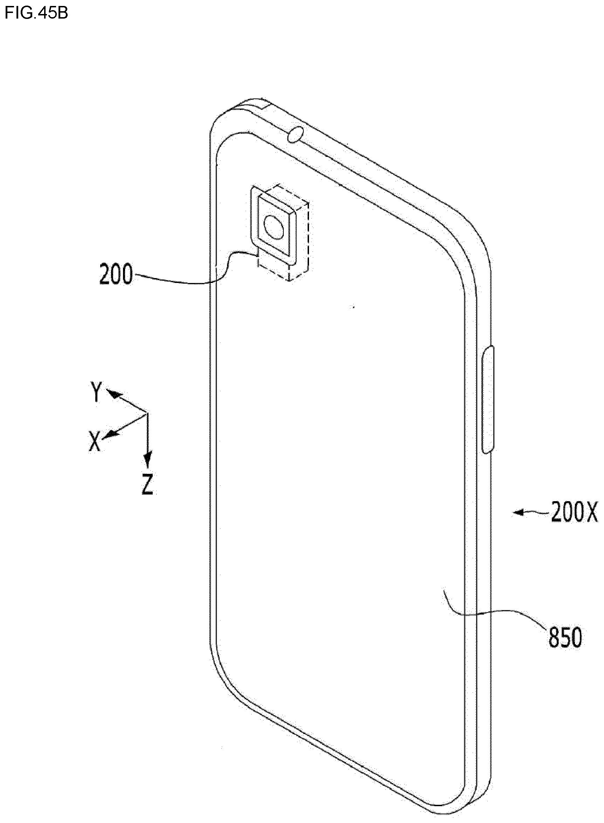

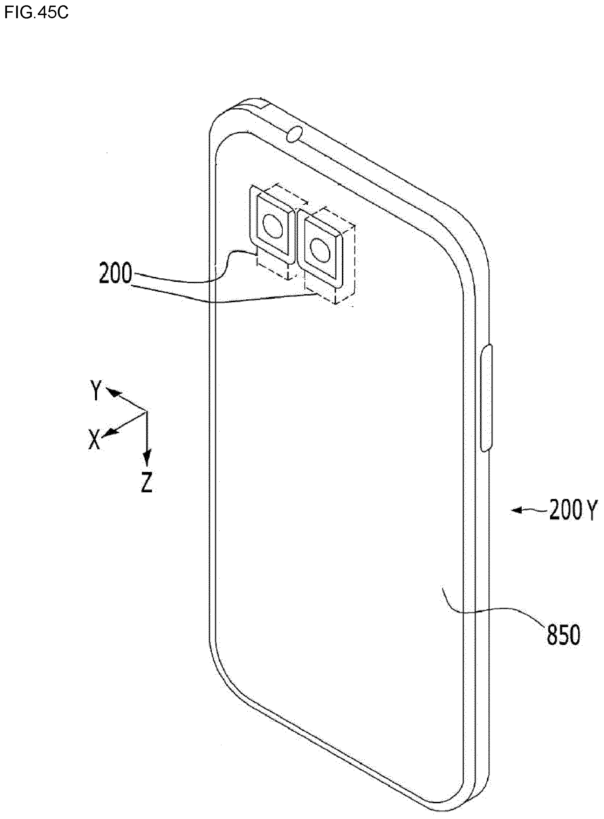

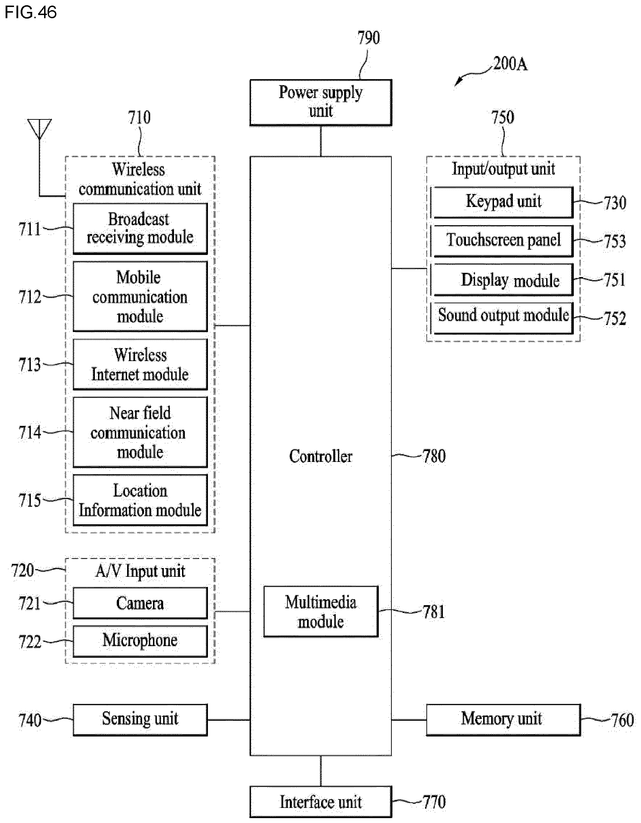

FIG. 45A is a perspective view of an optical instrument 200A according to an embodiment. FIG. 45B is a perspective view of an optical instrument 200X according to another embodiment. FIG. 45C is a perspective view of an optical instrument 200Y according to a further embodiment. FIG. 46 is a view illustrating the configuration of the optical instrument 200A, 200X or 200Y illustrated in FIG. 45A, 45B or 45C.

For example, the embodiment shown FIG. 45A may be a front camera of an optical instrument 200A in which the lens module 400 of the camera module 200 is disposed so as to face in a forward direction of the body 850, and the embodiment shown FIG. 44B may be a rear camera of an optical instrument 200X in which the lens module 400 of the camera module 200 faces in a backward direction of the body 850. In another embodiment, the optical instrument 200A according to the embodiment may correspond to the front camera and the rear camera of the optical instrument 200A.

Furthermore, the optical instrument 200Y shown in FIG. 45C may include two rear cameras, and at least one of the two cameras may be the camera according to the embodiment. An optical instrument according to a further embodiment may include three or more rear cameras. An optical instrument according to still a further embodiment may include a front camera and a rear camera, and at least one of the front camera and the rear camera may include the camera device according to the embodiment.

Referring to FIGs. 45A to 46, the optical device 200A may include a body 850, a wireless communication unit 710, an audio/video (A/V) input unit 720, a sensing unit 740, an input/output unit 750, a memory unit 760, an interface unit 770, a controller 780, and a power supply unit 790.

The body 850 illustrated in FIGs. 45A to 44C has a bar shape, without being limited thereto, and may be any of various types, such as, for example, a slide type, a folder type, a swing type, or a swivel type, in which two or more sub-bodies are coupled so as to be movable relative to each other.

The body 850 may include a case (a casing, housing, cover or the like) defining the external appearance of the terminal. For example, the body 850 may be divided into a front case 851 and a rear case 852. Various electronic components of the terminal may be accommodated in the space defined between the front case 851 and the rear case 852.

The wireless communication unit 710 may include one or more modules, which enable wireless communication between the optical device 200A and a wireless communication system or between the optical device 200A and a network in which the optical device 200A is located. For example, the wireless communication unit 710 may include a broadcast-receiving module 711, a mobile communication module 712, a wireless Internet module 713, a nearfield communication module 714, and a location information module 715.

The A/V input unit 720 serves to input audio signals or video signals, and may include, for example, a camera 721 and a microphone 722.

The camera 721 may include the camera device according to the embodiment.

The sensing unit 740 may sense the current state of the optical device 200A, such as, for example, opening or closing of the optical device 200A, the location of the optical device 200A, the presence of a user's touch, the orientation of the optical device 200A, or the acceleration/deceleration of the optical device 200A, and may generate a sensing signal to control the operation of the optical device 200A. When the optical device 200A is, for example, a slide-type cellular phone, the sensing unit 740 may sense whether the slide-type cellular phone is opened or closed. Furthermore, the sensing unit 740 may sense the supply of power from the power supply unit 790, coupling of the interface unit 770 to an external device, and the like.

The input/output unit 750 serves to generate, for example, visual, audible, or tactile input or output. The input/output unit 750 may generate input data to control the operation of the optical device 200A, and may display information processed in the optical device 200A.

The input/output unit 750 may include a keypad unit 730, a display module 751, a sound output module 752, and a touchscreen panel 753. The keypad unit 730 may generate input data in response to input to a keypad.

The display module 751 may include a plurality of pixels, the color of which varies depending on the electrical signals applied thereto. For example, the display module 751 may include at least one among a liquid crystal display, a thin-film transistor liquid crystal display, an organic light-emitting diode display, a flexible display and a 3D display.

The sound output module 752 may output audio data received from the wireless communication unit 710 in, for example, a call-signal reception mode, a call mode, a recording mode, a voice recognition mode, or a broadcast reception mode, or may output audio data stored in the memory unit 760.

The touchscreen panel 753 may convert variation in capacitance, caused by a user's touch on a specific region of a touchscreen, into electrical input signals.

The memory unit 760 may temporarily store programs for the processing and control of the controller 780, and input/output data (for example, telephone numbers, messages, audio data, stationary images, moving images and the like). For example, the memory unit 760 may store images captured by the camera 721, for example, pictures or moving images. For example, the memory unit 760 may store therein software, algorithm or mathematical formulas for the above-mentioned hand tremor correction.

The interface unit 770 serves as a path through which the lens moving apparatus is connected to an external device connected to the optical device 200A. The interface unit 770 may receive power or data from the external component, and may transmit the same to respective constituent elements inside the optical device 200A, or may transmit data inside the optical device 200A to the external component. For example, the interface unit 770 may include a wired/wireless headset port, an external charger port, a wired/wireless data port, a memory card port, a port for connection to a device equipped with an identification module, an audio input/output (I/O) port, a video input/output (I/O) port, an earphone port and the like.

The controller 780 may control the general operation of the optical device 200A. For example, the controller 780 may perform control and processing related to, for example, voice calls, data communication, and video calls.

The controller 780 may include a multimedia module 781 for multimedia playback. The multimedia module 781 may be embodied in the controller 780, or may be embodied separately from the controller 780.

The controller 780 may perform a pattern recognition process capable of recognizing writing input or drawing input carried out on a touchscreen as a character and an image, respectively.

The power supply unit 790 may supply power required to operate the respective constituent elements upon receiving external power or internal power under the control of the controller 780.

The features, configurations, effects and the like described above in the embodiments are included in at least one embodiment, but the invention is not limited only to the embodiments. In addition, the features, configurations, effects and the like exemplified in the respective embodiments may be combined with other embodiments or modified by those skilled in the art. Accordingly, content related to these combinations and modifications should be construed as falling within the scope of the disclosure.

### [Industrial Applicability]

The embodiments are applicable to camera modules and optical instruments which are capable of removing noise included in an OIS position sensor attributable to a magnetic field generated by an OIS coil and thus of assuring reliability of OIS control.

## Claims

1. A camera device comprising:
a moving unit comprising a first board and an image sensor disposed on the first board;
a stationary unit comprising a second board which is spaced apart from the first board;
a support board configured to support the moving unit such that the moving unit is movable in a direction perpendicular to an optical-axis direction relative to the stationary unit and to conductively connect the first board to the second board;
a position sensor disposed on the first board so as to detect displacement of the moving unit; and
a capacitor conductively connected to first and second output terminals of the position sensor.

2. The camera device according to claim 1, wherein the capacitor is disposed on the first board.

3. The camera device according to claim 1, wherein the capacitor is disposed on the second board.

4. The camera device according to claim 1, wherein the capacitor is disposed on the support board.

5. The camera device according to claim 1, wherein the capacitor is connected to the first and second output terminals of the position sensor in parallel.

6. The camera device according to claim 1, wherein the capacitor comprises a first capacitor connected to the first output terminal of the position sensor, and a second capacitor connected to the second output terminal of the position sensor.

7. The camera device according to claim 2, wherein, the first board comprises a first wire connected to the first output terminal of the position sensor and a second wire connected to the second output terminal of the position sensor, and
the capacitor is connected to the first and second wires of the first board in parallel.

8. The camera device according to claim 2, wherein, the first board comprises a first wire connected to the first output terminal of the position sensor and a second wire connected to the second output terminal of the position sensor, and
the capacitor comprises a first capacitor connected to the first wire of the first board and a second capacitor connected to the second wire of the first board.

9. The camera device according to claim 3, wherein, the second board comprises a first wire connected to the first output terminal of the position sensor and a second wire connected to the second output terminal of the position sensor, and
the capacitor is connected to the first and second wires of the second board in parallel.

10. The camera device according to claim 3, wherein, the second board comprises a first wire connected to the first output terminal of the position sensor and a second wire connected to the second output terminal of the position sensor, and
the capacitor includes a first capacitor connected to the first wire of the second board and a second capacitor connected to the second wire of the second board.
